(19) Europäisches Patentamt
European Patent Office
Office européen des brevets

(11) EP 3 797 991 B1

(12) # EUROPEAN PATENT SPECIFICATION

(45) Date of publication and mention of the grant of the patent:
**29.10.2025 Bulletin 2025/44**

(21) Application number: **19826280.0**

(22) Date of filing: **25.06.2019**

(51) International Patent Classification (IPC):
***B32B 27/38*** (2006.01) ***B32B 5/28*** (2006.01)
***C08G 59/32*** (2006.01) ***C08J 5/24*** (2006.01)
***C08L 63/00*** (2006.01) ***B29C 70/00*** (2006.01)
***C08J 5/04*** (2006.01) ***B32B 5/02*** (2006.01)

(52) Cooperative Patent Classification (CPC):
(C-Sets available)
**C08G 59/504; B29C 70/003; B29C 70/0035; B29C 70/025; B29C 70/30; B32B 5/022; B32B 5/26; C08G 59/245; C08G 59/28; C08G 59/3227; C08G 59/38; C08J 5/042; C08J 5/243; C08J 5/249; C08L 63/00;** (Cont.)

(86) International application number:
**PCT/JP2019/025238**

(87) International publication number:
**WO 2020/004421 (02.01.2020 Gazette 2020/01)**

(54) **PREPREG AND PRODUCTION METHOD THEREFOR, SLIT TAPE PREPREG, CARBON FIBER-REINFORCED COMPOSITE MATERIAL**

PREPREG UND HERSTELLUNGSVERFAHREN DAFÜR, SLIT-TAPE-PREPREG, KOHLENSTOFFFASERVERSTÄRKTER VERBUNDSTOFF

PRÉIMPRÉGNÉ ET SON PROCÉDÉ DE PRODUCTION, PRÉIMPRÉGNÉ DE RUBAN FENDU, MATÉRIAU COMPOSITE RENFORCÉ PAR DES FIBRES DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2018 JP 2018120567**
**26.06.2018 JP 2018120568**
**26.06.2018 JP 2018120569**

(43) Date of publication of application:
**31.03.2021 Bulletin 2021/13**

(73) Proprietor: **Toray Industries, Inc.**
**Tokyo 103-8666 (JP)**

(72) Inventors:
- **KOBAYASHI, Hiroshi**
**Iyo-gun, Ehime 791-3193 (JP)**
- **MAEYAMA, Taiki**
**Iyo-gun, Ehime 791-3193 (JP)**
- **KIDO, Daisuke**
**Iyo-gun, Ehime 791-3193 (JP)**
- **IKUSHIMA, Takashi**
**Otsu-shi, Shiga 520-8558 (JP)**
- **HOSOKAWA, Naofumi**
**Nagoya-shi, Aichi 455-8502 (JP)**
- **OHNISHI, Hirokazu**
**Tokyo 103-8666 (JP)**

(74) Representative: **Prüfer & Partner mbB**
**Patentanwälte · Rechtsanwälte**
**Sohnckestraße 12**
**81479 München (DE)**

(56) References cited:
**EP-A1- 2 011 826**
**EP-A1- 2 902 435**
**EP-A1- 3 020 763**
**WO-A1-2016/136052**
**WO-A1-2018/135594**
**JP-A- 2009 215 481**
**JP-A- 2009 292 976**
**JP-A- 2013 538 932**
**JP-A- 2014 043 542**
**JP-A- 2015 522 092**
**JP-A- 2016 160 367**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B29K 2105/0872; B32B 2260/023; B32B 2260/046; B32B 2262/106; B32B 2264/0207; B32B 2264/0264; B32B 2264/105; B32B 2264/108; B32B 2307/51; B32B 2307/54; B32B 2307/718; B32B 2307/748; B32B 2419/00; B32B 2605/08; B32B 2605/12; B32B 2605/18; C08J 2363/00; C08J 2477/00; C08J 2481/06

C-Sets
**C08L 63/00, C08L 81/06, C08L 77/00, C08K 3/04;**
**C08L 63/00, C08L 81/06, C08L 77/00, C08K 7/06**

## Description

TECHNICAL FIELD

The present invention relates to a prepreg showing a high processability and laminating performance in an automated lay-up device and serving to produce a cured product having good physical properties and also relates to a production method therefor.

BACKGROUND ART

Fiber reinforced composite materials containing a reinforcing fiber such as glass fiber, carbon fiber, and aramid fiber combined with a matrix resin are lighter in weight compared with competing metallic materials or the like, and at the same time excellent in mechanical property such as strength and elastic modulus, and accordingly, they are currently used in many fields such as aircraft parts, spacecraft parts, automobile parts, ship parts, civil engineering and construction materials, and sporting goods. In particular, carbon fibers, which have high specific strength and specific elastic modulus, are widely used as reinforcing fibers in application fields where high mechanical property is required. In addition, thermosetting resins such as unsaturated polyester resin, vinyl ester resin, epoxy resin, phenol resin, cyanate ester resin, and bismaleimide resin are often used as matrix resins, of which epoxy resins are in wide use because of their high adhesiveness to carbon fibers. For applications that require high performance, fiber reinforced composite materials containing continuous fibers are used, and in particular, they are generally manufactured by methods that use prepreg, i.e. sheet-like intermediate material consisting mainly of reinforcing fibers impregnated with an uncured thermosetting resin composition. In such methods, prepreg plies are laid up and cured by heating to provide a molded product of a fiber reinforced composite material. Fiber reinforced composite materials manufactured in this way have been used for various general industrial applications such as tennis rackets, golf shafts, and fishing rods and, because of having high specific strength and specific stiffness, they are now attracting attention as structural materials for aircraft, which are particularly required to be light in weight.

Available methods for laying up prepreg plies include the hand lay-up method, ATL (automated tape lay-up) method and AFP (automated fiber placement) method, which uses automated lay-up devices, but automated lay-up methods such as ATL method and AFP method, which use automated lay-up devices and realize higher productivity than the hand lay-up method, are adopted (see, for example, Patent document 1) when producing large composite materials such as for aircraft. In particular, the AFP method, which is designed to lay up slit tape prepregs prepared by cutting a prepreg in the fiber direction into tapes, is suitable for producing parts containing a relatively large number of curved faces such as aircraft fuselage, and realizes high-yield material production, and accordingly, this method has been frequently adopted in recent years.

In the AFP method, about ten to several tens of narrow slit tapes with widths of 3 to 13 mm are passed between guide rolls, collected on a machine head, and laid up on a laminate in order to achieve a high lamination efficiency. In this step, as the guide rolls and the slit tape prepregs abrade each other, the epoxy resin composition contained in the slit tape prepregs comes out and builds up to the guide rolls, leading to the problem of a subsequent decrease in the processability of the slit tape prepregs. In the above process, the unwinding of the slit tape prepregs and their collection on the machine head are performed under low temperature conditions, for example at 20°C or lower, where the storage elastic modulus (hereinafter referred to as G') of the epoxy resin composition becomes higher, in order to prevent the build-up of the epoxy resin composition to the guide rolls. In order to achieve sufficient adhesiveness between the tool and slit tape prepregs and between one slit tape prepreg and another during the laying-up step, the slit tape prepregs are often heated by an infrared heater or the like to raise the temperature to improve adhesion.

Patent document 2, which deals with slit tape prepregs intended for reinforcing concrete structures and steel structures, etc., proposes a production method in which one directional prepregs containing untwisted reinforcing fiber bundles are cured to a degree where the resin conversion of the matrix resin composition reaches 20% to 70% to provide semi-cured prepregs, followed by cutting them in the fiber direction of the reinforcing fibers, and describes that the resulting slit tape prepregs contain highly straight reinforcing fibers and are resistant to twisting, low in tape face stickiness (hereinafter referred to as tackiness), and high in handleability.

Patent document 3 discloses a slit tape prepreg in which an epoxy resin composition having a viscosity of $1.0 \times 10^5$ to $1.0 \times 10^9$ Pa·s at 25°C and a glass transition temperature of 7°C to 15°C is located near both of the thickness-directional end surfaces of the prepreg while an epoxy resin composition having a viscosity of $5.0 \times 10^2$ to $1.0 \times 10^5$ Pa·s at 25°C is located in the thickness-directional central portion, and it is described that the aforementioned build-up of the epoxy resin composition to guide rolls is reduced and that high drapability is achieved.

Patent document 4 discloses a slit tape prepreg having a tackiness value of 5 to 40 kPa as measured at 23°C under a plunger pressing pressure of 90 kPa, a tackiness value of 35 to 100 kPa as measured at 45°C under a plunger pressing pressure of 150 kPa, and a drape value of 10° to 40° at 23°C, and describes that it is so low in adhesiveness at

room temperature that it can unwind easily but can be hardly caught on guide rolls or compaction rolls and that it has moderate hardness at room temperature to realize high shape retainability in the lamination head portion. It also describes that the portion heated at about 30°C to 60°C by the lamination head has moderate stickiness to serve suitably for an automated lay-up process. It further describes that it is preferable for the epoxy resin composition used in the slit tape prepreg disclosed in Patent document 4 to have a viscosity in the range of $1.0 \times 10^4$ to $1.0 \times 10^5$ Pa·s at 30°C.

Patent document 5 discloses a prepreg comprising of epoxy resin, thermoplastic resin and thermoplastic particle, curing agent and carbon fiber with the usage of the attaching film to honeycomb panels. The cured product obtained from this composition represents a fracture toughness of 1.8 to 2.5 MPa·$m^{1/2}$, which leads excellent fracture behavior in the peeling strength test of the prepreg bonded to the honeycomb core. Further, the prepreg represents excellent tackiness, drapability and porosity.

Patent document 6 provides layered prepregs, wherein one or both sides of a primary prepreg is laminated with surface layer(s). The primary prepreg is comprised of fiber and epoxy resin composition with thermoplastic resin and the surface layer contains epoxy resin composition and conducting particles, so that this layered prepreg is used to improve electromagnetic shielding, electrostatic protection, current return and conductivity. The conductive particles have an average particle diameter of 10-200 μm, and the conductivity of the layered prepreg is 3.5 kΩ·cm or less.

Patent document 7 discloses a carbon fiber-reinforced composite material fabricated with carbon fiber, epoxy resin and thermoplastic resin. The fiber-reinforced composite material is obtained by curing at 180°C for 2 hours and a prepreg produced from the composite material retains the elastic modulus of 15 MPa or less and the flexural modulus of 4.5 GPa or more. These properties leads to the tensile strength of 2900 MPa or more and the compression strength of 1900 MPa or more.

PRIOR ART DOCUMENTS

PATENT DOCUMENTS

Patent document 1: JP 2008-517810
Patent document 2: JP 2016-155915
Patent document 3: JP 2010-229211
Patent document 4: WO 2017/104823
Patent document 5: EP 2011826 A1
Patent document 6: EP 2902435 A1
Patent document 7: EP 3020763 A1

SUMMARY OF INVENTION

PROBLEMS TO BE SOLVED BY THE INVENTION

The production method described in Patent document 2 is intended for a different purpose, and the slit tape prepreg obtained is already in such a highly cured state that it cannot undergo significant twisting. Accordingly, it lacks in drapability and fails to have sufficient steering ability on the curved surfaces of the guide rolls and therefore, it is difficult to apply the tape to an automated lay-up method.

The slit tape prepregs described in Patent documents 3 and 4 are still so high in tackiness that prepreg plies adhere easily to each other or to metal parts at room temperature, indicating that the tackiness is not sufficiently low.

In recent years, carbon fiber reinforced composite materials have to meet more rigorous requirements as they are in wider use, and when applied to structural parts such as for aerospace applications and vehicles, they are required to maintain good physical properties under various conditions (such as high-temperature conditions, high-temperature, high-humidity conditions, and low temperature conditions).

In view of the above situation, an object of the present invention is to provide a prepreg having high drapability and serving to produce a slit tape prepreg that suffers only a sufficiently decreased amount of build-up of the epoxy resin composition contained in the slit tape prepreg to the guide rolls during the implementation of an automated lay-up method and shows good laminating performance over a wide lamination temperature range, thereby ensuring an increased productivity of carbon fiber reinforced composite material and serving to produce a cured product having good physical properties, and also provide a method for the production thereof.

MEANS OF SOLVING THE PROBLEMS

The present inventors conducted intensive research to solve the above problem and arrived at the invention described below. The prepreg according to the present invention is a prepreg including at least the components [A] to [E] listed below and having a structure incorporating a first layer composed mainly of the component [A] and a first epoxy resin composition that contains the components [B] to [D] but is substantially free of the component [E] and a second layer composed mainly of a second epoxy resin composition that contains the components [B] to [E] and disposed adjacent to each surface of the first layer, the second epoxy resin composition being characterized in that its component [D] forms a homogeneous phase with the component [B] and accounts for 1 part by mass or more and less than 5 parts by mass relative to the total quantity of its components [B] to [E], which accounts for 100 parts by mass, and also characterized by having a storage elastic modulus G' at 25°C of $8.0 \times 10^5$ to $6.0 \times 10^6$ Pa as measured at an angular frequency of 3.14 rad/s, giving a value of 0.085 or more as calculated by the equation (1) shown below, and having a component [D] content of 1 part by mass or more and less than 10 parts by mass relative to the total quantity of the first epoxy resin composition and the second epoxy resin composition, which accounts for 100 parts by mass:

[A] carbon fiber,
[B] epoxy resin,
[C] curing agent,
[D] thermoplastic resin, and
[E] particles containing a thermoplastic resin as primary component and having a volume-average particle diameter of 5 to 50 μm.

[Mathematical formula 1]

$$\frac{\log_{10}(G' \text{ (Pa) at } 25°C) - \log_{10}(G' \text{ (Pa) at } 40°C)}{15} \quad \text{equation (1)}$$

The slit tape prepreg according to the present invention is produced by slitting the aforementioned prepreg.

In addition, the carbon fiber reinforced composite material according to the present invention is produced by laying up plies of the prepreg or slit tape prepreg described above, followed by curing them.

The prepreg production method according to the present invention comprises a step for preparing a primary prepreg by impregnating the component [A] given below with a first epoxy resin composition containing at least the components [B] to [D] listed below, and a subsequent step for impregnating each surface thereof with a second epoxy resin composition containing at least the components [B] to [E] listed below, the second epoxy resin composition being characterized in that its component [D] accounts for 1 part by mass or more and less than 5 parts by mass relative to the total quantity of its components [B] to [E], which accounts for 100 parts by mass, and also characterized by having a storage elastic modulus G' at 25°C of $8.0 \times 10^5$ to $6.0 \times 10^6$ Pa as measured at an angular frequency of 3.14 rad/s, giving a value of 0.085 or more as calculated by the equation (1) specified below, and having a component [D] content of 1 part by mass or more and less than 10 parts by mass relative to the total quantity of the first epoxy resin composition and the second epoxy resin composition, which accounts for 100 parts by mass:

[A] carbon fiber,
[B] epoxy resin,
[C] curing agent,
[D] thermoplastic resin, and
[E] particles containing a thermoplastic resin as primary component and having a volume-average particle diameter of 5 to 50 μm.

ADVANTAGEOUS EFFECTS OF THE INVENTION

The present invention can provide a prepreg having high drapability, serving to produce a slit tape prepreg that suffers a decreased amount of build-up of the epoxy resin composition contained in the slit tape prepreg to the guide rolls when processed by the AFP method to ensure an increased productivity of carbon fiber reinforced composite material, and also serving to provide a cured product (carbon fiber reinforced composite material) having good physical properties, and also provide a method for the production thereof.

DESCRIPTION OF PREFERRED EMBODIMENTS

The present invention will be described more in detail below.

The prepreg according to the present invention is a prepreg including at least the components [A] to [E] listed below and having a structure incorporating a first layer composed mainly of the component [A] and a first epoxy resin composition that contains the components [B] to [D] but is substantially free of the component [E] and a second layer composed mainly of a second epoxy resin composition that contains the components [B] to [E] and disposed adjacent to each surface of the first layer, the second epoxy resin composition being characterized in that its component [D] accounts for 1 part by mass or more and less than 5 parts by mass relative to the total quantity of its components [B] to [E], which accounts for 100 parts by mass, and also characterized by having a storage elastic modulus G' at 25°C of $8.0 \times 10^5$ to $6.0 \times 10^6$ Pa as measured at an angular frequency of 3.14 rad/s, giving a value of 0.085 or more as calculated by the equation (1) specified above, and having a component [D] content of 1 part by mass or more and less than 10 parts by mass relative to the total quantity of the first epoxy resin composition and the second epoxy resin composition, which accounts for 100 parts by mass:

[A] carbon fiber,
[B] epoxy resin,
[C] curing agent,
[D] thermoplastic resin, and
[E] particles containing a thermoplastic resin as primary component and having a volume-average particle diameter of 5 to 50 $\mu$m.

Here, the component [B] contained in the first epoxy resin composition and the component [B] contained in the second epoxy resin composition may be either identical or different between the first epoxy resin composition and the second epoxy resin composition, and the same applies between the component [C] contained in the first epoxy resin composition and the component [C] contained in the second epoxy resin composition and also between the component [D] contained in the first epoxy resin composition and the component [D] contained in the second epoxy resin composition. In addition, the proportions of the components [C] and [D] contained in the first epoxy resin composition and the proportions of the components [C] and [D] contained in the second epoxy resin composition may also be either identical or different between the first epoxy resin composition and the second epoxy resin.

In the description given below, the constituents of a prepreg other than the component [A], namely, the first epoxy resin composition that contains the components [B] to [D] but is substantially free of the component [E] and/or the second epoxy resin composition that contains the components [B] to [E], are collectively referred to as matrix resins, or the components other than the component [A] in a carbon fiber reinforced composite material produced by curing a prepreg are collectively referred to as matrix resins.

As a result of adopting a structure as described above, the second epoxy resin composition contained in the second layer in the prepreg according to the present invention has a sufficiently high G' at 25°C of $8.0 \times 10^5$ to $6.0 \times 10^6$ Pa as measured at an angular frequency 3.14 rad/s and accordingly serves to produce a slit tape prepreg in which only a sufficiently decreased amount of build-up of the epoxy resin composition contained in the slit tape prepreg to the guide rolls occurs during the implementation of an automated lay-up method.

Furthermore, the second epoxy resin composition contains the components [B] to [E]. The component [D] contained accounts for 1 part by mass or more and less than 5 parts by mass relative to the total quantity of the components [B] to [E], which accounts for 100 parts by mass, and the equation (1) shown above gives a value of 0.085 or more to ensure a decrease in the aforementioned build-up of the epoxy resin composition to the guide rolls and a high adhesiveness between prepreg plies over a wide lamination temperature range.

In addition, the component [D] contained accounts for 1 part by mass or more and less than 10 parts by mass relative to the total quantity of the first and second epoxy resin compositions, which accounts for 100 parts by mass, thereby ensuring a moderate drapability over a wide lamination temperature range. The prepreg according to the present invention has high adhesiveness and moderate drapability and accordingly shows good laminating performance over a wide lamination temperature range. As a result of the above features, the prepreg according to the present invention serves to produce carbon fiber reinforced composite materials with improved productivity.

Furthermore, since the component [D] contained in the second epoxy resin composition accounts for 1 part by mass or more and less than 5 parts by mass relative to the total quantity of the components [B] to [E], which accounts for 100 parts by mass, it becomes easy, regardless of the type of epoxy rein, for the second epoxy resin composition to achieve a storage elastic modulus G' at 25°C of $8.0 \times 10^5$ to $6.0 \times 10^6$ Pa as measured at an angular frequency of 3.14 rad/s and give a value of 0.085 or more as calculated by the equation (1) shown below. As a result, a prepreg that forms a cure product (carbon fiber reinforced composite material) having good physical properties can be designed as desired.

The prepreg according to the present invention includes the components [A] to [E] listed above and takes the form

of any one of the first to third preferred embodiments described below.

According to the first preferred embodiment, the component [B] includes a bisnaphtalene type epoxy resin with at least di-functionality [B1] as represented by the general formula (A-1) shown below and an epoxy resin with at least tri-functionality [B2] other than the epoxy resin [B1]. The adoption of such a constitution serves to provide a prepreg that can form a carbon fiber reinforced composite material having a high heat resistance under water absorbing conditions. Hereinafter, the "bisnaphtalene type epoxy resin with at least di-functionality [B1] as represented by the general formula (A-1) shown below" and the "epoxy resin with at least tri-functionality [B2] other than the epoxy resin [B1]" will be occasionally abbreviated as "component [B1]" and "component [B2]", respectively.

[Chemical formula 1]

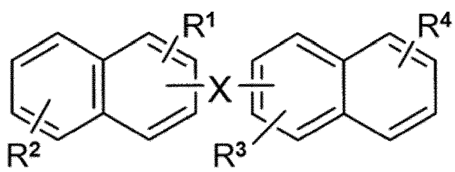

(A-1)

(In the general formula (A-1), X is an alkylene group with a carbon number of 1 to 8 or a group as represented by the general formula (A-2) shown below; $R^1$ to $R^5$ each represents one selected from the group consisting of a glycidyl ether group as represented by the general formula (A-3), a glycidyl amine group as represented by (A-4), a hydrogen atom, a halogen atom, a phenyl group, and an alkyl group with a carbon number of 1 to 4; $R^1$ to $R^4$ may be bonded to either ring of the naphtalene group or may be bonded to both rings simultaneously; $R^5$ may be bonded at any position of the benzene group; and essentially, three or more of $R^1$ to $R^5$ need to be a group represented by the following general formula (A-3), or alternatively, at least one group represented by the general formula (A-3) and at least one group represented by the general formula (A-4) need to be included among $R^1$ to $R^5$, and other Rs may be the same as or different from each other.) It is noted that regarding partial structures in (A-3) and (A-4), the oxiranylmethyl group and the oxirane ring portion of the glycidyl group will be occasionally referred to as glycidyl group and epoxy group, respectively.

[Chemical formula 2]

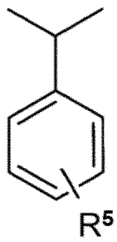

(A-2)

[Chemical formula 3]

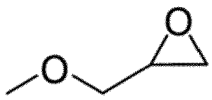

(A-3)

[Chemical formula 4]

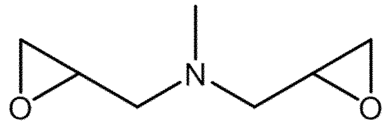

(A-4)

According to the second preferred embodiment, the component [B] contains an epoxy resin [B3] having one or more 4-membered ring structures and a glycidyl amine group or a glycidyl ether group directly bonded to a ring structure, and an epoxy resin [B4] with at least a tri-functionality. The adoption of such a constitution serves to provide a prepreg that can form a carbon fiber reinforced composite material having high tensile strength at low temperatures. Hereinafter, the "epoxy resin [B3] having one or more 4-membered ring structures and a glycidyl amine group or a glycidy lether group directly connected to a ring structure" and the "epoxy resin [B4] with at least a tri-functionality" will be occasionally abbreviated as component [B3] and component [B4], respectively.

According to the third preferred embodiment, the component [B] contains a m- or p-aminophenol type epoxy resin [B5] and either a glycidyl ether type epoxy resin or a glycidyl amine type epoxy resin [B6] other than [B5] having two or more glycidyl groups in a molecule. The adoption of such a constitution serves to provide a prepreg that can form a carbon fiber reinforced composite material having a high heat resistance. Hereinafter, the "m- or p-aminophenol type epoxy resin [B5]" and "either a glycidyl ether type epoxy resin or a glycidyl amine type epoxy resin [B6] other than [B5] having two or more glycidyl groups in a molecule" will be occasionally abbreviated as "component [B5]" and "component [B6]", respectively.

Each of the components will be described in detail below.

The carbon fiber used as the component [A] for the present invention is high in specific strength and specific elastic modulus and also high in conductivity, and therefore, can be used suitably in applications where good mechanical property and high conductivity are required.

The various carbon fibers that can serve as the component [A] are classified by type of the precursor used and examples include acrylic, pitch based, and rayon based carbon fibers, of which acrylic carbon fiber is particularly preferred because it is high in tensile strength.

Such acrylic carbon fiber can be produced through, for example, a process as described below.

First, a spinning solution that contains polyacrylonitrile produced from monomers formed of acrylonitrile as primary component is spun by wet spinning, dry-wet spinning, dry spinning, or melt spinning to provide a coagulated thread. Then, the coagulated thread is processed in a yarn-making step to prepare a precursor (precursory fiber). Then, the precursor is subjected to steps for flameproofing, carbonization, etc., for conversion into carbon fiber, thus providing acrylic carbon fiber. Here, the primary component referred to herein is the monomer component that is the highest in mass content.

The carbon fiber of the component [A] may be in the form of twisted yarns, untwisted yarns, or non-twisted yarns. In a twisted yarn, the filaments contained in a carbon fiber bundle are not aligned in parallel and will result in a carbon fiber reinforced composite material having deteriorated mechanical property and accordingly, the use of untwisted yarns or non-twisted yarns is preferred because they serve to produce carbon fiber reinforced composite materials having moldability and strength properties in a good balance.

The carbon fiber of the component [A] preferably has a tensile modulus of 200 to 440 GPa. The tensile modulus of carbon fiber depends on the degree of crystallinity of the graphite structure present in the carbon fiber, and the elastic modulus increases with an increasing degree of crystallinity. Furthermore, the conductivity also increases with an increasing degree of crystallinity. If the carbon fiber of the component [A] has a tensile modulus in this range, it is preferred because it serves to produce carbon fiber reinforced composite materials having conductivity, stiffness, and strength all realized simultaneously at a high level. It is more preferable for the carbon fiber to have a tensile modulus of 230 to 400 GPa, and it is still more preferable for the carbon fiber to have a tensile modulus of 260 to 370 GPa. Here, the tensile modulus of carbon fiber is measured according to JIS R7601 (2006).

Commercial products of carbon fiber that can be used as the component [A] include Torayca (registered trademark) T800SC-24000, Torayca (registered trademark) T800HB-12000, Torayca (registered trademark) T700SC-24000, Torayca (registered trademark) T700SC-12000, Torayca (registered trademark) T300-12000, Torayca (registered trademark) T1000GB-12000, Torayca (registered trademark) T1100GC-12000, and Torayca (registered trademark) T1100GC-24000 (all manufactured by Toray Industries, Inc.).

The component [B] used for the present invention is an epoxy resin that is a compound having one or more epoxy groups in a molecule and can be cured by heating its mixture with a curing agent as described later. Specific examples of the epoxy resin [B] include aromatic glycidyl ethers produced from a compound having a plurality of phenolic hydroxyl groups, aliphatic glycidyl ethers produced from an compound having a plurality of alcoholic hydroxyl groups, glycidyl amines produced from an amine compound, glycidyl esters produced from a carboxylic acid compound having a plurality

of carboxyl groups, and cycloalkene oxide type epoxy resins having an oxirane ring in the backbone.

According to the first preferred embodiment of the present invention, the component [B] includes a bisnaphtalene type epoxy resin with at least di-functionality [B1] as represented by the general formula (A-1) shown below and an epoxy resin with at least tri-functionality [B2] other than the epoxy resin [B1]. This serves to provide a prepreg that has high processability and laminating performance and gives a cured product having high heat resistance under water absorbing conditions.

[Chemical formula 5]

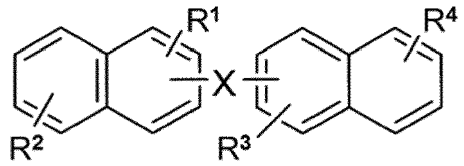

(A-1)

(In the general formula (A-1), X is an alkylene group with a carbon number of 1 to 8 or a group as represented by the general formula (A-2) shown below; $R^1$ to $R^5$ each represents one selected from the group consisting of a group as represented by the general formula (A-3) or (A-4), a hydrogen atom, a halogen atom, a phenyl group, and an alkyl group with a carbon number of 1 to 4; $R^1$ to $R^4$ may be bonded to either ring of the naphtalene group or may be bonded to both rings simultaneously; $R^5$ may be bonded at any position of the benzene group; and essentially, three or more of $R^1$ to $R^5$ need to be a group represented by the following general formula (A-3), or alternatively, at least one group represented by the general formula (A-3) and at least one group represented by the general formula (A-4) need to be included among $R^1$ to $R^5$, and other Rs may be the same as or different from each other.)

[Chemical formula 6]

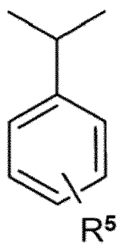

(A-2)

[Chemical formula 7]

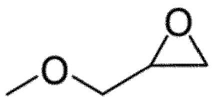

(A-3)

[Chemical formula 8]

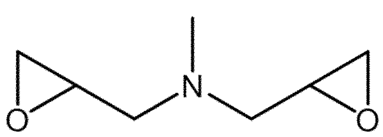

(A-4)

The component [B1] preferably contains 2 to 10, more preferably 2 to 5, glycidyl groups. If there exist too many glycidyl groups, the resulting cured matrix resin will be so brittle that the impact resistance will deteriorate in some cases.

Any production method may be used to produce an epoxy resin as represented general formula (A-1), but for

example, it may be produced through a reaction between a hydroxynaphthalene and epihalohydrin.

The content of component [B1] is preferably 10 to 50 parts by mass, more preferably 20 to 40 parts by mass, and still more preferably 25 to 30 parts by mass, relative to the total quantity of epoxy resin in the first epoxy resin composition and second epoxy resin composition, which accounts for 100 parts by mass. If the content is 10 part by mass or more, it enables the production of a carbon fiber reinforced composite material having high heat resistance. On the other hand, if it is 50 parts by mass or less, it enables the production of a carbon fiber reinforced composite material showing high elongation.

Commercial products of the component [B1] include EPICLON (registered trademark) HP-4700, EPICLON (registered trademark) HP-4710, EPICLON (registered trademark) HP-4770, EPICLON (registered trademark) EXA-4701, and EPICLON (registered trademark) EXA-4750 (all manufactured by DIC Corporation).

The component [B2] is an epoxy resin other than the component [B1] with at least a tri-functionality containing three or more epoxy groups in a molecule. Examples of the component [B2] include glycidyl amine type epoxy resins, glycidyl ether type epoxy resins, and aminophenol type epoxy resins.

The above component [B2] preferably contains 3 to 7, more preferably 3 to 4, epoxy groups. If there exist too many epoxy groups, the resulting cured matrix resin will be so brittle that the impact resistance will deteriorate in some cases.

Examples of glycidyl amine type epoxy resins with at least a tri-functionality include diaminodiphenyl methane type, diaminodiphenyl sulfone type, metaxylenediamine type, 1,3-bisaminomethyl cyclohexane type, and isocyanurate type epoxy resins.

Examples of glycidyl ether type epoxy resins with at least a tri-functionality include phenol novolac type, orthocresol novolac type, tris-hydroxyphenyl methane type, and tetraphenylol ethane type epoxy resins.

Furthermore, in addition to the above glycidyl amine type epoxy resins with at least a tri-functionality and glycidyl ether type epoxy resins with at least a tri-functionality, the epoxy resins with at least a tri-functionality also include aminophenol type epoxy resins, which contain both a glycidyl amine group and a glycidyl ether group in a molecule.

Of the epoxy resins with at least a tri-functionality given above, diaminodiphenyl methane type and aminophenol type epoxy resins are particularly preferred because of a good balance among physical properties.

The heat resistance can decrease if the content of the above component [B2] is too small whereas the cross-linking density can incrase leading to a brittle material if it is too large, possibly resulting in a carbon fiber reinforced composite material suffering from deterioration in impact resistance and strength. Accordingly, the content of the component [B2] in a prepreg is preferably 20 to 80 parts by mass, more preferably 30 to 70 parts by mass, and still more preferably 40 to 60 parts by mass, relative to the total quantity of epoxy resin in the first epoxy resin composition and second epoxy resin composition, which accounts for 100 parts by mass.

Commercial products of the component [B2] include SUMI-EPOXY (registered trademark) ELM434 (manufactured by Sumitomo Chemical Co., Ltd.), Araldite (registered trademark) MY720, Araldite (registered trademark) MY721, Araldite (registered trademark) MY9512, and Araldite (registered trademark) MY9663 (all manufactured by Huntsman Corporation), Epotohto (registered trademark) YH-434 (manufactured by Nippon Steel & Sumikin Chemical Co., Ltd.), SUMI-EPOXY (registered trademark) ELM120 and SUMI-EPOXY (registered trademark) ELM100 (both manufactured by Sumitomo Chemical Co., Ltd.), jER (registered trademark) 630 (Mitsubishi Chemical Corporation), Araldite (registered trademark) MY0500, Araldite (registered trademark) MY0510, and Araldite (registered trademark) MY0600 (all manufactured by Huntsman Corporation).

Commercial products of meta-xylene diamine type epoxy resin include TETRAD-X (manufactured by Mitsubishi Gas Chemical Co., Inc.).

Commercial products of 1,3-bisaminomethyl cyclohexane type epoxy resin include TETRAD-C (manufactured by Mitsubishi Gas Chemical Co., Inc.).

Commercial products of isocyanurate epoxy resin include TEPIC (registered trademark) -P (Nissan Chemical Industries, Ltd.).

Commercial products of phenol novolac type epoxy resin include D.E.N. (registered trademark) 431 and D.E.N. (registered trademark) 438 (both manufactured by The Dow Chemical Company) and jER (registered trademark) 152 (manufactured by Mitsubishi Chemical Corporation).

Commercial products of orthocresol novolac type epoxy resin include EOCN-1020 (manufactured by Nippon Kayaku Ltd.) and EPICLON (registered trademark) N-660 (manufactured by DIC Corporation).

Commercial products of tris-hydroxyphenyl methane type epoxy resin include Tactix (registered trademark) 742 (manufactured by Huntsman Corporation).

Commercial products of tetraphenylol ethane type epoxy resin include jER (registered trademark) 1031S (manufactured by Mitsubishi Chemical Corporation).

Commercial products of dicyclopentadiene type epoxy resin include EPICLON (registered trademark) HP-7200 (manufactured by DIC Corporation).

Commercial products of resorcinol epoxy type resin include DENACOL (registered trademark) EX-201 (manufactured by Nagase ChemteX Corporation).

Commercial products of urethane modified epoxy resin include AER4152 (manufactured by Asahi Kasei E-materials Corp.).

Commercial products of phenol aralkyl type epoxy resin include NC-3000 (manufactured by Nippon Kayaku Co., Ltd.).

According to the second preferred embodiment of the present invention, the component [B] contains an epoxy resin [B3] having one or more 4-membered ring structures and at least one glycidyl amine group or glycidyl ether group directly connected to a ring structure, and an epoxy resin [B4] with at least a tri-functionality. This serves to provide a prepreg that has high processability and laminating performance and gives a cured product with high tensile strength at low temperatures. Here, the term relating to the component [B3] "containing one or more 4-membered ring structures" means either containing one or more monocyclic ring structures each having four or more members, such as cyclohexane, benzene, and pyridine, or containing at least one condensed ring structure having four or more members, such as phthalimide, naphthalene, and carbazole.

A glycidyl amine group or glycidyl ether group directly connected to a ring structure in the component [B3] as described above has a structure in which the N atom of the glycidyl amine group or the O atom of the glycidyl ether group is connected to the ring structure of benzene, phthalimide, etc., and the epoxy resin has a mono-functionality or di-functionality in the case it contains a glycidyl amine group or has a mono-functionality in the case it contains a glycidyl ether group.

It is preferable for the component [B3] to be an epoxy resin with a di-functional that has a structure as represented by the general formula (A-5) given below.

[Chemical formula 9]

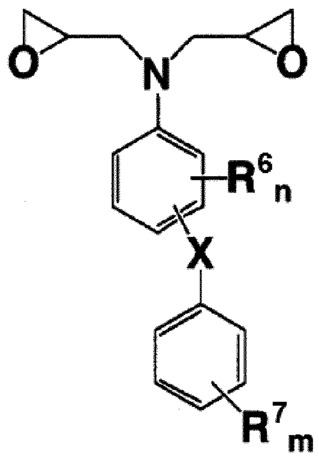

(A-5)

(In the formula, $R^6$ and $R^7$ are each at least one selected from the group consisting of an aliphatic hydrocarbon group with a carbon number of 1 to 4, an alicyclic hydrocarbon group with a carbon number of 3 to 6, an aromatic hydrocarbon group with a carbon number of 6 to 10, a halogen atom, an acyl group, a trifluoromethyl group, and a nitro group. Here, n is an integer of 0 to 4 and m is an integer of 0 to 5. When n or m is an integer of 2 or more, the $R^6$'s and $R^7$'s may be either identical to or different from each other. X represents one selected from the group consisting of -O-, -S-, -CO-, -C(=O)O-, and $-SO_2-$.)

If the content of the component [B3] is small, it can contributes little to the effect of improving the tensile strength of the resulting carbon fiber reinforced composite material in some cases whereas if the content is too large, the heat resistance may decrease in some cases. Accordingly, the content of the component [B3] in a prepreg is preferably 5 to 60 parts by mass relative to the total quantity of epoxy resin in the first epoxy resin composition and second epoxy resin composition, which accounts for 100 parts by mass. Furthermore, the use of an epoxy resin with mono-functionality as the component [B3] leads to a carbon fiber reinforced composite material having higher strength and the use of an epoxy resin with di-functionality leads to a carbon fiber reinforced composite material having higher heat resistance. In the case of using an epoxy resin with mono-functionality, the content of the component [B3] is preferably 10 to 30 parts by mass, more preferably 15 to 25 parts by mass, relative to the total quantity of epoxy resin in the first epoxy resin composition and second epoxy resin composition, which accounts for 100 parts by mass. In the case of using an epoxy resin with di-functionality, it is preferably 10 to 40 parts by mass, more preferably 20 to 30 parts by mass, relative to the total quantity of epoxy resin in the first epoxy resin composition and second epoxy resin composition, which accounts for 100 parts by mass.

Of the epoxy resins useful as the component [B3] for the present invention, those with mono-functionality include, for example, glycidylphthalimide, glycidyl-1,8-naphthalimide, glycidylcarbazole, glycidyl-3,6-dibromocarbazole, glycidylindole, glycidyl-4-acetoxyindole, glycidyl-3-methylindole, glycidyl-3-acetylindole, glycidyl-5-methoxy-2-methylindole, o-phenylpheny lglycidyl ether, p-phenylphenyl glycidyl ether, p-(3-methylphenyl)phenyl glycidyl ether, 2,6-dibenzylphenyl glycidyl ether, 2-benzylphenyl glycidyl ether, 2,6-diphenylphenyl glycidyl ether, 4-α-cumylphenyl glycidyl ether, o-phenoxyphenyl glycidyl ether, and p-phenoxyphenyl glycidyl ether.

Of the epoxy resins useful as the component [B3] for the present invention, those with di-functionality include, for example, N,N-diglycidyl-4-phenoxy aniline, N,N-diglycidyl-4-(4-methylphenoxy) aniline, N,N-diglycidyl-4-(4-tert-butylphenoxy) aniline, and N,N-diglycidyl-4-(4-phenoxyphenoxy) aniline. In many cases, these epoxy resins can be produced by adding epichlorohydrin to a phenoxy aniline derivative and cyclizing it with an alkali compound. Since the viscosity increases with an increasing molecular weight, N,N-diglycidyl-4-phenoxy aniline, which is represented by the general formula (A-5) in which both $R^6$ and $R^7$ are hydrogen atoms, is particularly preferred from the viewpoint of handleability.

Specifically, usable phenoxy aniline derivatives include 4-phenoxy aniline, 4-(4-methylphenoxy) aniline, 4-(3-methylphenoxy) aniline, 4-(2-methylphenoxy) aniline, 4-(4-ethylphenoxy) aniline, 4-(3-ethylphenoxy) aniline, 4-(2-ethylphenoxy) aniline, 4-(4-propylphenoxy) aniline, 4-(4-tert-butylphenoxy) aniline, 4-(4-cyclohexylphenoxy) aniline, 4-(3-cyclohexylphenoxy) aniline, 4-(2-cyclohexylphenoxy) aniline, 4-(4-methoxyphenoxy) aniline, 4-(3-methoxyphenoxy) aniline, 4-(2-methoxyphenoxy) aniline, 4-(3-phenoxyphenoxy) aniline, 4-(4-phenoxyphenoxy) aniline, 4-[4-(trifluoromethyl) phenoxy] aniline, 4-[3-(trifluoromethyl) phenoxy] aniline, 4-[2-(trifluoromethyl) phenoxy] aniline, 4-(2-naphthyloxyphenoxy) aniline, 4-(1-naphthyloxyphenoxy) aniline, 4-[(1,1'-biphenyl-4-yl)oxy] aniline, 4-(4-nitrophenoxy) aniline, 4-(3-nitrophenoxy) aniline, 4-(2-nitrophenoxy) aniline, 3-nitro-4-aminophenyl phenyl ether, 2-nitro-4-(4-nitrophenoxy) aniline, 4-(2,4-dinitrophenoxy) aniline, 3-nitro-4-phenoxy aniline, 4-(2-chlorophenoxy) aniline, 4-(3-chlorophenoxy) aniline, 4-(4-chlorophenoxy) aniline, 4-(2,4-dichlorophenoxy) aniline, 3-chloro-4-(4-chlorophenoxy) aniline, and 4-(4-chloro-3-tolyloxy) aniline.

Of those useful as the component [B3] for the present invention, commercial products of epoxy resin with monofunctionality include, for example, Denacol (registered trademark) EX-731 (glycidylphthalimide, manufactured by Nagase ChemteX Corporation) and OPP-G (o-phenylphenylglycidyl ether, manufactured by Sanko Co., Ltd.), and commercial products of epoxy resin with di-nofunctionality include GAN (N-diglycidyl aniline, manufactured by Nippon Kayaku Co., Ltd.) and TOREP (registered trademark) A-204E (diglycidyl-p-phenoxy aniline, manufactured by Toray Fine Chemicals Co., Ltd.).

According to the third preferred embodiment of the present invention, the component [B] contains a m- or p-aminophenol type epoxy resin [B5] and either a glycidyl ether type epoxy resin or a glycidyl amine type epoxy resin [B6] other than [B5] having two or more glycidyl groups in a molecule. This serves to provide a prepreg that has high processability and laminating performance and gives a cured product having high heat resistance.

The content of the component [B5] is preferably 10 to 50 parts by mass, more preferably 15 to 40 parts by comprising a mass, and still more preferably 20 to 30 parts by mass, relative to the total quantity of epoxy resin in the first epoxy resin composition and second epoxy resin composition, which accounts for 100 parts by mass, from the viewpoint of producing a cured resin that are high in all toughness, elongation percentage, and heat resistance.

The component [B5] is preferably at least one selected from the group consisting of epoxy resins having structures as represented by the general formula (A-6) given below, and derivatives thereof.

[Chemical formula 10]

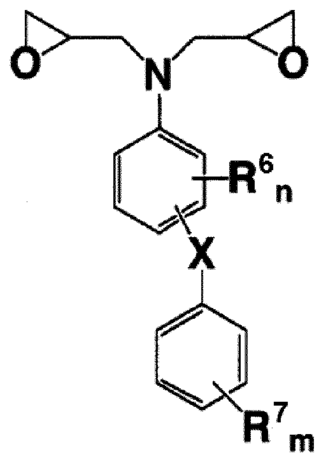

(A-6)

Here, $R^8$ and $R^9$ in the general formula (A-6) represent at least one selected from the group consisting of a hydrogen atom, an aliphatic hydrocarbon group with a carbon number of 1 to 4, alicyclic hydrocarbon group with a carbon number of 4 or less, and a halogen atom.

If the structures of $R^8$ and $R^9$ in the general formula (A -6) are too large, the epoxy resin composition can be so high in viscosity as to cause a decrease in handleability, and the compatibility between the m- or p-aminophenol epoxy resin and other components of the epoxy resin composition can decrease, resulting in deterioration in the effect of giving a carbon fiber reinforced composite material with improved mechanical property.

Specific examples of the component [B5] include, for example, triglycidyl-m-aminophenol, triglycidyl-p-aminophenol, and derivatives and isomers thereof.

In particular, $R^8$ and $R^9$ are each preferably a hydrogen atom from the viewpoint of compatibility with other epoxy resins, and more preferably triglycidyl-m-aminophenol or triglycidyl-p-aminophenol from the viewpoint of the elastic modulus and heat resistance of the resulting carbon fiber reinforced composite material. Triglycidyl-m-aminophenol is high in elastic modulus and triglycidyl-p-aminophenol is high in heat resistance. From the viewpoint of fire retardant property, it is also preferable for $R^8$ and/or $R^9$ to be substituted by halogen atoms such as Cl and Br.

Commercial products of m- or p-aminophenol type epoxy resin include SUMI-EPOXY (registered trademark) ELM120 and SUMI-EPOXY (registered trademark) ELM100 (both manufactured by Sumitomo Chemical Co., Ltd.), jER (registered trademark) 630 (manufactured by Mitsubishi Chemical Corporation), and Araldite (registered trademark) MY0500, Araldite (registered trademark) MY0510, Araldite (registered trademark) MY0600, and Araldite (registered trademark) MY0610 (all manufactured by Huntsman Corporation).

The component [B6] is either a glycidyl ether type epoxy resin or a glycidyl amine type epoxy resin other than [B5] having two or more glycidyl groups in a molecule as described above, and it is an important component from the viewpoint of heat resistance as represented by the glass transition temperature of the resulting cured product and the viscosity of the epoxy resin composition. It should be noted that aminophenol type epoxy resin is not a glycidyl ether epoxy resin or a glycidyl amine epoxy resin. If an epoxy resin having less than two glycidyl groups in a molecule is used, the cured product produced by heating and curing its mixture with a curing agent as described later will be low in glass transition temperature in some cases. Preferred examples of the component [B6] include, for example, bisphenol type epoxy resins such as bisphenol A type epoxy resin, bisphenol F type epoxy resin, bisphenol AD type epoxy resin, and bisphenol S type epoxy resin; brominated bisphenol type epoxy resins such as tetrabromobisphenol A dilycidyl ether; and others such as alicyclic epoxy resin, diaminodiphenyl methane, diaminodiphenyl sulfone, diaminodiphenyl ether, xylene diamine, constitutional isomers thereof, and substances produced by glycidylating the amino group in a derivative containing a halogen atom or an alkyl substituent with a carbon number of 3 or less, used as precursor. More specifically, they include glycidyl amine type epoxy resins such as tetraglycidyl diaminodiphenyl methane, glycidyl compounds of xylene diamine, tetraglycidyl diaminodiphenyl sulfone, and tetraglycidyl diaminodiphenyl ether.

Being low in viscosity, liquid bisphenol A type epoxy resins and bisphenol F type epoxy resins are preferably used in combination with other epoxy resins.

Compared to liquid bisphenol A type epoxy resins, solid bisphenol A type epoxy resins form a structure with a low crosslinking density that is lower in heat resistance but higher in toughness, and accordingly they are used in combination with a glycidyl amine type epoxy resin, liquid bisphenol A type epoxy resin, or bisphenol F type epoxy resin.

Commercial products of bisphenol A type epoxy resin include jER (registered trademark) 825, jER (registered trademark) 827, jER (registered trademark) 828, jER (registered trademark) 834, jER (registered trademark) 1001, jER (registered trademark) 1004, jER (registered trademark) 1004AF, and jER (registered trademark) 1007 (all manufactured by Mitsubishi Chemical Corporation), EPICLON (registered trademark) 850 (manufactured by DIC Corporation), Epotohto (registered trademark) YD-128 (manufactured by Nippon Steel & Sumikin Chemical Co., Ltd.), and D.E.R. (registered trademark) 331 and D.E.R. (registered trademark) 332 (both manufactured by The Dow Chemical Company).

Commercial products of bisphenol F type epoxy resin include jER (registered trademark) 806, jER (registered trademark) 807, jER (registered trademark) 1750, jER (registered trademark) 4004P, and jER (registered trademark) 4005P (all manufactured by Mitsubishi Chemical Corporation), EPICLON (registered trademark) 830 (manufactured by DIC Corporation), and Epotohto (registered trademark) YDF-170 (manufactured by Nippon Steel & Sumikin Chemical Co., Ltd.).

Commercial products of glycidyl amine type epoxy resin include SUMI-EPOXY (registered trademark) ELM434 (manufactured by Sumitomo Chemical Co., Ltd.), Araldite (registered trademark) MY720, Araldite (registered trademark) MY721, Araldite (registered trademark) MY9512, and Araldite (registered trademark) MY9663 (all manufactured by Huntsman Corporation).

These epoxy resins may be used singly or as an appropriate mixture so that a carbon fiber reinforced composite material having intended mechanical property and heat resistance can be produced by curing a prepreg according to the present invention.

In order to obtain a carbon fiber reinforced composite material having improved toughness, it is preferable to contain a bisphenol type epoxy resin as the component [B6], whereas in order to obtain a carbon fiber reinforced composite

material having improved heat resistance and elastic modulus, it is preferable to contain a glycidyl amine type epoxy resin as the component [B6].

Furthermore, the inclusion of a plurality of epoxy resins having different flow characteristics is effective for fluidity control of the matrix resin when heat-curing the prepreg obtained. For example, if the matrix resin is high in fluidity before the start of gelation in the heat curing step, disturbance in the orientation of carbon fibers can occur or the matrix resin can flow out of the system to alter the fiber volume content out of the predetermined range, possibly resulting in a carbon fiber reinforced composite material having deteriorated mechanical property.

In the case where the component [B5] and the component [B6] are used in combination, if the content of the component [B6] is small, it contributes little to the mechanical property of the carbon fiber reinforced composite material whereas if the content is too large, the heat resistance can decrease in some cases when the component [B6] is a bisphenol type epoxy resin or the toughness can decrease in some cases when the component [B6] is a glycidyl amine type epoxy resin. Therefore, from the viewpoint of control of heat resistance and resin viscosity as described above and also from the viewpoint of the elongation percentage and toughness of the resin, it is preferable for the component [B6] to account for 50 to 90 parts by mass, more preferably 55 to 85 parts by mass, and still more preferably 60 to 80 parts by mass, relative to the total quantity of epoxy resin in the first epoxy resin composition and second epoxy resin composition, which accounts for 100 parts by mass.

The prepreg according to the present invention may contain epoxy resins other than those used as essential components in the first to third preferred embodiments of the present invention unless they impair the preferred effects of the invention. For example, ladder type silsesquioxane containing an epoxy ring, alicyclic epoxy resin, epoxy resin having a biphenyl backbone, epoxy resin having a dicyclopentadiene backbone, phenol novolac type epoxy resin, cresol novolac type epoxy resin, other novolac type epoxy resins, and monoepoxy compounds having only one epoxy group in a molecule may be added appropriately. This serves to control the balance between mechanical property and heat resistance and adjust the viscosity of the resin composition appropriately. Furthermore, combined use of a plurality of epoxy resins having different flow characteristics at a particular temperature is effective for fluidity control of the matrix resin when heat-curing the prepreg obtained. For example, if the matrix resin is high in fluidity before the start of gelation in the heat-curing step, disturbance in the orientation of reinforcing fibers may occur or the matrix resin may flow out of the system to cause the fiber mass content to go out of the predetermined range, possibly resulting in a carbon fiber reinforced composite material with deteriorated physical properties. Combining a plurality of epoxy resins showing different viscoelastic behaviors is also effective for providing a prepreg having appropriately controlled tackiness and drapability.

The ladder type silsesquioxane containing an epoxy ring structure is preferably at least one selected from the group consisting of ladder type silsesquioxane as represented by the general formula (A-7) given below and derivatives thereof.

[Chemical formula 11]

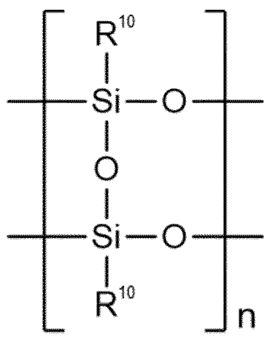

(A-7)

Blending of these with an epoxy resin composition serves to develop flame retardant property and heat resistance.

In a ladder type silsesquioxane containing an epoxy ring structure used for the present invention, the epoxy ring structures accounts for 50 to 100 mol%, preferably 60 to 100 mol%, of the substituents $R^{10}$ in the general formula (A-7). If the proportion accounted for by the epoxy ring structures to the substituents $R^{10}$ in the general formula (A-7) is controlled in this range, it serves to allow the epoxy resin composition to have an appropriate viscosity to develop improved handleability and moldability, possibly leading to a carbon fiber reinforced composite material having flame retardant property, heat resistance, and mechanical property at high level. The proportion of the epoxy ring structures (mol%) referred to herein can be calculated as follows: quantity of epoxy group in ladder type silsesquioxane (mol) / total quantity of substituents in ladder type silsesquioxane (mol) $\times$ 100. The proportion of epoxy ring structures in a ladder type silsesquioxane can also be determined by organic element analysis, ICP-MS (inductively coupled plasma mass spectroscopy), etc., of the epoxy resin composition.

For the ladder type silsesquioxane containing epoxy ring structures used for the present invention, examples of the substituent $R^{10}$ containing an epoxy ring structure include glycidoxy alkyl groups with a carbon number of 4 or less, preferably 3 or less, such as β-glycidoxy ethyl group, γ-glycidoxy propyl group, and γ-glycidoxy butyl group; and alkyl groups substituted by cycloalkyl groups that have a carbon number of 5 to 8 and contains an oxirane group such as glycidyl group, β-(3,4-epoxycyclohexyl)ethyl group, γ-(3,4-epoxycyclohexyl)propyl group, β-(3,4-epoxycycloheptyl)ethyl group, β-(3,4-epoxycyclohexyl)propyl group, β-(3,4-epoxycyclohexyl)butyl group, and β-(3,4-epoxycyclohexyl)pentyl group, of which preferred are alkyl groups having a carbon number of 3 or less and substituted by cycloalkyl groups that have a carbon number of 5 to 8 and contain an oxirane group. In particular, β-glycidoxy ethyl group, γ-glycidoxy propyl group, and β-(3,4-epoxy cyclohexyl) ethyl group are preferred.

For the ladder type silsesquioxane used for the present invention, examples of the substituent $R^{10}$ containing no epoxy ring structures include hydrogen atom, alkyl groups with a carbon number of 1 to 10, and alkoxy groups with a carbon number of 1 to 10. The alkyl groups with a carbon number of 1 to 10 include, for example, the methyl group, ethyl group, propyl group, butyl group, isopropyl group, and isobutyl group. The alkoxy groups with a carbon number of 1 to 10 include the methoxy group, ethoxy group, propoxy group, and butoxy group.

It is preferable for ladder type silsesquioxane used for the present invention to have a weight-average molecular weight of 1,500 to 30,000, more preferably 1,500 to 15,000, and still more preferably 2,000 to 8,000. If the ladder type silsesquioxane used has a weight-average molecular weight in this range, it permits, for example, obtaining a sufficient heat resistance and elongation percentage, improving the compatibility between the ladder type silsesquioxane and other epoxy resins, and improving the impregnation of reinforcing fibers with matrix resins. The weight-average molecular weight referred to herein means the polystyrene-based molecular weight measured by GPC (gel permeation chromatography).

Commercial products of ladder type silsesquioxane containing an epoxy ring structure include SE-01GM (manufactured by Nagase ChemteX Corporation).

If ladder type silsesquioxane is added to the epoxy resin composition used for the present invention, it serves to obtain a carbon fiber reinforced composite material having flame retardant property, heat resistance, and mechanical property at a high level, and in that case, it is necessary for the ladder type silsesquioxane added to account for 1 to 40 parts by mass, preferably 5 to 30 parts by mass, and more preferably 10 to 20 parts by mass, relative to the total quantity of the ladder type silsesquioxane and other epoxy resins, which accounts for 100 parts by mass, in the first epoxy resin composition and second epoxy resin composition.

The curing agent used as the component [C] for the present invention may be any compound that has an active group that can react with an epoxy resin under energy irradiation via, for example, exposure to heat, microwave, visible light, infrared light, ultraviolet light, electron beam, or radiation. Examples of such an active group that can react with an epoxy resin include groups containing an amino group or an anhydride group. When using a curing agent for an epoxy resin, the storage stability of the prepreg that contains it is preferably as high as possible, and from the viewpoint of allowing the prepreg to have a high storage stability, it is preferably solid at 23°C. Here, the term "being solid" means that at least either the glass transition temperature or the melting point is 23°C or more and the substance substantially does not show fluidity at 23°C.

The component [C] is preferably an aromatic amine compound and preferably has one to four phenyl groups in the molecule from the viewpoint of heat resistance and mechanical property. Furthermore, since a molecule backbone having a bent structure can contribute to an increase in the resin's elastic modulus and improvement in mechanical property, the epoxy resin curing agent is preferably an aromatic polyamine compound in which at least one phenyl group present in the backbone has an amino group at an ortho or meta position. Furthermore, from the viewpoint of heat resistance, an aromatic polyamine compound in which two or more phenyl groups have amino groups at the para position is preferred. Specific examples of such aromatic polyamine compounds include meta-phenylene diamine, diaminodiphenyl methane, diaminodiphenyl sulfone, meta-xylylene diamine, (p-phenylene methylene) dianiline, various derivatives thereof such as alkyl-substituted derivatives, and various isomers having amino groups at different positions. To provide materials for spacecraft and aircraft, in particular, the use of 4,4'-diaminodiphenyl sulfone or 3,3'-diaminodiphenyl sulfone is preferred because they can give cured products having high heat resistance and elastic modulus while hardly suffering from a decrease in linear expansion coefficient or a reduction in heat resistance due to moisture absorption. These aromatic amine compounds may be used singly or two or more thereof may be used in combination. When mixed with other components, they may be powder or liquid, or powdery and liquid aromatic amine compounds may be mixed together.

Usable commercial products of aromatic amine compounds include SEIKACURE-S (manufactured by Seika K.K.), MDA-220 (manufactured by Mitsui Chemicals, Inc.), LONZACURE (registered trademark) M-DIPA (manufactured by Lonza), LONZACURE (registered trademark) M-MIPA (manufactured by Lonza), and 3,3'-DAS (manufactured by Mitsui Chemicals, Inc.).

When an aromatic amine is used as the component [C], its content is preferably such that the number of moles of the active hydrogen atoms in the aromatic amine compound is 0.6 to 1.2 times, preferably 0.8 to 1.1 times, as large as the

number of moles of the epoxy groups in the epoxy resin contained in the prepreg from the viewpoint of heat resistance and mechanical property. If it is less than 0.6 times, the resulting cured product will fail to have a sufficiently high crosslinking density, leading to a lack of elastic modulus and heat resistance, and the resulting carbon fiber reinforced composite material will fail to have sufficient static strength property in some cases. If it is more than 1.2 times, the resulting cured product will have an excessively high crosslinking density, which leads to a lack of plastic deformation capacity, and the resulting carbon fiber material will possibly fail to have sufficient impact resistance.

In addition to the component [C] in the prepreg according to the present invention, a curing accelerator or a polymerization initiator that is activated by visible light or ultraviolet light may be added unless they impair the heat resistance or heat stability of the epoxy resin composition. Examples of such a curing accelerator include tertiary amine, lewis complex, onium salt, imidazole compound, urea compound, hydrazide compound, and sulfonium salt. The contents of the curing accelerator and polymerization initiator have to be adjusted appropriately according to the types used, but they are preferably 10 parts by mass or less, preferably 5 parts by mass or less, relative to the total quantity of the epoxy resin, which accounts for 100 parts by mass. The content of the curing accelerator controlled in this range is preferred because an uneven temperature distribution will not occur easily during the molding of a carbon fiber reinforced composite material in the case where the contents of the curing accelerator and polymerization initiator contained are in the above range.

It is preferable that the thermoplastic resin used as the component [D] is soluble in the epoxy resin used as the component [B]. Furthermore, the incorporation of the component [D] is expected to work effectively in improving the adhesiveness between the matrix resin and the carbon fiber and accordingly, it is preferable that a thermoplastic resin containing a functional group having hydrogen bond property is used as the component [D]. Examples of such a functional group having hydrogen bond property include alcoholic hydroxyl groups, amide bonds, sulfonyl groups, carboxyl groups, and carbonyl groups.

For the thermoplastic resin of the component [D] used for the present invention, the expression "being soluble in an epoxy resin" means that there exists a temperature region where a homogeneous phase is formed as a result of mixing the component [D] with an epoxy resin and subsequently heating and stirring them. Here, the expression "forming a homogeneous phase" means that there is a state where phase separation is not found by visual observation. As long as a homogeneous phase can be formed in a particular temperature range, separation may occur in other temperature ranges. For example, if the thermoplastic resin is dissolvable in an epoxy resin when heated, it can be regarded as "being soluble in the epoxy resin" even if separation occurs when cooled to 23°C for example. Dissolution may be confirmed by the following method. Specifically, powder of the component [D] is mixed with an epoxy resin and maintained for several hours, for example 2 hours, at a constant temperature that is lower than the glass transition temperature of the component [D] while measuring the viscosity change, and it can be decided that the component [D] is soluble in the epoxy resin if the viscosity is larger by 5% or more than the viscosity of the epoxy resin alone heated at the same constant temperature.

Examples of thermoplastic resin having an alcoholic hydroxyl group include polyvinyl acetal resins such as polyvinyl formal and polyvinyl butyral as well as polyvinyl alcohol and phenoxy resin.

Examples of thermoplastic resin having an amide bond include polyamide, polyimide, polyamideimide, and polyvinyl pyrolidone.

Examples of thermoplastic resin having a sulfonyl group include polysulfone and polyethersulfone.

Examples of thermoplastic resin having a carboxyl group include polyester, polyamide, and polyamideimide. The carboxyl group may be located in the main chain and/or at a chain end.

Examples of thermoplastic resin having a carbonyl group include aromatic polyetherketones such as polyether ether ketone.

Of the above ones, polyamides, polyimides, and polysulfones may further contain, in their principal chains, an ether bond or a functional group such as carbonyl group. In the polyamide compounds, the nitrogen atom in the amide group may have a substituent.

Commercially available products of thermoplastic resin that is soluble in epoxy resins and at the same time has a functional group having hydrogen bond property include polyvinyl acetal resin products such as Mowital (registered trademark) (manufactured by Kuraray Co., Ltd.) and Vinylec (registered trademark) K (manufactured by JNC); polyvinyl alcohol resin products such as Denka Poval (registered trademark) (manufactured by Denka Company Limited); polyamide resin products such as Macromelt (registered trademark) (manufactured by Henkel) and Amilan (registered trademark) CM4000 (manufactured by Toray Industries, Inc.); polyimide products such as Ultem (registered trademark) (manufactured by SABIC), Aurum (registered trademark) (manufactured by Mitsui Chemicals, Inc.), and Vespel (registered trademark) (manufactured by Du Pont); polyether ether ketone polymer products such as Victrex (registered trademark) (manufactured by Victrex); polysulfone products such as UDEL (registered trademark) (manufactured by Solvay); and polyvinyl pyrrolidone products such as Luviskol (registered trademark) (manufactured by BASF).

Other preferred examples of such a thermoplastic resin soluble in epoxy resins include those thermoplastic resins having polyaryl ether backbones. The use of such a thermoplastic resin having a polyaryl ether backbone as the component [D] serves to control the tackiness of the resulting prepreg, control the fluidity of the matrix resin during heat-curing of the prepreg, and provide a tough carbon fiber reinforced composite material without impairing the heat resistance or elastic modulus.

Examples of thermoplastic resin having a polyaryl ether backbone include polysulfone, polyphenyl sulfone, polyethersulfone, polyetherimide, polyphenylene ether, polyether ether ketone, and polyether ether sulfone, and these thermoplastic resins having polyaryl ether backbones may be used singly or as a mixture of two or more thereof.

To ensure a high heat resistance, in particular, the thermoplastic resin having a polyaryl ether backbone preferably has a glass transition temperature (Tg) of at least 150°C or more, more preferably 170°C or more. If the glass transition temperature of the thermoplastic resin having a polyaryl ether backbone is less than 150°C, moldings produced therefrom may liable to thermal deformation in some cases.

The terminal functional group in the thermoplastic resin having a polyaryl ether backbone is preferably a hydroxyl group, carboxyl group, thiol group, anhydride, etc. because they can react with a cation-polymerizable compound.

Commercial products of thermoplastic resin having a polyaryl ether backbone and also having such a terminal functional group include commercial products of polyethersulfone such as Sumika Excel (registered trademark) PES3600P, Sumika Excel (registered trademark) PES5003P, Sumika Excel (registered trademark) PES5200P, and Sumika Excel (registered trademark) PES7200P (all manufactured by Sumitomo Chemical Co., Ltd.); and Virantage (registered trademark) VW-10200RFP, Virantage (registered trademark) VW-10300FP, and Virantage (registered trademark) VW-10700RFP (all manufactured by Solvay); and also include copolymer oligomers of polyether sulfone and polyether ether sulfone as described in Published Japanese Translation of PCT International Publication JP 2004-506789; and commercial products of polyetherimide such as Ultem (registered trademark) 1000, Ultem (registered trademark) 1010, and Ultem (registered trademark) 1040 (all manufactured by SABIC). An oligomer as referred to herein is a polymer composed of a finite number, commonly 10 to 100, of monomers bonded to each other.

In particular, the use of polysulfone or polyether sulfone is preferred from the viewpoint of the solubility in epoxy resins, heat resistance, solvent resistance, and toughness improvement.

For the second epoxy resin composition contained in the second layer of the prepreg according to the present invention, it is essential for the component [D] contained therein accounts for 1 part by mass or more and less than 5 parts by mass relative to the total quantity of the components [B] to [E], which accounts for 100 parts by mass.

It is preferable for the component [D] to account for 2 parts by mass or more and less than 4.5 parts by mass, more preferably 3 parts by mass or more and less than 4 parts by mass, relative to the total quantity of the components [B] to [E], which accounts for 100 parts by mass. If it is less than 1 part by mass, the resulting carbon fiber reinforced composite material will be insufficient in tensile strength in some cases. On the other hand, if it is more than 5 parts by mass, the value defined by the above equation (1) will decrease in some cases, making it difficult to realize both high processability and good laminating performance simultaneously in an automated lay-up device.

As described above, by adjusting the content of the component [D] in the range specified above, it becomes possible to obtain a prepreg serving to produce a slit tape prepreg that suffers only a sufficiently decreased amount of build-up of the epoxy resin composition contained in the slit tape prepreg to the guide rolls during the implementation of an automated lay-up method, and shows good laminating performance over a wide lamination temperature range.

There are no specific limitations on the weight-average molecular weight of the component [D] in the first epoxy resin composition and second epoxy resin composition of the prepreg according to the present invention, but it is preferably in the range of 2,000 to 60,000 g/mol, more preferably 10,000 to 55,000 g/mol, still more preferably 15,000 to 50,000 g/mol, and particularly preferably 15,000 to 30,000 g/mol. The weight-average molecular weight referred to herein means the weight-average molecular weight measured by gel permeation chromatography and converted in terms of polystyrene. If the weight-average molecular weight is less than 2,000 g/mol, it may lead to a carbon fiber reinforced composite material that lacks in tensile strength. If it is more than 60,000 g/mol, on the other hand, the epoxy resin composition will be high in viscosity and difficult to knead when the thermoplastic resin is dissolved in the epoxy resin composition, possibly leading to difficulty in prepreg production.

It is essential for the component [D] in the first and second epoxy resin compositions to account for 1 part by mass or more and less than 10 parts by mass, preferably 2 parts by mass or more and less than 9 parts by mass, more preferably 4 parts by mass or more and less than 8 parts by mass, and still more preferably 6 parts by mass or more and less than 7 parts by mass, relative to the total quantity of the first and second epoxy resin compositions, which represents 100 parts by mass. If it is less than 1 part by mass, the resulting carbon fiber reinforced composite material will be insufficient in tensile strength in some cases. On the other hand, if it is more than 10 parts by mass, the resulting prepreg will be insufficient in drapability in some cases.

As described above, by adjusting the weight-average molecular weight and the content of the component [D] in the ranges specified above, it becomes possible to obtain a prepreg having high drapability and serving to produce a slit tape prepreg that suffers only a sufficiently decreased amount of build-up of the epoxy resin composition contained in the slit tape prepreg to the guide rolls during the implementation of an automated lay-up method, and shows good laminating performance over a wide lamination temperature range.

When present in the second epoxy resin composition that is contained in the second layer of the prepreg

according to the present invention, the particles that incorporate, as primary component, the thermoplastic resin used as the component [E] for the present invention can work to improve the G' of the second epoxy resin composition without decreasing the value defined by the equation (1). In addition, the prepreg according to the present invention can be cured into a carbon fiber reinforced composite material having a high impact resistance.

It is noted that such particles that incorporate, as primary component, a thermoplastic resin as referred to herein mean those particles in which the thermoplastic resin accounts for the largest proportion by mass and may be thermoplastic resin particles formed only of a thermoplastic resin.

Examples of the thermoplastic resin that can be used in the particles that incorporate, as primary component, the thermoplastic resin used as the component [E] for the present invention include the same various thermoplastic resins listed previously to exemplify the thermoplastic resins that are intended for use after dissolution in epoxy resins. In particular, polyamide particles are particularly preferred because they are so high in toughness that they serve to produce carbon fiber reinforced composite materials having high impact resistance. Of the various polyamide particle materials, polyamide 12, polyamide 6, polyamide 11, polyamide 66, polyamide 6/12 copolymer, and polyamide polymers modified with an epoxy compound into a semi-IPN structure (semi-IPN polyamide) as described in Example 1 of Japanese Unexamined Patent Publication (Kokai) No. HEI 1-104624 can develop particularly high adhesive strength with epoxy resins. Here, IPN stands for interpenetrating polymer network, which is a kind of polymer blend. Crosslinked polymers are used as blend components and the dissimilar crosslinked polymers are partially or fully entangled to form a multiple network structure. A semi-IPN has a multiple network formed of crosslinked and straight-chain polymers. Particles containing a semi-IPN thermoplastic resin as primary component can be produced by, for example, dissolving a thermoplastic resin and a thermosetting resin in a common solvent, mixing them uniformly, and performing reprecipitation etc. The use of particles of an epoxy resin and a semi-IPN polyamideimide serves to produce a prepreg having high heat resistance and high impact resistance.

If particles prepared by further adding an epoxy resin are used as the particles that incorporate a thermoplastic resin as primary component, it is more preferable because the adhesiveness to the epoxy resin composition used as matrix resin increases and serves to produce a carbon fiber reinforced composite material having improved impact resistance. Useful commercial products of such polyamide particles formed by further adding an epoxy resin include SP-500, SP-10, TR-1, and TR-2 (all manufactured by Toray Industries, Inc.); and Orgasol (registered trademark) 1002D, Orgasol (registered trademark) 2001UD, Orgasol (registered trademark) 2001EXD, Orgasol (registered trademark) 2002D, Orgasol (registered trademark) 3202D, Orgasol (registered trademark) 3501D, and Orgasol (registered trademark) 3502D (all manufactured by Arkema).

In regard to the shape of such particles containing thermoplastic resin as primary component, they may be spherical, nonspherical, porous, needle-like, whisker-like, or flaky, of which spherical particles are preferred because spherical particles do not work to reduce the flow property of epoxy resin and accordingly can maintain good carbon fiber impregnating property and also because the degree of delamination caused by local impact is further reduced in drop impact (or local impact) test of carbon fiber reinforced composite material so that, in the case where a stress is applied to carbon fiber reinforced composite material after undergoing an impact, there will be a decreased number of delaminated portions resulting from the local impact and acting as starting points of destruction attributed to stress concentration, thereby making it possible to obtain a carbon fiber reinforced composite material having high impact resistance.

Furthermore, some types of particles containing thermoplastic resin as primary component have a higher modification effect because they are not dissolved in the matrix resin during the curing step. The feature of not being dissolved during the curing step is also effective for maintaining fluidity of the resin during the curing step and improving the impregnating property and therefore, particles that are not dissolved in the matrix resin during the curing step are preferred for use as the aforementioned particles containing thermoplastic resin as primary component.

To make a particular resin interlayer tougher selectively in a carbon fiber reinforced composite material obtained by curing a prepreg according to the present invention, it is necessary that the particles containing the thermoplastic resin of the component [E] as primary component remain in the surface region of the prepreg during the prepreg preparation step whereas the particles containing the thermoplastic resin of the component [E] as primary component remain in the resin interlayer during the heat and pressure step for curing the laid-up prepreg plies, and for this, the component [E] preferably has a volume-average particle diameter in the range of 5 to 50 μm, more preferably in the range of 7 to 40 μm, and still more preferably in the range of 10 to 30 μm. Here, the term "resin interlayer" means a resin layer that contains the components [B] to [E] but is free of the component [A] and exists between two mutually adjacent carbon fiber-containing layers in the carbon fiber reinforced composite material formed by laying up prepreg piles. If the volume-average particle diameter is adjusted to 5 μm or more, the component [E] will be prevented from entering into the bundles of carbon fibers of the component [A] in the mutually adjacent carbon fiber-containing layers when both sides of the primary prepreg are impregnated with the second epoxy resin composition in the prepreg preparation step or in the heat and pressure step for molding laid-up prepreg plies, thus making it possible for the component [E] to remain in the resin interlayer in the resulting carbon fiber reinforced composite material. On the other hand, if the volume-average particle diameter is adjusted to 50 μm or less, the matrix resin layer at the prepreg surface will have an appropriate thickness, thereby allowing the carbon

fibers of the component [A] in the resulting carbon fiber reinforced composite material to have an appropriate volume content.

Here, the volume-average particle diameter is determined by observing the component [E] at a magnification of 1,000 or more under a digital microscope (VHX-5000, manufactured by Keyence Corporation), selecting 100 particles at random, measuring the diameter of the circumscribed circle about each particle to represent its particle size, and making a calculation by the equation (2).

[Mathematical formula 2]

$$Dv = \sum_{i=1}^{n} Di^4 \Big/ \sum_{i=1}^{n} Di^3 \qquad \text{equation (2)}$$

Here, Di, n, and Dv are the particle diameter of each particle, the number of measurements (100), and the volume-average particle diameter, respectively.

For the present invention, rubber particles may be further incorporated in addition to the components [A] to [E] in order to further enhance the high impact resistance of the carbon fiber reinforced composite material obtained by curing the prepreg according to the present invention.

The rubber particles to be used for the present invention may be of a generally known natural rubber or synthetic rubber. In particular, particles of crosslinked rubber that is insoluble in thermosetting resins are preferred. If it is insoluble in the thermosetting resin used, its cured product will have nearly the same heat resistance as that of the cured product of the thermosetting resin free of the particles. Furthermore, changes in morphology will not occur depending on the difference in the type or curing conditions of the thermosetting resin and therefore, the cured thermosetting resin will have stable physical properties such as toughness. Useful crosslinked rubber particles include, for example, particles of a copolymer with one or a plurality of unsaturated compounds and particles produced through copolymerization between one or a plurality of unsaturated compounds and crosslinkable monomers.

Examples of such unsaturated compounds include aliphatic olefins such as ethylene and propylene; aromatic vinyl compounds such as styrene and methyl styrene; conjugated diene compounds such as butadiene, dimethyl butadiene, isoprene, and chloroprene; unsaturated carboxylates such as methyl acrylate, propyl acrylate, butyl acrylate, methyl methacrylate, propyl methacrylate, and butyl methacrylate; and vinyl cyanides such as acrylonitrile. Furthermore, it may also be effective to use compounds having a carboxyl group, epoxy group, hydroxyl group, amino group, amide group, or other functional groups that are reactive with epoxy resins or curing agents. Useful ones include acrylic acid, glycidyl methacrylate, vinyl phenol, vinyl aniline, and acrylamide.

Useful examples of such crosslinkable monomers include compounds having a plurality of polymerizable double bonds in one molecule, such as divinylbenzene, diallylphthalate, and ethylene glycol dimethacrylate.

These particles can be produced by various generally known conventional polymerization methods including, for example, emulsion polymerization and suspension polymerization. A typical emulsion polymerization process includes a step for emulsion polymerization of an unsaturated compound, crosslinkable monomers, etc., in the presence of a radical polymerization initiator such as peroxide, a molecular weight adjustor such as mercaptan and halogenated hydrocarbon, and an emulsifier, a step for adding a reaction terminator to stop the polymerization reaction after reaching a predetermined degree of polymerization conversion, and a subsequent step for water vapor distillation to remove unreacted monomers out of the polymerization system, thereby providing a latex of a copolymer. Water is removed from such a latex obtained by emulsion polymerization to provide crosslinked rubber particles.

Examples of such crosslinked rubber particles include crosslinked acrylonitrile butadiene rubber particles, crosslinked styrene butadiene rubber particles, acrylic rubber particles, and core shell rubber particles. Core shell type rubber particles are in the form of spherical polymer particles in which the central part and the surface part are of different polymers and may have a simple two phase structure consisting of a core phase and a single shell phase or a multiple layered structure (multiple core shell rubber particles) having a plurality of shell phases and consisting of, for example, a soft core, hard shell, soft shell, and hard shell located in this order from center to surface. Here, a soft phase means a phase of a rubber as described above whereas a hard one means a phase of a resin that is not rubber.

Specific examples of such crosslinked rubber particles include commercial products of crosslinked acrylonitrile butadiene rubber (NBR) particles such as XER-91 (manufactured by JSR Corporation) and DuoMod (registered trademark) DP5045 (manufactured by Zeon Corporation). For crosslinked styrene butadiene rubber (SBR) particles, specific examples include XSK-500 (manufactured by JSR Corporation). Specific examples of acrylic rubber particles include Metabrane (registered trademark) W300A and Metabrane (registered trademark) W450A (both manufactured by Mitsubishi Chemical Corporation), and specific examples of core shell type rubber particles include Stafiloid AC3832 and Stafiloid AC3816N (both manufactured by Ganz Chemical Co., Ltd.), Metabrane (registered trademark) KW-4426 (manufactured by Mitsubishi Chemical Corporation), PARALOID (registered trademark) EXL-2611, PARALOID (registered trademark) EXL-3387, PARALOID (registered trademark) EXL-2655, and PARALOID (registered trademark) EXL-2314 (all manufactured by Rohm and Haas Company), and Stafiloid AC-3355, Stafiloid TR-2105, Stafiloid TR-2102, Stafiloid TR-2122, Stafiloid IM-101, Stafiloid IM-203, Stafiloid IM-301, and Stafiloid IM-401 (all manufactured by Ganz Chemical Co., Ltd.). These different types of crosslinked rubber particles may be used singly or as a combination of two or more thereof.

The epoxy resin composition in the prepreg according to the present invention may contain a coupling agent, thermosetting resin particles, and inorganic fillers such as silica gel, carbon black, clay, carbon nanotube, carbon particles, and metal powder, unless they impair the advantageous effect of the invention. Examples of carbon black include channel black, thermal black, furnace black, and ketjen black.

Carbon fiber reinforced composite materials suffer a large deterioration in mechanical strength as the environment temperature heightens above the glass transition temperature of the carbon fiber composite materials, and accordingly, glass transition temperature is often used as an indicator of the heat resistance of carbon fiber reinforced composite materials.

Since, as one of its objects, the present invention aims to obtain a carbon fiber reinforced composite material having high heat resistance, a carbon fiber reinforced composite material produced by curing the prepreg at 180°C for 2 hours preferably has a glass transition temperature of 190°C or more, more preferably 195°C or more, and still more preferably 200°C or more, as determined by dynamic mechanical analysis (DMA).

In addition, carbon fiber reinforced composite materials are required to have high heat resistance under water absorbing conditions when used for structural parts of aircraft etc. Since, as one of its objects, the present invention aims to obtain a carbon fiber reinforced composite material having high heat resistance under water absorbing conditions, a carbon fiber reinforced composite material produced by curing the prepreg at 180°C for 2 hours preferably have a glass transition temperature of 160°C or more, more preferably 165°C or more, and still more preferably 170°C or more, as determined by dynamic mechanical analysis (DMA) after immersion in boiling water for 48 hours at 1 atm.

The glass transition temperature of a carbon fiber reinforced composite material or its glass transition temperature under water absorbing conditions can be determined by, for example, the procedure described below. Specifically, 10 cm $\times$ 10 cm sheets are cut out of a one directional prepreg first and six of them are laminated in one direction, subjected to vacuum bag molding, and cured in an autoclave for 2 hours at a temperature of 180°C and a pressure of 6 kg/cm$^2$, thereby providing a one directional carbon fiber reinforced composite material (one directional reinforced material). Then, a test piece having a width of 12.7 mm and a length of 35 mm is cut out of this one directional reinforced material and subjected to DMA analysis according to ASTM 7028 using DMA Q800 (manufactured by TA Instruments) in the single cantilever mode at a temperature ramp rate of 5°C/min and a frequency of 1 Hz to develop a curve showing changes in the storage elastic modulus E', in which the temperature at the intersection point between the tangent to the curve in the glassy state and the tangent thereto in the transitional state was adopted as the glass transition temperature. The glass transition temperature under water absorbing conditions is determined by carrying out the above DMA analysis after immersing the test piece in boiling water for 48 hours at 1 atm.

For the prepreg according to the present invention, to develop the property of forming a slit tape prepreg that suffers only a sufficiently decreased amount of build-up of the epoxy resin composition contained in the slit tape prepreg to the guide rolls during the implementation of an automated lay-up method, it is essential for the second epoxy resin composition contained in the second layer in the prepreg according to the present invention to have a G' at 25°C of 8.0 $\times 10^5$ to 6.0 $\times 10^6$ Pa as measured at an angular frequency 3.14 rad/s. It is preferably in the range of 1.2 $\times 10^6$ to 5.0 $\times 10^6$ Pa, more preferably in the range of 1.6 $\times 10^6$ to 4.0 $\times 10^6$ Pa. In an automated lay-up method, the upper limit temperature in the steps in which the slit tape prepreg travels on the guide rolls is near room temperature and therefore, if the G' at 25°C is in the aforementioned range, the second epoxy resin composition will not be deformed easily and its contact area with the guide rolls will not increase easily when the epoxy resin composition comes in contact with the guide rolls during the implementation of the automated lay-up method. Furthermore, the coagulation force of the epoxy resin composition is so large that interface destruction between the epoxy resin composition and guide rolls will occur more easily, rather than cohesive failure of the epoxy resin composition, which serves to prevent the resin from coming out. If the G' is less than 8.0 $\times 10^5$ Pa, the second epoxy resin composition will be deformed easily and its contact area with the guide rolls will increase easily when the epoxy resin composition comes in contact with the guide rolls during the implementation of the automated lay-up method. Accordingly, a larger amount of the epoxy resin composition will be deposited, resulting in an increase in required cleaning frequency and a decrease in productivity. In addition, an excessive tackiness will occur due to the low G' to cause a deterioration in rework efficiency for lamination and resin migration, leading to a shortening of the period in which a required tackiness is maintained (occasionally referred to as tack life). If it is larger than 1.0 $\times 10^6$ Pa, resin powder will occur on the surface of the slit tape as it is abraded by the guide rolls, and cleaning will become necessary to remove the resin powder that comes out, thereby causing not only a decrease in productivity, but also a deterioration in drapability and a decrease in handleability.

The G' at 25°C measured at an angular frequency of 3.14 rad/s as referred to herein is determined by taking measurements using a dynamic viscoelasticity measuring apparatus (for example ARES, manufactured by TA Instruments) equipped with parallel plates, which is operated in the auto-strain mode under the conditions of a measurement onset temperature of 10°C, a parallel plate diameter of 8 mm, a parallel plate gap of 1 mm, an angular frequency of 3.14 rad/s, and a temperature ramp rate of 1.7°C/min to give a G' curve, from which the G' value is read at 25°C. It is noted that the G' read at any temperature on the G' curve is referred to as the G' at that temperature.

The G' at a desired temperature as measured at an angular frequency of 3.14 rad/s may be determined by measuring the storage elastic modulus E' by the nanoindentation technique, which will be described later, and converting the measurement by the equation (3) given below.
[Mathematical formula 3]

$$G' = 0.0024 \times E' \quad \text{equation (3)}$$

The procedure for measuring the storage elastic modulus E' by the nanoindentation technique is described below. A high accuracy microminiature hardness tester equipped with a diamond triangular pyramid indenter (for example, Triboindenter TI950, manufactured by Hysitron) is used. When a G' value at a particular temperature is needed, the indenter is brought into contact with a resin sample or a prepreg sample at that temperature under a static load that causes an indentation depth of about 1 μm. Then, dynamic measurement is performed for about 3 seconds at a frequency of 120 Hz, followed by removing the load. The measuring system-based stiffness K is calculated from the vibration amplitude of displacement, phase difference, and excited vibration amplitude that are determined in the above measurement, and the storage elastic modulus E' is calculated from the relation of K and the composite elastic modulus values of the indenter and sample.

In addition, the second epoxy resin composition may be sampled by the method described below, followed by performing the above measurement of the G' or performing the measurements relating to the second epoxy resin composition described later. Specifically, a 10 cm × 10 cm sample is cut out of a prepreg, and an about 5 mm portion of each of the four sides is masked with a piece of heat resistant tape. The sample was then sandwiched between two sheets, upper and lower, of Lumirror (registered trademark) S10 #188 (manufactured by Toray Industries, Inc.), heated on a hot plate at 70°C for 30 seconds, immediately pressed by using one back and forth motion of a 2 kg pressing roller, peeling off the Lumirror (registered trademark) sheets from the prepreg, and scraping off the resin transferred to the Lumirror (registered trademark) sheets using a spatula etc. This procedure is repeated until an amount required for measurement is sampled from the second epoxy resin composition.

As a result of intensive studies, the inventors found that since in an automated lay-up method, lamination of a slit tape prepreg is performed generally in the vicinity of 40°C, the deformability of the second epoxy resin composition at the lamination temperature, that is, the G' value of the second epoxy resin composition at 40°C, is of importance when discussing the stickiness of the slit tape prepreg. To sufficiently reduce the build-up of the epoxy resin composition to the guide rolls and at the same time ensure sufficient adhesiveness between prepreg plies over a wide lamination temperature range, it is essential for the second epoxy resin composition contained in the second layer of the prepreg according to the present invention to give a value of 0.085 or more as calculated by the equation (1). It is preferably 0.090 or more, and more preferably 0.095 or more. In the case where this value is less than 0.085 and at the same time sufficient processability is maintained at room temperature, sufficient adhesiveness may not develop between prepreg plies in the vicinity of 30°C to 40°C, possibly making it difficult to perform lamination using an automated lay-up device. On the other hand, its upper limit is preferably 0.200 or less. It is more preferably 0.180 or less, and still more preferably 0.160 or less. If this value is more than 0.200, desirable adhesiveness between prepreg plies can be achieved only in a limited lamination temperature range in some cases.

Furthermore, to sufficiently reduce the build-up of the epoxy resin composition to the guide rolls and at the same time further improve the adhesiveness between prepreg piles over a wide lamination temperature range, it is preferable for the second epoxy resin composition according to the present invention to give a value of 0.085 or more as calculated by the equation (4) given below at any temperature in the desirable lamination temperature range of 35°C to 50°C. It is more preferably 0.090 or more, and still more preferably 0.095.
[Mathematical formula 4]

$$\frac{\log_{10}(G'\ (\text{Pa})\ \text{at}\ 25^\circ\text{C}) - \log_{10}(G'\ (\text{Pa})\ \text{at arbitrary lamination temperature})}{\text{arbitrary lamination temperature}\ (^\circ\text{C}) - 25} \quad \text{equation (4)}$$

In this instance, it is preferable for the second epoxy resin composition at a lamination temperature to have a G' in the range of $4.0 \times 10^3$ to $1.6 \times 10^5$ Pa. It is more preferably in the range of $5.0 \times 10^3$ to $1.2 \times 10^5$ Pa, and still more preferably in the range of $6.0 \times 10^3$ to $9.0 \times 10^4$. If the second epoxy resin composition at a lamination temperature has a G' in the above range, it serves to realize desired adhesiveness between prepreg plies.

The prepreg according to the present invention is a composite of an epoxy resin composition and carbon fibers. The prepreg according to the present invention is produced by the hot-melt process to ensure the development of the advantageous effect of the invention. The hot-melt process is a solvent-free technique designed for the impregnation of carbon fibers with an epoxy resin composition that is heated to decrease its viscosity. The hot-melt process can be carried out by some different procedures including a procedure in which a matrix resin heated to decrease the viscosity is used for direct impregnation of carbon fibers and a procedure in which release paper sheets laid with resin film are prepared by coating release paper etc. with a matrix resin and then used to cover either or both surfaces of a carbon fiber sheet, followed by applying heat and pressure to ensure the impregnation of the carbon fiber sheet with the matrix resin. The above procedures are generally intended to provide sheet-like prepregs, but a carbon fiber strand may be directly immersed in a resin composition having a decreased viscosity to provide tape-like or thread-like prepregs.

The prepreg according to the present invention has a structure incorporating a first layer composed mainly of the component [A] and a first epoxy resin composition that contains the components [B] to [D] but is substantially free of the component [E] and a second layer composed mainly of a second epoxy resin composition that contains the components [B] to [E] and disposed adjacent to each surface of the first layer, and furthermore, the second epoxy resin composition contained in the second layer has features as described above. Accordingly, properties necessary to realize both processability and laminating performance in an automated lay-up device can be imparted to a prepreg in an industrially advantageous manner without any limitations imposed by the types and contents of the components of the matrix resin.

The "first layer composed mainly of the component [A] and a first epoxy resin composition" mainly consists of the component [A] and a first epoxy resin composition and is characterized in that, when observing a cross section of the prepreg, the component [E] present in the first layer accounts for less than 1% by mass relative to the total quantity of the component [E] present in the prepreg, which accounts for 100% by mass. Specifically, the term "substantially free of the component [E]" means that the component [E] present in the first layer accounts for less than 1% by mass relative to the total quantity of the component [E] present in the prepreg, which accounts for 100% by mass, and therefore, the component [E] may be present in an extremely small amount.

The boundary between the first layer and the second layer is determined based on the definition of the interface between the first layer and the second layer described later.

Furthermore, the "second layer containing a second epoxy resin composition" is characterized in that, when observing a cross section of the prepreg, the component [E] present in the second layer accounts for 99% by mass or more relative to the total quantity of the component [E] present in the prepreg, which accounts for 100% by mass.

In addition, the term "a structure incorporating the second layer disposed on each surface of the first layer" referred to herein means a sandwich structure in which the first layer is sandwiched between two (upper and lower) second layers. Here, the interface between the first layer and the second layer may be either distinctly visible or not. In the case where the interface between the first layer and the second layer is not distinctly visible, the quantity of the component [E] in each surface is examined and, of all faces that are parallel to the surface in which it accounts for 99% by mass to 100% by mass relative to the total quantity, i.e. 100% by mass, the one that is adjacent to a second layer and has the smallest content of the component [A] is defined as the interface.

A cross section of a prepreg can be observed by, for example, the method described below. Specifically, a prepreg is interposed between two polytetrafluoroethylene resin plates having smooth surfaces and brought into strong contact with them, and then the temperature is increased gradually so as to reach a curing temperature in seven days to ensure gelation and curing, thus producing a cured prepreg plate. This cured prepreg is observed at a magnification of 200 or more under a digital microscope (VHX-5000, manufactured by Keyence Corporation).

The proportion of the component [E] that exists can be determined by, for example, the method described below. In a cross-sectional photograph obtained from cross-sectional observation of a prepreg, the proportion is calculated from the total area of the component [E] in the entire prepreg and the area of the component [E] in a particular region. Here, total area of the component [E] can be determined from a cross-sectional photograph by a generally known image analysis method or by cutting out the portions of the component [E] and converting their mass. In the case where it is difficult to distinguish the component [E] dispersed in the resin in the photograph, the method of dyeing the component [E] is adoptable.

In addition, for the prepreg according to the present invention, it is preferable that the first epoxy resin composition has a viscosity at 25°C in the range of $1.0 \times 10^3$ to $1.0 \times 10^5$ Pa·s in order to allow the prepreg to have an appropriate degree of drapability. If the viscosity is less than $1.0 \times 10^3$ Pa·s, the first epoxy resin composition will penetrate easily into the central portion of the prepreg to shorten the tack life whereas if the viscosity is more than $1.0 \times 10^5$ Pa·s, the drapability will be decreased. From such a point of view, it is preferable for the first epoxy resin composition to have a viscosity at 25°C in the range of $2.0 \times 10^3$ to $2.0 \times 10^4$ Pa· s. Furthermore, from the viewpoint of drapability and tack life, the region that contains the first layer of the prepreg according to the present invention preferably accounts for 30% to 90%, more preferably 40% to 80%, and still more preferably 50% to 70%, of the average thickness of the prepreg.

A good method to incorporate the first epoxy resin composition in the first layer is to prepare in advance a resin film-coated release paper sheet (hereinafter occasionally referred to simply as resin film) containing a piece of release

paper etc. coated with a first epoxy resin composition, then apply such a resin film-coated release paper sheet to either or both surfaces of a carbon fiber sheet with the resin film facing the carbon fiber sheet, heat them under pressure to impregnate the carbon fiber with the epoxy resin composition to provide a primary prepreg that serves as base of the first layer, and then impregnate both surfaces of the primary prepreg with the second epoxy resin composition that acts mainly as base of the second layer as in the case of the primary prepreg preparation, thereby providing a prepreg. As another method to produce a prepreg by impregnation with the second epoxy resin composition, a resin film containing a piece of release paper etc. coated with the second epoxy resin composition may be prepared in advance, followed by applying such a resin film-coated release paper sheet to both surfaces of a carbon fiber sheet with the resin film facing the carbon fiber sheet, and heat them under pressure to provide a prepreg. In this instance, the primary prepreg may be wound up once and then unwound while being impregnated with the second epoxy resin composition, or the preparation of a primary prepreg by impregnating a carbon fiber sheet with the first epoxy resin composition may be immediately followed by its impregnation with the second epoxy resin composition. A prepreg having a structure as described above can develop high drapability since the first epoxy resin composition present in the first layer has a sufficiently low viscosity.

From the viewpoint of the processability in the resin film preparation step, it is preferable for the second epoxy resin composition to have a viscosity at 85°C of 10 to 300 Pa·s. It is more preferably 20 to 200 Pa·s, and still more preferably 30 to 100 Pa·s. If the viscosity at 85°C is less than 10 Pa·s, it is not preferred because, although it ensures good impregnating property, the resin flows so easily that the resin will flow out from the edge of the release paper sheet when adding a resin film-coated release paper sheet and compressing the layers to form a prepreg, which will result in deterioration in processability for prepregging. If the viscosity at 85°C is more than 300 Pa·s, it is not preferred because the processability tends to deteriorate, possibly making it impossible to obtain a uniform resin film.

The viscosity at 25°C or 85°C as referred to herein is determined by taking measurements using a dynamic viscoelasticity measuring apparatus (for example, ARES, manufactured by TA Instruments) equipped with parallel plates, which is operated in the auto-strain mode under the conditions of a measurement onset temperature of 20°C, a parallel plate diameter of 40 mm, a parallel plate gap of 1 mm, an angular frequency of 3.14 rad/s, and a temperature ramp rate of 1.7°C/min to give a temperature-viscosity curve, from which the viscosity at 25°C or 85°C is read.

Alternatively, the prepreg according to the present invention may be produced in a single stage impregnation step, instead of the two stage impregnation step described above. For example, resin films of the second epoxy resin are prepared first, and then the resin films are applied to both sides of a carbon fiber sheet, followed by heating and pressing them to achieve the impregnation of the carbon fiber with the epoxy resin composition, thus providing a prepreg. In this instance, the component [E] has a volume-average particle diameter in the range of 5 to 50 μm and accordingly, the component [E] is prevented from entering into the bundles of carbon fibers of the component [A], thus providing a prepreg having a structure incorporating the first layer composed mainly of the component [A] and the first epoxy resin composition that contains the components [B] to [D] but is substantially free of the component [E] and the second layer composed mainly of the second epoxy resin composition that contains the components [B] to [E] and disposed on each surface of the first layer.

For the prepreg according to the present invention, the carbon fiber sheet preferably has a fiber areal weight of 100 to 1,000 g/m$^2$. If the fiber areal weight of the carbon fiber sheet is less than 100 g/m$^2$, a larger number of sheets have to be stacked to ensure a required thickness when molding a carbon fiber reinforced composite material, possibly leading to troublesome lamination operation. On the other hand, if it is more than 1,000 g/$^2$, the prepreg tends to deteriorate in drapability. The fiber mass content is preferably 40 to 90% by mass, and more preferably 50 to 80% by mass. This is preferable because void generation in the moldings is depressed and good mechanical property of carbon fiber is developed. Depending on the molding process, this is preferred also because heat generation from the resin being cured can be controlled while molding large-size parts, thus permitting the production of uniform moldings.

Regarding the structure of the prepreg according to the present invention, it may be either a one directional prepreg or a woven fabric prepreg.

The prepreg according to the present invention can be processed into tapes or threads by dividing it to a required width by a generally known method. Such tape-like or thread-like prepregs can be applied suitably to an automated lay-up device. For example, slit tape prepregs that are produced by slitting the prepreg according to the present invention in the fiber direction by a slitting technique as described later tend to have accurately controlled width and can be applied suitably to an automated lay-up method.

Such slit tape prepregs preferably have a width of 3 to 150 mm, but preferably have a width of 3 to 13 mm when used to produce parts having complicated shapes by the AFP method. Furthermore, narrow slit tape prepregs having a width of 3 to 7 mm are more preferred.

Cutting of a prepreg can be achieved by using a generally known cutter. Examples include carbide blade cutter, ultrasonic cutter, and round blade cutter.

The carbon fiber reinforced composite material according to the present invention can be produced by laminating sheets of the prepreg or slit tape prepreg according to the present invention in an appropriate shape and heating them to cure the resin. It is preferable to press them during the molding step from the viewpoint of depressing the formation of voids

and obtaining uniformly cured products. Here, the application of heat and pressure can be carried out by using a generally known method such as autoclave molding method, press forming method, bag molding method, wrapping tape method, and internal pressure molding.

Carbon fiber reinforced composite materials produced by the above molding methods preferably have glass transition temperatures in the range of 100°C to 250°C from the viewpoint of processability of the molded materials in post-treatment steps. In the case of aircraft parts, in particular, the glass transition temperature is preferably in the range of 170°C to 250°C in order to permit their application to parts for use at high temperatures.

EXAMPLES

The present invention will now be illustrated in detail with reference to Examples, but it should be understood that the invention is not construed as being limited thereto. Preparation and evaluation of prepreg samples in Examples were performed in an atmosphere at a temperature of 23°C±2°C and relative humidity of 50% unless otherwise specified. Hereinafter, the number of measuring runs n is one (n = 1) unless specified otherwise.

Component [A] <carbon fiber>

- Torayca (registered trademark) T800S-24000 (carbon fiber having 24,000 filaments, tensile strength of 5.9 GPa, tensile modulus of 294 GPa, and tensile elongation of 2.0%, manufactured by Toray Industries, Inc.)

Component [B] <epoxy resin>

[Bisnaphtalene type epoxy resin]

- EPICLON (registered trademark) HP-4770 (bisphenol naphthalene type epoxy resin with di-functionality, manufactured by DIC Corporation, epoxy equivalent weight 205 g/eq) corresponding to the component [B1]
- EPICLON (registered trademark) HP-4700 (bisphenol naphthalene type epoxy resin with tetra-functionality, manufactured by DIC Corporation, epoxy equivalent weight 165 g/eq) corresponding to the components [B1] and [B4]

[Glycidyl amine type epoxy resin corresponding to the components [B2], [B4], and [B6]]

- Araldite (registered trademark) MY721 (tetraglycidyl diaminodiphenyl methane, manufactured by Huntsman Corporation, epoxy equivalent weight 114 g/eq)
- SUMI-EPOXY (registered trademark) ELM434 (tetraglycidyl diaminodiphenyl methane, manufactured by Sumitomo Chemical Co., Ltd., epoxy equivalent weight 120 g/eq)

[Glycidyl ether type epoxy resin corresponding to the component [B6]]

- jER (registered trademark) 827 (bisphenol A type epoxy resin, manufactured by Mitsubishi Chemical Corporation, epoxy equivalent weight 185 g/eq)
- jER (registered trademark) 1004AF (bisphenol A type epoxy resin, manufactured by Mitsubishi Chemical Corporation, epoxy equivalent weight 925 g/eq)
- jER (registered trademark) 807 (bisphenol F type epoxy resin, manufactured by Mitsubishi Chemical Corporation, epoxy equivalent weight 170 g/eq)
- jER (registered trademark) 4004P (bisphenol F type epoxy resin, manufactured by Mitsubishi Chemical Corporation, epoxy equivalent weight 910 g/eq)

[Aminophenol type epoxy resin corresponding to the components [B2], [B4], and [B5]]

- jER (registered trademark) 630 (triglycidyl-p-aminophenol, manufactured by Mitsubishi Chemical Corporation, epoxy equivalent weight 100 g/eq)

[Epoxy resin containing one or more ring structures having at least four members and at the same time containing at

least one glycidyl amine group or glycidyl ether group directly connected to a ring structure]

- Denacol (registered trademark) EX-731 (N-glycidylphthalimide, manufactured by Nagase ChemteX Corporation) corresponding to the component [B3]
- GAN (N-diglycidyl aniline, manufactured by Nippon Kayaku Co., Ltd.) corresponding to the components [B3] and [B6]
- TOREP (registered trademark) A-204E (diglycidyl-N-phenoxy aniline, manufactured by Toray Fine Chemicals Co., Ltd.) corresponding to the components [B3] and [B6]

[Ladder type silsesquioxane containing epoxy ring structure corresponding to epoxy resins other then the components [B1] to [B6]]

- SE-01GM (manufactured by Nagase ChemteX Corporation)

Component [C] <curing agent>

- SEIKACURE S (4,4'-diaminodiphenyl sulfone, manufactured by Seika K.K., active hydrogen equivalent weight 62 g/eq)
- 3,3'-DAS (3,3'-diaminodiphenyl sulfone, manufactured by Mitsui Chemicals, Inc., active hydrogen equivalent weight 62 g/eq)

Component [D] <thermoplastic resin>

- Sumika Excel (registered trademark) PES5003P (polyethersulfone, manufactured by Sumitomo Chemical Co., Ltd., weight-average molecular weight 47,000 g/mol, Tg=225°C).

Component [E] <particles containing thermoplastic resin as primary component>

P olyamide particles containing TROGAMID (registered trademark) CX7323 and VESTAMID (registered trademark) EX9200 prepared by the method described below (hereinafter referred to simply as polyamide particles)

In a 10 L stainless steel autoclave, 4.2 parts by mass of TROGAMID (registered trademark) (manufactured by Daicel-Evonik), 1.8 parts by mass of Vestamid (registered trademark) EX9200 (manufactured by Daicel-Evonik), 10 parts by mass of GOHSENOL (registered trademark) GM-14 (manufactured by Nippon Synthetic Chemical Industry Co., Ltd.), and 84 parts by mass of N-methyl- 2-pyrrolidone were fed, and nitrogen substitution was performed to 99 vol% or more, followed by heating up to 180°C and stirring for 5 hours to dissolve the materials. In this step, the calculated oxygen concentration was 1% or less. Subsequently, 60 parts by mass of ion exchanged water was supplied through a liquid supply pump and dropped at a rate of 0.5 part by mass/min. After completing the addition of water, the temperature was lowered while continuing stirring, and the resulting suspension liquid was filtrated, followed by reslurry washing with 400 parts by mass of ion-exchanged water, filtration, and suction drying at 80°C for 10 hours to produce white powder with a yield of 95%. The resulting powder was observed by scanning electron microscopy and found to be perfectly spherical fine particles with a volume-average particle diameter of 15 μm.

(1) Preparation of epoxy resin composition

Epoxy resins of the components [B1] to [B6] and thermoplastic resins of the component [D] in the amounts and proportions given in Tables 1 to 6 were fed in a kneader and heated up to 150°C while kneading, followed by stirring for 1 hour so that the component [D] was dissolved to form a transparent viscous liquid. This liquid was allowed to cool to 100°C while kneading and then a curing agent of the component [C] was added, followed by additional kneading to provide a first epoxy resin composition.

Elsewhere, epoxy resins of the components [B1] to [B6] and thermoplastic resins of the component [D] in the amounts and proportions given in Tables 1 to 6 were fed in a kneader and heated up to 150°C while kneading, followed by

stirring for 1 hour so that the component [D] was dissolved to form a transparent viscous liquid. This liquid was allowed to cool to 100°C while kneading and the component [E] was added, followed by kneading. Then the component [C] was added, followed by additional kneading to provide a second epoxy resin composition containing the component [E].

(2) Measurement of storage elastic modulus G' and viscosity of second epoxy resin composition

The G' of the second epoxy resin composition was determined by taking measurements at increasing temperatures using a dynamic viscoelasticity measuring apparatus (ARES, manufactured by TA Instruments) equipped with parallel plates with a diameter of 8 mm, which was operated in the auto-strain mode under the conditions of a parallel plate gap of 1 mm, an angular frequency of 3.14 rad/s, a measurement onset temperature of 10°C, and a temperature ramp rate of 1.7°C/min. In addition, the viscosity was measured by the same procedure as for G' except for mounting parallel plates with a diameter of 40 mm and adopting a measurement onset temperature of 20°C. Of the resulting measurements, the value of G' read at 25°C and the value of viscosity read at 85°C are shown in Tables 7 to 12 as representative values.

(3) Preparation of prepregs

For the following Examples, prepregs were prepared as described below. Silicone was spread over a piece of release paper and the first and second epoxy resin compositions prepared in the above paragraph (1) was spread uniformly on top of it to prepare a first resin film and a second resin film. A layer of carbon fibers arranged uniformly in one direction (T800SC-24000, manufactured by Toray Industries, Inc.) was sandwiched between two sheets of the first resin film and heated under pressure using a press roll to provide a primary prepreg containing a carbon fiber layer impregnated with the first epoxy resin composition designed to serve mainly as base for the first layer (carbon fiber mass 190 g/$cm^2$, resin content 24% by mass). After the impregnation with the first epoxy resin composition, both release paper sheets were removed from the primary prepreg. Subsequently, the primary prepreg was sandwiched between two sheets of the second resin film designed to serve mainly as base for the second layer and heated under pressure using a press roll to provide a prepreg containing the primary prepreg impregnated with the second epoxy resin composition (carbon fiber mass 190 g/$cm^2$, resin content 35% by mass). The prepreg resulting here had only one surface covered with release paper.

(4) Measurement of built up resin/fuzz on path line (prepreg processability evaluation)

A prepreg sample was passed at a constant speed through a path narrower than the width of the prepreg so that both edges of the prepreg were abraded, while the amount of resin/fuzz coming out from the prepreg was measured to simulate the build-up of resin to an automated lay-up device, thereby evaluating the prepreg processability of the automated lay-up method.

This evaluation employed a bobbin stand to supply a prepreg, guide rolls to allow the prepreg to travel at predetermined positions, stainless steel blocks to form a path narrower than the width of the prepreg, and a wind-up machine to take up the prepreg.

Pairs of stainless steel blocks with a gap of 6.1 mm between the paired blocks were placed at six positions located at intervals of 100 mm, and a prepreg prepared as described in the above paragraph (3) and slit to a width of 6.35 mm was caused to travel over a distance of 1,500 m at a speed of 20 m/min. Then, the weight of extraneous matter getting built up to the block surfaces during the traveling of the prepreg was measured using an electronic balance. To obtain data to be used in the paragraph (15) "Overall evaluation", the prepreg processability of the automated lay-up method was rated as A to D according to a four stage criterion based on the measured weight of extraneous matter. A sample was rated as A if the weight of extraneous matter was 300 mg or less, rated as B if it was more than 300 mg and 330 mg or less, rated as C if it was more than 330 mg and 360 mg or less, and rated as D if it was more than 360 mg. Here, A represents the highest-level processability whereas D represents insufficient, unacceptable-level processability.

(5) Measurement of built up resin/fuzz on cutter blade (prepreg processability evaluation)

A prepreg was cut continuously and the amount of the built up resin/fuzz on the cutter blade was measured to simulate the build-up of the resin to the automated lay-up device, thereby evaluating the prepreg processability of the automated lay-up method.

A prepreg prepared as described in the above paragraph (3) and slit to a width of 6.35 mm was cut 500 times continuously using the same position of a shear-cut type slitter made of an alloy (SKD11), which consisted mainly of a movable blade moving back and forth and a fixed blade. The weights of the movable blade and fixed blade were measured on an electronic balance before and after the cutting operation and the weight of the resin/fuzz built up to the cutter blades was calculated from the difference in the weights of the blades between before and after the cutting operation. To obtain data to be used in the paragraph (15) "Overall evaluation", the prepreg processability of the automated lay-up method was

rated as A to D according to a four stage criterion based on the calculated weight of resin/fuzz. A sample was rated as A if the weight of resin/fuzz was 1 mg or less, rated as B if it was more than 1 mg and 2 mg or less, rated as C if it was more than 2 mg and 3 mg or less, and rated as D if it was more than 3 mg. Here, A represents the highest-level processability whereas D represents insufficient, unacceptable-level processability.

(6) Preparation of sample for measurement of prepreg peel strength

A prepreg prepared as described in the above paragraph (3), with one surface covered with release paper, was cut in such a manner that the fiber direction coincided with the length direction of the prepreg sample to a size of 50 mm × 200 mm or 50 mm × 150 mm.

A prepreg sample of 50 mm × 150 mm was fixed to a stainless steel plate of 50 mm × 150 mm × 1.5 mm thickness using double-sided tape. This fixation was done in such a manner that the prepreg surface not covered with release paper was in contact with the double sided tape. Then, the release paper was removed while leaving its 10 mm end portion measured in the length direction of the prepreg sample to prepare a lower side measurement sample.

Then, a prepreg sample of 50 mm × 200 mm, held with the release paper covered side up, was put on the lower side measurement sample while aligning it with the release paper-free end of the lower side measurement sample in such a manner that it was parallel with the length direction.

In addition, the two prepreg samples were left to stand for 5 minutes in a chamber at a humidity of 25% RH and a temperature 35°C and, while keeping them in the chamber, pasted together under a load of 100 N applied by using a stainless steel press roll having a diameter of 30 mm and a width of 75 mm moved at a speed of 500 mm/min to prepare a measurement sample.

Measurement samples were prepared by the same procedure except for changing the temperature to 40°C, 45°C, or 50°C.

(7) Measurement of prepreg peel strength (evaluation of laminating performance of prepreg)

Prepreg peel strength was measured by 90°peeling test according to JIS Z0237 (2009) "Test method for pressure sensitive adhesive tapes and pressure sensitive adhesive sheets". For each measurement sample prepared in the above paragraph (6), an end portion of a prepreg protruding out of the stainless steel plate was fixed to a digital force gauge (ZTA-500N, manufactured by Imada Co., Ltd.) and the sample was left to stand for 5 minutes in a chamber (SH-642, manufactured by Espec Corp.) adjusted to a humidity of 25% RH and the same temperature as used for the measurement sample preparation in the above paragraph (6). After the standing period, while in the chamber, the digital force gauge was pulled up in an angle of 90° to the stainless steel plate at a speed of 500 mm/min using a linear slider (manufactured by Oriental Motor Co., Ltd.) to separate the prepreg piles from each other. The measurements taken from the first 25 mm long portion after the start of separation was omitted and the measurements taken from the next 30 mm long portion were averaged, followed by dividing the average by 50 mm to calculate the peel strength (unit: N/mm) at different temperatures. To obtain data to be used in the paragraph (15) "Overall evaluation", the laminating performance of prepregs was rated as A to D according to a four stage criterion based on the average peel strength determined at 35°C, 40°C, 45°C, and 50°C (hereinafter referred to simply as average peel strength over 35°C to 50°C range). A sample was rated as A if its average peel strength over 35°C to 50°C range was 0.23 N/mm or more, rated as B if it was 0.19 N/mm or more and less than 0.23 N/mm, rated as C if it was 0.15 N/mm or more and less than 0.19 N/mm, and rated as D if it was less than 0.15 N/mm. Here, A represents the highest-level tackiness suitable for lamination by an automated lay-up device whereas D represents an insufficient, unacceptable-level tackiness for lamination by an automated lay-up device.

(8) Preparation of samples for measurement of glass transition temperature of carbon fiber reinforced composite material

Sheets of 10 cm × 10 cm were cut out of the one directional prepreg prepared in the above paragraph (3) and six of them were laminated in one direction, subjected to vacuum bag molding, and cured in an autoclave for 2 hours at a temperature of 180°C and a pressure of 6 $kg/cm^2$, thereby providing a one directional carbon fiber reinforced composite material (one directional reinforced material). Test pieces having a width of 12.7 mm and a length of 35 mm were cut out of this one directional reinforced material to provide samples.

(9) Preparation of samples for measurement of glass transition temperature of carbon fiber reinforced composite material under water absorbing conditions

Sheets of 10 cm × 10 cm were cut out of the one directional prepreg prepared in the above paragraph (3) and six of them were laminated in one direction, subjected to vacuum bag molding, and cured in an autoclave for 2 hours at a

temperature of 180°C and a pressure of 6 kg/cm$^2$, thereby providing a one directional carbon fiber reinforced composite material (one directional reinforced material). Test pieces having a width of 12.7 mm and a length of 35 mm were cut out of this one directional reinforced material and immersed in boiling water for 48 hours at 1 atm.

(10) Measurement of glass transition temperature of carbon fiber reinforced composite material and its glass transition temperature under water absorbing conditions

A sample prepared as described in the above paragraph (8) or (9) was subjected to DMA analysis according to ASTM 7028 using DMA Q800 (manufactured by TA Instruments) in the single cantilever mode at a temperature ramp rate of 5°C/min and a frequency of 1 Hz. The temperature at the intersection point between the tangent to the storage modulus E' curve in the glassy state and the tangent thereto in the transitional state was adopted as the glass transition temperature. To obtain data to be used in the paragraph (15) "Overall evaluation", the heat resistance of a carbon fiber reinforced composite materials was rated as A to D according to a four stage criterion based on glass transition temperature. A sample was rated as A if its glass transition temperature was 200°C or more, rated as B if it was 195°C or more and less than 200°C, rated as C if it was 190°C or more and less than 195°C, and rated as D if it was less than 190°C. Here, A represents the highest-level heat resistance whereas D represents insufficient, unacceptable-level heat resistance.

In addition, the heat resistance under water absorbing conditions was rated as A to D according to a four stage criterion based on glass transition temperature under water absorbing conditions. A sample was rated as A if its glass transition temperature under water absorbing conditions was 166°C or more, rated as B if it was 163°C or more and less than 166°C, rated as C if it was 160°C or more and less than 163°C, and rated as D if it was less than 160°C. Here, A represents the highest-level heat resistance under water absorbing conditions whereas D represents insufficient, unacceptable-level heat resistance under water absorbing conditions.

(11) Definition of 0° direction for carbon fiber reinforced composite material

As specified in JIS K7017 (1999), the fiber direction of a one directional carbon fiber reinforced composite material is defined as its axis direction and the axis direction is defined as the 0° direction whereas the direction perpendicular to the axis is defined as the 90° direction.

(12) Measurement of 0° tensile strength of carbon fiber reinforced composite material

Sheets of a specified size were cut out of the one directional prepreg prepared in the above paragraph (3) and six of them were laminated in one direction, subjected to vacuum bag molding, and cured in an autoclave for 2 hours at a temperature of 180°C and a pressure of 6 kg/cm$^2$, thereby providing a one directional carbon fiber reinforced composite material (one directional reinforced material). A tab was bonded to this one directional reinforced material according to ASTM D3039-00 and a rectangular part having a length of 254 mm and a width of 12.7 mm was cut out to provide a test piece with its length direction being in the 0° direction of the reinforced material. The resulting 0° directional tensile test piece was subjected to tensile test in a -60°C environment according to ASTM D3039-00 using a universal testing machine (Instron (registered trademark) 5565 P8564, manufactured by Instron Japan Co., Ltd.) at a testing rate of 1.27 mm/min. The measuring run was performed five times repeatedly (n = 5). To obtain data to be used in the paragraph (15) "Overall evaluation", the tensile strength of carbon fiber reinforced composite materials at low temperature was rated as A to D according to a four stage criterion based on 0° tensile strength. A sample was rated as A if its 0° tensile strength was 3,300 MPa or more, rated as B if it was 3,200 MPa or more and less than 3,300 MPa, rated as C if it was 3,000 MPa or more and less than 3,200 MPa, and rated as D if it was less than 3,000 MPa. Here, A represents the highest-level tensile strength at low temperature whereas D represents insufficient, unacceptable-level tensile strength at low temperature.

(13) Evaluation of flame retardant property of cured resin

The first epoxy resin composition prepared in the paragraph (1) was deaerated in a vacuum and injected in a mold that was set up using a 1 mm thick Teflon (trademark) spacer so that the resin thickness would be 1 mm, followed by heating in a hot air drier from 30°C at a rate of 1.5°C/min, heat-curing at 180°C for 2 hours, and cooling to 30°C at a rate of 2.5°C/ min to provide a cured epoxy resin having a thickness of 1 mm. A test piece of 10 cm × 10 cm was cut out of the cured epoxy resin and its flame retardant property was evaluated according to ISO 5660 using a cone calorimeter (C3, manufactured by Toyo Seiki Seisaku-sho, Ltd.). The heater temperature was 750°C and the heat radiation rate of the heater was 50 kW/m$^2$. A sample folder was set in the specimen chamber and, after stabilizing the oxygen concentration in the specimen chamber, the shielding plate placed between the sample and the heater was removed, followed by taking measurements of the average heat generation speed (kW/m$^2$), which was started simultaneously with heating.

(14) Evaluation of mechanical property of cured resin

The first epoxy resin composition prepared in the paragraph (1) was deaerated in a vacuum and injected in a mold that was set up using a 2 mm thick Teflon (trademark) spacer so that the resin thickness would be 2 mm, followed by heating in a hot air drier from 30°C at a rate of 1.5°C/min, heat-curing at 180°C for 2 hours, and cooling to 30°C at a rate of 2.5°C/ min to provide a cured epoxy resin having a thickness of 2 mm. A test piece of 10 mm × 60 mm was cut out of the cured epoxy resin and its mechanical property was evaluated based on three-point bending test performed according to JIS K7171 (2006). The flexural modulus was determined based on bending test that was performed using an Instron 5565 type universal tester (manufactured by Instron Corporation) under the conditions of a crosshead speed of 2.5 mm/min, span of 40 mm, indenter diameter of 10 mm, and fulcrum diameter of 4 mm. The measuring run was performed five times repeatedly (n = 5).

(15) Overall evaluation

According to the evaluation results in the above paragraphs (4), (5), (7), and (10) or (12), marks of 3, 2, 1, and -1 points were given to samples rated as A, B, C, and D, respectively, and as an overall evaluation for prepreg's processability and laminating performance and cured prepreg's heat resistance under water absorbing conditions, a prepreg was rated as A if it obtained a total mark of 11 points or more in the four evaluation items, rated as B if it obtained 9 points or more and less than 11 points, rated as C if it obtained 6 points or more and less than 9 points, and rated as D if it obtained less than 6 points. Here, A represents the highest-level balance among the processability, laminating performance, and cured prepreg's heat resistance under water absorbing conditions, whereas D represents insufficient, unacceptable-level balance among these properties.

[Table 1]

| | Example 1 | | Example 2 | | Example 3 | | Example 4 | | Example 5 | | Example 6 | |
|---|---|---|---|---|---|---|---|---|---|---|---|---|
| 1: first epoxy resin composition 2: second epoxy resin composition | 1 | 2 | 1 | 2 | 1 | 2 | 1 | 2 | 1 | 2 | 1 | 2 |
| tetraglycidyl diaminodiphenyl methane (Araldite® MY721) | 60 | 60 | 60 | 60 | 60 | 60 | 70 | 70 | 30 | 30 | 30 | 30 |
| tetraglycidyl diaminodiphenyl methane (SUMI-EPOXY® ELM434) | | | | | | | | | | | | |
| bisnaphtalene type epoxy with di-functionality (EPICLON® HP-4770) | 20 | 20 | 25 | 25 | 30 | 30 | 30 | 30 | | | | |
| bisnaphtalene type epoxy with tetra-functionality (EPICLON® HP-4700) | | | | | | | | | 30 | 30 | 35 | 35 |
| N-glycidyl phthalimide (DENACOL® EX-731) | | | | | | | | | | | | |
| N-diglycidyl aniline (GAN) | | | | | | | | | | | | |

(continued)

| | Example 1 | | Example 2 | | Example 3 | | Example 4 | | Example 5 | | Example 6 | |
|---|---|---|---|---|---|---|---|---|---|---|---|---|
| N,N-diglycidyl-4-phenoxy aniline (TOREP® A-204E) | | | | | | | | | | | | |
| triglycidyl-p-aminophenol (jER® 630) | | | | | | | | | | | | |
| ladder type silsesquioxane (SE-01 GM) | | | | | | | | | | | | |
| bisphenol A type epoxy resin (jER® 827) | | | | | | | | | 30 | 30 | 30 | 30 |
| bisphenol A type epoxy resin (jER® 1004AF) | | | | | | | | | | | | |
| bisphenol F type (jER® 807) | 20 | 20 | 15 | 15 | 10 | 10 | | | 10 | 10 | 5 | 5 |
| bisphenol F type (jER® 4004P) | | | | | | | | | | | | |
| 4,4'-diaminodiphenyl sulfone (SEIKACURE-S) | 44 | 44 | 44 | 44 | 44 | 44 | 44 | 44 | 41 | 41 | 47 | 47 |
| 3,3'-diaminodiphenyl sulfone (3,3'-DAS) | | | | | | | | | | | | |
| polyether sulfone (Sumika Excel® PES5003P) | 6 | 8 | 6 | 7.5 | 6 | 7 | 6 | 7 | 6 | 7.5 | 6 | 7 |
| polyamide particles | | 22 | | 22 | | 22 | | 22 | | 21 | | 21 |
| thermoplastic resin (parts by mass) in 100 parts by mass of second epoxy resin composition | 4.6 | | 4.3 | | 4.0 | | 4.0 | | 4.4 | | 4.0 | |
| thermoplastic resin (parts by mass) in total (100 parts by mass) of first and second epoxy resin compositions in prepreg | 4.2 | | 4.1 | | 4.0 | | 4.0 | | 4.2 | | 4.0 | |

[Table 2-1]

| | Example 7 | | Example 8 | | Example 9 | | Example 10 | | Example 11 | |
|---|---|---|---|---|---|---|---|---|---|---|
| 1: first epoxy resin composition 2: second epoxy resin composition | 1 | 2 | 1 | 2 | 1 | 2 | 1 | 2 | 1 | 2 |
| tetraglycidyl diaminodiphenyl methane (Araldite® MY721) | | | | | | | | | | |
| tetraglycidyl diaminodiphenyl methane (SUMI-EPOXY® ELM434) | 60 | 60 | 60 | 60 | 60 | 60 | 60 | 60 | 45 | 45 |
| bisnaphtalene type epoxy with di-functionality (EPICLON® HP-4770) | | | | | | | | | | |
| bisnaphtalene type epoxy with tetra-functionality (EPICLON® HP-4700) | | | | | | | | | | |
| N-glycidyl phthalimide (DENACOL® EX-731) | 5 | 5 | 10 | 10 | 20 | 20 | 30 | 30 | 25 | 25 |
| N-diglycidyl aniline (GAN) | | | | | | | | | | |
| N,N-diglycidyl-4-phenoxy aniline (TOREP® A-204E) | | | | | | | | | | |
| triglycidyl-p-aminophenol (jER® 630) | | | | | | | | | | |
| ladder type silsesquioxane (SE-01 GM) | | | | | | | | | | |
| bisphenol A type epoxy resin (jER® 827) | 35 | 35 | 30 | 30 | 20 | 20 | 10 | 10 | 30 | 30 |
| bisphenol A type epoxy resin (jER® 1004AF) | | | | | | | | | | |
| bisphenol F type (jER® 807) | | | | | | | | | | |
| bisphenol F type (jER® 4004P) | | | | | | | | | | |
| 4,4'-diaminodiphenyl sulfone (SEIKACURE-S) | 40 | 40 | 40 | 40 | 40 | 40 | 44 | 44 | 40 | 40 |
| 3,3'-diaminodiphenyl sulfone (3,3'-DAS) | | | | | | | | | | |
| polyether sulfone (Sumika Excel® PES5003P) | 6 | 10 | 6 | 10 | 6 | 9 | 6 | 7 | 6 | 9 |
| polyamide particles | | 80 | | 80 | | 80 | | 80 | | 85 |
| thermoplastic resin (parts by mass) in 100 parts by mass of second epoxy resin composition | 4.3 | | 4.3 | | 3.9 | | 3.0 | | 3.8 | |
| thermoplastic resin (parts by mass) in total (100 parts by mass) of first and second epoxy resin compositions in prepreg | 4.2 | | 4.2 | | 4.0 | | 3.6 | | 4.0 | |

[Table 2-2]

| | Example 12 | | Example 13 | | Example 14 | | Example 15 | | Example 16 | |
|---|---|---|---|---|---|---|---|---|---|---|
| 1: first epoxy resin composition 2: second epoxy resin composition | 1 | 2 | 1 | 2 | 1 | 2 | 1 | 2 | 1 | 2 |
| tetraglycidyl diaminodiphenyl methane (Araldite® MY721) | | | | | | | | | | |
| tetraglycidyl diaminodiphenyl methane (SUMI-EPOXY® ELM434) | 60 | 60 | 55 | 55 | 55 | 55 | 50 | 50 | 40 | 40 |
| bisnaphtalene type epoxy with di-functionality (EPICLON® HP-4770) | | | | | | | | | | |
| bisnaphtalene type epoxy with tetra-functionality (EPICLON® HP-4700) | | | | | | | | | | |
| N-glycidyl phthalimide (DENACOL® EX-731) | | | | | | | | | | |
| N-diglycidyl aniline (GAN) | 5 | 5 | 20 | 20 | 30 | 30 | 40 | 40 | 30 | 30 |
| N,N-diglycidyl-4-phenoxy aniline (TOREP® A-204E) | | | | | | | | | | |
| triglycidyl-p-aminophenol (jER® 630) | | | | | | | | | | |
| ladder type silsesquioxane (SE-01 GM) | | | | | | | | | | |
| bisphenol A type epoxy resin (jER® 827) | 35 | 10 | 25 | | 15 | | 10 | | 30 | |
| bisphenol A type epoxy resin (jER® 1004AF) | | 25 | | 25 | | 15 | | 10 | | 30 |
| bisphenol F type (jER® 807) | | | | | | | | | | |
| bisphenol F type (jER® 4004P) | | | | | | | | | | |
| 4,4'-diaminodiphenyl sulfone (SEIKACURE-S) | 45 | 45 | 45 | 45 | 45 | 45 | 45 | 45 | 38 | 38 |
| 3,3'-diaminodiphenyl sulfone (3,3'-DAS) | | | | | | | | | | |
| polyether sulfone (Sumika Excel® PES5003P) | 10 | 10 | 10 | 10 | 10 | 11 | 10 | 11 | 10 | 10 |
| polyamide particles | | 95 | | 95 | | 100 | | 100 | | 95 |
| thermoplastic resin (parts by mass) in 100 parts by mass of second epoxy resin composition | 4.0 | | 4.0 | | 4.3 | | 4.3 | | 4.1 | |
| thermoplastic resin (parts by mass) in total (100 parts by mass) of first and second epoxy resin compositions in prepreg | 5.5 | | 5.5 | | 5.6 | | 5.6 | | 5.7 | |

[Table 2-3]

| | Example 17 | | Example 18 | | Example 19 | | Example 20 | | Example 21 | |
|---|---|---|---|---|---|---|---|---|---|---|
| 1: first epoxy resin composition 2: second epoxy resin composition | 1 | 2 | 1 | 2 | 1 | 2 | 1 | 2 | 1 | 2 |
| tetraglycidyl diaminodiphenyl methane (Araldite® MY721) | | | | | | | | | | |
| tetraglycidyl diaminodiphenyl methane (SUMI-EPOXY® ELM434) | 60 | 60 | 55 | 55 | 55 | 55 | 50 | 50 | 40 | 40 |
| bisnaphtalene type epoxy with di-functionality (EPICLON® HP-4770) | | | | | | | | | | |
| bisnaphtalene type epoxy with tetra-functionality (EPICLON® HP-4700) | | | | | | | | | | |
| N-glycidyl phthalimide (DENACOL® EX-731) | | | | | | | | | | |
| N-diglycidyl aniline (GAN) | | | | | | | | | | |
| N,N-diglycidyl-4-phenoxy aniline (TOREP® A-204E) | 5 | 5 | 20 | 20 | 30 | 30 | 40 | 40 | 30 | 30 |
| triglycidyl-p-aminophenol (jER® 630) | | | | | | | | | | |
| ladder type silsesquioxane (SE-01 GM) | | | | | | | | | | |
| bisphenol A type epoxy resin (jER® 827) | 35 | 10 | 25 | | 15 | | 10 | | 30 | |
| bisphenol A type epoxy resin (jER® 1004AF) | | 25 | | 25 | | 15 | | 10 | | 30 |
| bisphenol F type (jER® 807) | | | | | | | | | | |
| bisphenol F type (jER® 4004P) | | | | | | | | | | |
| 4,4'-diaminodiphenyl sulfone (SEIKACURE-S) | | | | | | | | | | |
| 3,3'-diaminodiphenyl sulfone (3,3'-DAS) | 45 | 45 | 45 | 45 | 45 | 45 | 45 | 45 | 45 | 45 |
| polyether sulfone (Sumika Excel® PES5003P) | 8 | 10 | 8 | 10 | 8 | 11 | 8 | 11 | 8 | 10 |
| polyamide particles | | 95 | | 95 | | 100 | | 100 | | 95 |
| thermoplastic resin (parts by mass) in 100 parts by mass of second epoxy resin composition | 4.0 | | 4.0 | | 4.3 | | 4.3 | | 4.0 | |
| thermoplastic resin (parts by mass) in total (100 parts by mass) of first and second epoxy resin compositions in prepreg | 4.7 | | 4.7 | | 4.9 | | 4.9 | | 4.7 | |

[Table 3]

| | Example 22 | | Example 23 | | Example 24 | | Example 25 | | Example 26 | | Example 27 | |
|---|---|---|---|---|---|---|---|---|---|---|---|---|
| 1: first epoxy resin composition 2: second epoxy resin composition | 1 | 2 | 1 | 2 | 1 | 2 | 1 | 2 | 1 | 2 | 1 | 2 |
| tetraglycidyl diaminodiphenyl methane (Araldite® MY721) | | | | | | | | | | | | |
| tetraglycidyl diaminodiphenyl methane (SUMI-EPOXY® ELM434) | 60 | 60 | 60 | 60 | 60 | 60 | 60 | 60 | 60 | 60 | 60 | 60 |
| bisnaphtalene type epoxy with di-functionality (EPICLON® HP-4770) | | | | | | | | | | | | |
| bisnaphtalene type epoxy with tetra-functionality (EPICLON® HP-4700) | | | | | | | | | | | | |
| N-glycidyl phthalimide (DENACOL® EX-731) | | | | | | | | | | | | |
| N-diglycidyl aniline (GAN) | | | | | | | | | | | | |
| N,N-diglycidyl-4-phenoxy aniline (TOREP® A-204E) | | | | | | | | | | | | |
| triglycidyl-p-aminophenol (jER® 630) | 10 | 10 | 20 | 20 | 30 | 30 | 20 | 20 | 20 | 20 | 20 | 20 |
| ladder type silsesquioxane (SE-01 GM) | | | | | | | | | | | | |
| bisphenol A type epoxy resin (jER® 827) | | | | | | | | | | | | |
| bisphenol A type epoxy resin (jER® 1004AF) | | | | | | | | | | | | |
| bisphenol F type (jER® 807) | 30 | | 20 | | 10 | | 20 | 10 | 20 | | 20 | |
| bisphenol F type (jER® 4004P) | | 30 | | 20 | | 10 | | 10 | | 20 | | 20 |

(continued)

| | Example 22 | | Example 23 | | Example 24 | | Example 25 | | Example 26 | | Example 27 | |
|---|---|---|---|---|---|---|---|---|---|---|---|---|
| 4,4'-diaminodiphenyl sulfone (SEIKACURE-S) | 35 | 35 | 35 | 35 | 35 | 35 | 35 | 35 | 35 | 35 | 35 | 35 |
| 3,3'-diaminodiphenyl sulfone (3,3'-DAS) | | | | | | | | | | | | |
| polyether sulfone (Sumika Excel® PES5003P) | 12 | 6 | 12 | 9 | 12 | 11 | 12 | 9 | 12 | 8 | 12 | 10 |
| polyamide particles | | 75 | | 76 | | 77 | | 76 | | 75 | | 77 |
| thermoplastic resin (parts by mass) in 100 parts by mass of second epoxy resin composition | 2.8 | | 4.1 | | 4.9 | | 4.1 | | 3.7 | | 4.5 | |
| thermoplastic resin (parts by mass) in total (100 parts by mass) of first and second epoxy resin compositions in prepreg | 6.0 | | 6.5 | | 6.9 | | 6.5 | | 6.4 | | 6.7 | |

[Table 4]

| | Example 28 | | Example 29 | | Example 30 | | Example 31 | | Example 32 | |
|---|---|---|---|---|---|---|---|---|---|---|
| 1: first epoxy resin composition 2: second epoxy resin composition | 1 | 2 | 1 | 2 | 1 | 2 | 1 | 2 | 1 | 2 |
| tetraglycidyl diaminodiphenyl methane (Araldite® MY721) | | | | | | | | | | |
| tetraglycidyl diaminodiphenyl methane (SUMI-EPOXY® ELM434) | 60 | 60 | 60 | 60 | 60 | 60 | 45 | 45 | 25 | 25 |
| bisnaphtalene type epoxy with di-functionality (EPICLON® HP-4770) | | | | | | | | | | |
| bisnaphtalene type epoxy with tetra-functionality (EPICLON® HP-4700) | | | | | | | | | | |
| N-glycidyl phthalimide (DENACOL® EX-731) | | | | | | | | | | |
| N-diglycidyl aniline (GAN) | | | | | | | | | | |
| N,N-diglycidyl-4-phenoxy aniline (TOREP® A-204E) | | | | | | | | | | |

(continued)

| | Example 28 | | Example 29 | | Example 30 | | Example 31 | | Example 32 | |
|---|---|---|---|---|---|---|---|---|---|---|
| triglycidyl-p-aminophenol (jER® 630) | | | | | | | | | | |
| ladder type silsesquioxane (SE-01 GM) | | | 10 | 10 | 20 | 20 | 40 | 40 | 60 | 60 |
| bisphenol A type epoxy resin (jER® 827) | 40 | | 30 | | 20 | | 15 | | 15 | |
| bisphenol A type epoxy resin (jER® 1004AF) | | 40 | | 30 | | 20 | | 15 | | 15 |
| bisphenol F type (jER® 807) | | | | | | | | | | |
| bisphenol F type (jER® 4004P) | | | | | | | | | | |
| 4,4'-diaminodiphenyl sulfone (SEIKACURE-S) | 45 | 45 | 45 | 45 | 45 | 45 | 46 | 46 | 43 | 43 |
| 3,3'-diaminodiphenyl sulfone (3,3'-DAS) | | | | | | | | | | |
| polyether sulfone (Sumika Excel® PES5003P) | 12 | 5 | 12 | 6 | 12 | 9 | 12 | 10 | 12 | 11 |
| polyamide particles | | 80 | | 80 | | 82 | | 83 | | 83 |
| thermoplastic resin (parts by mass) in 100 parts by mass of second epoxy resin composition | 2.2 | | 2.6 | | 3.8 | | 4.2 | | 4.6 | |
| thermoplastic resin (parts by mass) in total (100 parts by mass) of first and second epoxy resin compositions in prepreg | 5.5 | | 5.6 | | 6.1 | | 6.2 | | 6.5 | |

[Table 5-1]

| | Comparative example 1 | | Comparative example 2 | | Comparative example 3 | |
|---|---|---|---|---|---|---|
| 1: first epoxy resin composition 2: second epoxy resin composition | 1 | 2 | 1 | 2 | 1 | 2 |
| tetraglycidyl diaminodiphenyl methane (Araldite® MY721) | 55 | 55 | 50 | 50 | 30 | 30 |
| tetraglycidyl diaminodiphenyl methane (SUMI-EPOXY® ELM434) | | | | | | |
| bisnaphtalene type epoxy with di-functionality (EPICLON® HP-4770) | 30 | 30 | 30 | 30 | | |
| bisnaphtalene type epoxy with tetra-functionality (EPICLON® HP-4700) | | | | | 30 | 30 |
| N-glycidyl phthalimide (DENACOL® EX-731) | | | | | | |
| N-diglycidyl aniline (GAN) | | | | | | |
| N,N-diglycidyl-4-phenoxy aniline (TOREP® A-204E) | | | | | | |
| triglycidyl-p-aminophenol (jER® 630) | | | | | | |
| ladder type silsesquioxane (SE-01 GM) | | | | | | |

(continued)

| | Comparative example 1 | | Comparative example 2 | | Comparative example 3 | |
|---|---|---|---|---|---|---|
| bisphenol A type epoxy resin (jER® 827) | | | | | | |
| bisphenol A type epoxy resin (jER® 1004AF) | | | | | | |
| bisphenol F type (jER® 807) | 15 | 15 | 20 | 20 | 40 | 40 |
| bisphenol F type (jER® 4004P) | | | | | | |
| 4,4'-diaminodiphenyl sulfone (SEIKACURE-S) | 42 | 42 | 42 | 42 | 41 | 41 |
| 3,3'-diaminodiphenyl sulfone (3,3'-DAS) | | | | | | |
| polyether sulfone (Sumika Excel® PES5003P) | 6 | 12 | 6 | 16 | 6 | 15 |
| polyamide particles | | 22 | | 22 | | 21 |
| thermoplastic resin (parts by mass) in 100 parts by mass of second epoxy resin composition | 6.8 | | 8.9 | | 8.5 | |
| thermoplastic resin (parts by mass) in total (100 parts by mass) of first and second epoxy resin compositions in prepreg | 5.2 | | 6.0 | | 5.8 | |

[Table 5-2]

| | Comparative example 4 | | Comparative example 5 | | Comparative example 6 | |
|---|---|---|---|---|---|---|
| 1: first epoxy resin composition 2: second epoxy resin composition | 1 | 2 | 1 | 2 | 1 | 2 |
| tetraglycidyl diaminodiphenyl methane (Araldite® MY721) | | | | | | |
| tetraglycidyl diaminodiphenyl methane (SUMI-EPOXY® ELM434) | 60 | 60 | 55 | 55 | 70 | 70 |
| bisnaphtalene type epoxy with di-functionality (EPICLON® HP-4770) | | | | | | |
| bisnaphtalene type epoxy with tetra-functionality (EPICLON® HP-4700) | | | | | | |
| N-glycidyl phthalimide (DENACOL® EX-731) | | | | | | |
| N-diglycidyl aniline (GAN) | | | | | | |
| N,N-diglycidyl-4-phenoxy aniline (TOREP® A-204E) | 25 | 25 | 30 | 30 | 30 | 30 |
| triglycidyl-p-aminophenol (jER® 630) | | | | | | |
| ladder type silsesquioxane (SE-01 GM) | | | | | | |
| bisphenol A type epoxy resin (jER® 827) | | | 15 | 15 | | |
| bisphenol A type epoxy resin (jER® 1004AF) | | | | | | |
| bisphenol F type (jER® 807) | 15 | 15 | | | | |
| bisphenol F type (jER® 4004P) | | | | | | |
| 4,4'-diaminodiphenyl sulfone (SEIKACURE-S) | 47 | 47 | 47 | 47 | 47 | 47 |
| 3,3'-diaminodiphenyl sulfone (3,3'-DAS) | | | | | | |
| polyether sulfone (Sumika Excel® PES5003P) | 6 | 13 | 6 | 16 | 6 | 18 |
| polyamide particles | | 80 | | 80 | | 80 |
| thermoplastic resin (parts by mass) in 100 parts by mass of second epoxy resin composition | 5.4 | | 6.6 | | 7.3 | |

(continued)

| | Comparative example 4 | Comparative example 5 | Comparative example 6 |
|---|---|---|---|
| thermoplastic resin (parts by mass) in total (100 parts by mass) of first and second epoxy resin compositions in prepreg | 4.5 | 5.0 | 5.3 |

[Table 5-3]

| | Comparative example 7 | | Comparative example 8 | | Comparative example 9 | |
|---|---|---|---|---|---|---|
| 1: first epoxy resin composition 2: second epoxy resin composition | 1 | 2 | 1 | 2 | 1 | 2 |
| tetraglycidyl diaminodiphenyl methane (Araldite® MY721) | | | | | | |
| tetraglycidyl diaminodiphenyl methane (SUMI-EPOXY® ELM434) | 60 | 60 | 60 | 60 | 60 | 60 |
| bisnaphtalene type epoxy with di-functionality (EPICLON® HP-4770) | | | | | | |
| bisnaphtalene type epoxy with tetra-functionality (EPICLON® HP-4700) | | | | | | |
| N-glycidyl phthalimide (DENACOL® EX-731) | | | | | | |
| N-diglycidyl aniline (GAN) | | | | | | |
| N,N-diglycidyl-4-phenoxy aniline (TOREP® A-204E) | | | | | | |
| triglycidyl-p-aminophenol (jER® 630) | 5 | 5 | 10 | 10 | 10 | 10 |
| ladder type silsesquioxane (SE-01 GM) | | | | | | |
| bisphenol A type epoxy resin (jER® 827) | | | | | | |
| bisphenol A type epoxy resin (jER® 1004AF) | | | | | | |
| bisphenol F type (jER® 807) | 35 | 35 | 30 | 30 | 30 | 30 |
| bisphenol F type (jER® 4004P) | | | | | | |
| 4,4'-diaminodiphenyl sulfone (SEIKACURE-S) | 35 | 35 | 35 | 35 | 35 | 35 |
| 3,3'-diaminodiphenyl sulfone (3,3'-DAS) | | | | | | |
| polyether sulfone (Sumika Excel® PES5003P) | 12 | 20 | 12 | 24 | 12 | 26 |
| polyamide particles | | 20 | | 20 | | 20 |
| thermoplastic resin (parts by mass) in 100 parts by mass of second epoxy resin composition | 11.4 | | 13.4 | | 14.4 | |
| thermoplastic resin (parts by mass) in total (100 parts by mass) of first and second epoxy resin compositions in prepreg | 9.5 | | 10.3 | | 10.6 | |

[Table 6]

| | Comparative example 10 | | Comparative example 11 | | Comparative example 12 | | Comparative example 13 | | Comparative example 14 | |
|---|---|---|---|---|---|---|---|---|---|---|
| 1: first epoxy resin composition 2: second epoxy resin composition | 1 | 2 | 1 | 2 | 1 | 2 | 1 | 2 | 1 | 2 |

(continued)

| | Comparative example 10 | | Comparative example 11 | | Comparative example 12 | | Comparative example 13 | | Comparative example 14 | |
|---|---|---|---|---|---|---|---|---|---|---|
| tetraglycidyl diaminodiphenyl methane (Araldite® MY721) | | | | | | | | | | |
| tetraglycidyl diaminodiphenyl methane (SUMI-EPOXY® ELM434) | 60 | 60 | 60 | 60 | 60 | 60 | 60 | 60 | 60 | 60 |
| bisnaphtalene type epoxy with di-functionality (EPICLON® HP-4770) | | | | | | | | | | |
| bisnaphtalene type epoxy with tetra-functionality (EPICLON® HP-4700) | | | | | | | | | | |
| N-glycidyl phthalimide (DENACOL® EX-731) | | | | | | | | | | |
| N-diglycidyl aniline (GAN) | | | | | | | | | | |
| N,N-diglycidyl-4-phenoxy aniline (TOREP® A-204E) | | | | | | | | | | |
| triglycidyl-p-aminophenol (jER® 630) | | | | | | | | | | |
| ladder type silsesquioxane (SE-01 GM) | | | | | | | | | | |
| bisphenol A type epoxy resin (jER® 827) | 25 | 25 | 25 | 25 | 10 | 10 | 10 | 10 | 10 | 10 |
| bisphenol A type epoxy resin (jER® 1004AF) | | | | | | | | | | |
| bisphenol F type (jER® 807) | 15 | 15 | 15 | 15 | 30 | 20 | 30 | 20 | 30 | 20 |
| bisphenol F type (jER® 4004P) | | | | | | 10 | | 10 | | 10 |
| 4,4'-diaminodiphenyl sulfone (SEIKACURE-S) | 47 | 47 | 47 | 47 | 47 | 47 | 47 | 47 | 47 | 47 |

(continued)

| | Comparative example 10 | | Comparative example 11 | | Comparative example 12 | | Comparative example 13 | | Comparative example 14 | |
|---|---|---|---|---|---|---|---|---|---|---|
| 3,3'-diaminodiphenyl sulfone (3,3'-DAS) | | | | | | | | | | |
| polyether sulfone (Sumika Excel® PES5003P) | 6 | 18 | 6 | 20 | 6 | 16 | 6 | 18 | 6 | 20 |
| polyamide particles | | 71 | | 72 | | 71 | | 72 | | 70 |
| thermoplastic resin (parts by mass) in 100 parts by mass of second epoxy resin composition | 7.6 | | 8.4 | | 6.8 | | 7.6 | | 8.4 | |
| thermoplastic resin (parts by mass) in total (100 parts by mass) of first and second epoxy resin compositions in prepreg | 5.4 | | 5.7 | | 5.1 | | 5.4 | | 5.7 | |

[Table 7]

| | | | Example 1 | Example 2 | Example 3 | Example 4 | Example 5 | Example 6 |
|---|---|---|---|---|---|---|---|---|
| properties of second epoxy resin composition | storage elastic modulus G' (Pa) at 25°C | | $8.6 \times 10^5$ | $1.2 \times 10^6$ | $1.6 \times 10^6$ | $2.2 \times 10^6$ | $1.3 \times 10^6$ | $1.7 \times 10^6$ |
| | value of equation (1) | 35°C | 0.102 | 0.099 | 0.100 | 0.099 | 0.099 | 0.100 |
| | | 40°C | 0.101 | 0.098 | 0.099 | 0.098 | 0.098 | 0.099 |
| | | 45°C | 0.108 | 0.105 | 0.102 | 0.103 | 0.105 | 0.101 |
| | | 50°C | 0.110 | 0.106 | 0.104 | 0.105 | 0.106 | 0.104 |
| | viscosity at 85°C (Pa·s) | | 56 | 71 | 86 | 149 | 22 | 41 |

(continued)

| | | | Example 1 | Example 2 | Example 3 | Example 4 | Example 5 | Example 6 |
|---|---|---|---|---|---|---|---|---|
| properties of prepreg | amount of built up resin/ fuzz (mg) | path line | 350 | 313 | 285 | 257 | 311 | 282 |
| | | evaluation | C | B | A | A | B | A |
| | | cutter blade | 2.0 | 1.2 | 0.8 | 0.5 | 1.2 | 0.8 |
| | | evaluation | B | B | A | A | B | A |
| | peel strength (N/ mm) | 35°C | 0.24 | 0.18 | 0.14 | 0.10 | 0.17 | 0.14 |
| | | 40°C | 0.35 | 0.32 | 0.29 | 0.25 | 0.32 | 0.29 |
| | | 45°C | 0.23 | 0.30 | 0.33 | 0.34 | 0.30 | 0.34 |
| | | 50°C | 0.07 | 0.12 | 0.18 | 0.21 | 0.13 | 0.18 |
| | | average over 35°C-50°C range | 0.22 | 0.23 | 0.24 | 0.22 | 0.23 | 0.24 |
| | | evaluation | B | A | A | B | A | A |
| properties of carbon fiber reinforced composite material | glass transition temperature (°C) | value | 207 | 210 | 213 | 216 | 213 | 216 |
| | | evaluation | - | - | - | - | - | - |
| | glass transition temperature in water absorbed state (°C) | value | 162 | 165 | 167 | 170 | 167 | 170 |
| | | evaluation | C | B | A | A | A | A |
| | tensile strength (MPa) | value | - | - | - | - | - | - |
| | | evaluation | - | - | - | - | - | - |
| properties of cured first epoxy resin composition | average heat generation rate (kW/m$^2$) | value | - | - | - | - | - | - |
| | flexural modulus (GPa) | value | - | - | - | - | - | - |
| | overall evaluation | | C | B | A | A | B | A |

[Table 8-1]

| | | | Example 7 | Example 8 | Example 9 | Example 10 | Example 11 |
|---|---|---|---|---|---|---|---|
| properties of second epoxy resin composition | storage elastic modulus G' (Pa) at 25°C | | $1.1 \times 10^6$ | $1.3 \times 10^6$ | $1.7 \times 10^6$ | $2.2 \times 10^6$ | $2.0 \times 10^6$ |
| | value of equation (1) | 35°C | 0.112 | 0.115 | 0.123 | 0.130 | 0.130 |
| | | 40°C | 0.109 | 0.111 | 0.120 | 0.123 | 0.125 |
| | | 45°C | 0.112 | 0.110 | 0.119 | 0.122 | 0.121 |
| | | 50°C | 0.109 | 0.105 | 0.116 | 0.116 | 0.117 |
| | viscosity at 85°C (Pa·s) | | 105 | 121 | 144 | 167 | 151 |

(continued)

| | | | Example 7 | Example 8 | Example 9 | Example 10 | Example 11 |
|---|---|---|---|---|---|---|---|
| properties of prepreg | amount of built up resin/ fuzz (mg) | path line | 350 | 332 | 300 | 277 | 284 |
| | | evaluation | C | C | B | A | A |
| | | cutter blade | 1.6 | 1.2 | 0.8 | 0.5 | 0.6 |
| | | evaluation | B | B | A | A | A |
| | peel strength (N/ mm) | 35°C | 0.24 | 0.23 | 0.21 | 0.19 | 0.21 |
| | | 40°C | 0.35 | 0.34 | 0.34 | 0.34 | 0.34 |
| | | 45°C | 0.23 | 0.27 | 0.25 | 0.27 | 0.27 |
| | | 50°C | 0.09 | 0.13 | 0.10 | 0.13 | 0.11 |
| | | average over 35°C-50°C range | 0.23 | 0.24 | 0.22 | 0.23 | 0.23 |
| | | evaluation | A | A | B | A | A |
| properties of carbon fiber reinforced composite material | glass transition temperature (°C) | value | 198 | 191 | 180 | 178 | 175 |
| | | evaluation | - | - | - | - | - |
| | glass transition temperature in water absorbed state (°C) | value | - | - | - | - | - |
| | | evaluation | - | - | - | - | - |
| | tensile strength (MPa) | value | 3170 | 3240 | 3320 | 3370 | 3410 |
| | | evaluation | C | B | A | A | A |
| properties of cured first epoxy resin composition | average heat generation rate ($kW/m^2$) | value | - | - | - | - | - |
| | flexural modulus (GPa) | value | - | - | - | - | - |
| | overall evaluation | | C | C | B | A | A |

[Table 8-2]

| | | | Example 12 | Example 13 | Example 14 | Example 15 | Example 16 |
|---|---|---|---|---|---|---|---|
| properties of second epoxy resin composition | storage elastic modulus G' (Pa) at 25°C | | $2.0 \times 10^6$ | $1.5 \times 10^6$ | $1.1 \times 10^6$ | $9.7 \times 10^5$ | $1.8 \times 10^6$ |
| | value of equation (1) | 35°C | 0.128 | 0.120 | 0.113 | 0.110 | 0.128 |
| | | 40°C | 0.122 | 0.118 | 0.110 | 0.108 | 0.123 |
| | | 45°C | 0.121 | 0.118 | 0.109 | 0.111 | 0.120 |
| | | 50°C | 0.115 | 0.115 | 0.105 | 0.108 | 0.116 |
| | viscosity at 85°C (Pa·s) | | 73 | 60 | 51 | 42 | 68 |

(continued)

| | | | Example 12 | Example 13 | Example 14 | Example 15 | Example 16 |
|---|---|---|---|---|---|---|---|
| properties of prepreg | amount of built up resin/ fuzz (mg) | path line | 266 | 290 | 322 | 338 | 274 |
| | | evaluation | A | A | B | C | A |
| | | cutter blade | 0.6 | 0.9 | 1.4 | 2.2 | 0.7 |
| | | evaluation | A | A | B | C | A |
| | peel strength (N/ mm) | 35°C | 0.20 | 0.22 | 0.23 | 0.25 | 0.22 |
| | | 40°C | 0.34 | 0.35 | 0.35 | 0.35 | 0.35 |
| | | 45°C | 0.27 | 0.24 | 0.26 | 0.23 | 0.26 |
| | | 50°C | 0.12 | 0.09 | 0.13 | 0.09 | 0.10 |
| | | average over 35°C-50°C range | 0.23 | 0.22 | 0.24 | 0.22 | 0.23 |
| | | evaluation | A | B | A | B | A |
| properties of carbon fiber reinforced composite material | glass transition temperature (°C) | value | 200 | 192 | 186 | 173 | 171 |
| | | evaluation | - | - | - | - | - |
| | glass transition temperature in water absorbed state (°C) | value | - | - | - | - | - |
| | | evaluation | - | - | - | - | - |
| | tensile strength (MPa) | value | 3090 | 3190 | 3270 | 3400 | 3320 |
| | | evaluation | C | C | B | A | A |
| properties of cured first epoxy resin composition | average heat generation rate ($kW/m^2$) | value | - | - | - | - | - |
| | flexural modulus (GPa) | value | - | - | - | - | - |
| | overall evaluation | | B | B | B | C | A |

[Table 8-3]

| | | | Example 17 | Example 18 | Example 19 | Example 20 | Example 21 |
|---|---|---|---|---|---|---|---|
| properties of second epoxy resin composition | storage elastic modulus G' (Pa) at 25°C | | $2.1 \times 10^6$ | $1.6 \times 10^6$ | $1.2 \times 10^6$ | $1.0 \times 10^6$ | $1.9 \times 10^6$ |
| | value of equation (1) | 35°C | 0.128 | 0.120 | 0.113 | 0.110 | 0.128 |
| | | 40°C | 0.122 | 0.118 | 0.110 | 0.108 | 0.123 |
| | | 45°C | 0.121 | 0.118 | 0.109 | 0.111 | 0.120 |
| | | 50°C | 0.115 | 0.115 | 0.105 | 0.108 | 0.116 |
| | viscosity at 85°C (Pa·s) | | 75 | 62 | 53 | 44 | 70 |

(continued)

| | | | Example 17 | Example 18 | Example 19 | Example 20 | Example 21 |
|---|---|---|---|---|---|---|---|
| properties of prepreg | amount of built up resin/ fuzz (mg) | path line | 262 | 286 | 316 | 335 | 270 |
| | | evaluation | A | A | B | C | A |
| | | cutter blade | 0.5 | 0.8 | 1.3 | 2.0 | 0.6 |
| | | evaluation | A | A | B | B | A |
| | peel strength (N/ mm) | 35°C | 0.20 | 0.21 | 0.23 | 0.24 | 0.21 |
| | | 40°C | 0.34 | 0.34 | 0.34 | 0.35 | 0.34 |
| | | 45°C | 0.27 | 0.25 | 0.27 | 0.23 | 0.27 |
| | | 50°C | 0.13 | 0.10 | 0.13 | 0.09 | 0.11 |
| | | average over 35°C-50°C range | 0.23 | 0.22 | 0.24 | 0.23 | 0.23 |
| | | evaluation | A | B | A | A | A |
| properties of carbon fiber reinforced composite material | glass transition temperature (°C) | value | 201 | 195 | 192 | 188 | 176 |
| | | evaluation | - | - | - | - | - |
| | glass transition temperature in water absorbed state (°C) | value | - | - | - | - | - |
| | | evaluation | - | - | - | - | - |
| | tensile strength (MPa) | value | 3080 | 3230 | 3250 | 3290 | 3260 |
| | | evaluation | C | B | B | B | B |
| properties of cured first epoxy resin composition | average heat generation rate (kW/$m^2$) | value | - | - | - | - | - |
| | flexural modulus (GPa) | value | - | - | - | - | - |
| | overall evaluation | | B | B | B | C | A |

[Table 9]

| | | | Example 22 | Example 23 | Example 24 | Example 25 | Example 26 | Example 27 |
|---|---|---|---|---|---|---|---|---|
| properties of second epoxy resin composition | storage elastic modulus G' (Pa) at 25°C | | $2.3 \times 10^6$ | $1.6 \times 10^6$ | $8.2 \times 10^5$ | $1.2 \times 10^6$ | $1.1 \times 10^6$ | $2.2 \times 10^6$ |
| | value of equation (1) | 35°C | 0.128 | 0.120 | 0.111 | 0.118 | 0.123 | 0.116 |
| | | 40°C | 0.124 | 0.114 | 0.107 | 0.114 | 0.119 | 0.111 |
| | | 45°C | 0.124 | 0.114 | 0.107 | 0.114 | 0.119 | 0.112 |
| | | 50°C | 0.130 | 0.116 | 0.113 | 0.115 | 0.123 | 0.114 |
| | viscosity at 85°C (Pa·s) | | 92 | 105 | 84 | 101 | 60 | 152 |

(continued)

| | | | Example 22 | Example 23 | Example 24 | Example 25 | Example 26 | Example 27 |
|---|---|---|---|---|---|---|---|---|
| properties of prepreg | amount of built up resin/ fuzz (mg) | path line | 255 | 286 | 353 | 316 | 329 | 262 |
| | | evaluation | A | A | C | B | B | A |
| | | cutter blade | 0.5 | 0.8 | 2.3 | 1.3 | 1.5 | 0.6 |
| | | evaluation | A | A | C | B | B | A |
| | peel strength (N/ mm) | 35°C | 0.18 | 0.21 | 0.27 | 0.24 | 0.27 | 0.15 |
| | | 40°C | 0.34 | 0.34 | 0.35 | 0.35 | 0.34 | 0.31 |
| | | 45°C | 0.27 | 0.28 | 0.23 | 0.24 | 0.19 | 0.32 |
| | | 50°C | 0.05 | 0.09 | 0.05 | 0.08 | 0.03 | 0.14 |
| | | average over 35°C-50°C range | 0.21 | 0.23 | 0.22 | 0.23 | 0.21 | 0.23 |
| | | evaluation | B | A | B | A | B | A |
| properties of carbon fiber reinforced composite material | glass transition temperature (°C) | value | 193 | 198 | 204 | 200 | 198 | 198 |
| | | evaluation | C | B | A | A | B | B |
| | glass transition temperature in water absorbed state (°C) | value | 142 | 147 | 154 | 150 | 147 | 147 |
| | | evaluation | - | - | - | - | - | - |
| | tensile strength (MPa) | value | - | - | - | - | - | - |
| | | evaluation | - | - | - | - | - | - |
| properties of cured first epoxy resin composition | average heat generation rate ($kW/m^2$) | value | - | - | - | - | - | - |
| | flexural modulus (GPa) | value | - | - | - | - | - | - |
| | overall evaluation | | B | A | C | B | C | A |

[Table 10]

| | | | Example 28 | Example 29 | Example 30 | Example 31 | Example 32 |
|---|---|---|---|---|---|---|---|
| properties of second epoxy resin composition | storage elastic modulus G' (Pa) at 25°C | | $2.6 \times 10^6$ | $1.9 \times 10^6$ | $1.3 \times 10^6$ | $8.1 \times 10^5$ | $8.0 \times 10^5$ |
| | value of equation (1) | 35°C | 0.128 | 0.128 | 0.120 | 0.111 | 0.111 |
| | | 40°C | 0.124 | 0.124 | 0.114 | 0.107 | 0.107 |
| | | 45°C | 0.124 | 0.124 | 0.114 | 0.107 | 0.107 |
| | | 50°C | 0.130 | 0.130 | 0.116 | 0.113 | 0.113 |
| | viscosity at 85°C (Pa·s) | | 82 | 82 | 94 | 75 | 53 |

(continued)

| | | | Example 28 | Example 29 | Example 30 | Example 31 | Example 32 |
|---|---|---|---|---|---|---|---|
| properties of prepreg | amount of built up resin/ fuzz (mg) | path line | 251 | 272 | 310 | 354 | 355 |
| | | evaluation | A | A | B | C | C |
| | | cutter blade | 0.4 | 0.7 | 1.2 | 2.3 | 2.4 |
| | | evaluation | A | A | B | C | C |
| | peel strength (N/ mm) | 35°C | 0.17 | 0.21 | 0.24 | 0.27 | 0.27 |
| | | 40°C | 0.33 | 0.35 | 0.35 | 0.35 | 0.34 |
| | | 45°C | 0.28 | 0.24 | 0.24 | 0.23 | 0.22 |
| | | 50°C | 0.06 | 0.04 | 0.07 | 0.05 | 0.05 |
| | | average over 35°C-50°C range | 0.21 | 0.21 | 0.22 | 0.22 | 0.22 |
| | | evaluation | B | B | B | B | B |
| properties of carbon fiber reinforced composite material | glass transition temperature (°C) | value | 185 | 210 | 219 | 258 | > 300 |
| | | evaluation | D | A | A | A | A |
| | glass transition temperature in water absorbed state (°C) | value | - | - | - | - | - |
| | | evaluation | - | - | - | - | - |
| | tensile strength (MPa) | value | - | - | - | - | - |
| | | evaluation | - | - | - | - | - |
| properties of cured first epoxy resin composition | average heat generation rate ($kW/m^2$) | value | 312 | 284 | 270 | 259 | 247 |
| | flexural modulus (GPa) | value | 3.2 | 3.4 | 3.3 | 3.2 | 2.9 |
| | overall evaluation | | C | A | B | C | C |

[Table 11-1]

| | | | Comparative example 1 | Comparative example 2 | Comparative example 3 |
|---|---|---|---|---|---|
| properties of second epoxy resin composition | storage elastic modulus G' (Pa) at 25°C | | $2.7 \times 10^5$ | $3.9 \times 10^5$ | $1.6 \times 10^6$ |
| | value of equation (1) | 35°C | 0.086 | 0.080 | 0.079 |
| | | 40°C | 0.086 | 0.077 | 0.079 |
| | | 45°C | 0.087 | 0.079 | 0.078 |
| | | 50°C | 0.088 | 0.078 | 0.078 |
| | viscosity at 85°C (Pa·s) | | 45 | 184 | 320 |

(continued)

| | | | Comparative example 1 | Comparative example 2 | Comparative example 3 |
|---|---|---|---|---|---|
| properties of prepreg | amount of built up resin/ fuzz (mg) | path line | 422 | 406 | film formation impossible |
| | | evaluation | D | D | |
| | | cutter blade | 12.5 | 7.2 | |
| | | evaluation | D | D | |
| | peel strength (N/ mm) | 35°C | 0.33 | 0.27 | |
| | | 40°C | 0.33 | 0.34 | |
| | | 45°C | 0.20 | 0.30 | |
| | | 50°C | 0.08 | 0.18 | |
| | | average over 35°C-50°C range | 0.23 | 0.28 | |
| | | evaluation | A | A | |
| properties of carbon fiber reinforced composite material | glass transition temperature (°C) | value | 207 | 205 | |
| | | evaluation | - | - | |
| | glass transition temperature in water absorbed state (°C) | value | 162 | 160 | |
| | | evaluation | C | C | |
| | tensile strength (MPa) | value | - | - | |
| | | evaluation | - | - | |
| properties of cured first epoxy resin composition | average heat generation rate ($kW/m^2$) | value | | | |
| | flexural modulus (GPa) | value | - | - | |
| | overall evaluation | | D | D | D |

[Table 11-2]

| | | | Comparative example 4 | Comparative example 5 | Comparative example 6 |
|---|---|---|---|---|---|
| properties of second epoxy resin composition | storage elastic modulus G' (Pa) at 25°C | | $2.6 \times 10^5$ | $3.8 \times 10^5$ | $1.6 \times 10^6$ |
| | value of equation (1) | 35°C | 0.086 | 0.079 | 0.081 |
| | | 40°C | 0.086 | 0.077 | 0.080 |
| | | 45°C | 0.087 | 0.079 | 0.077 |
| | | 50°C | 0.088 | 0.079 | 0.077 |
| | viscosity at 85°C (Pa·s) | | 42 | 180 | 338 |

(continued)

| | | | Comparative example 4 | Comparative example 5 | Comparative example 6 |
|---|---|---|---|---|---|
| properties of prepreg | amount of built up resin/ fuzz (mg) | path line | 424 | 407 | film formation impossible |
| | | evaluation | D | D | |
| | | cutter blade | 13.2 | 7.5 | |
| | | evaluation | D | D | |
| | peel strength (N/ mm) | 35°C | 0.33 | 0.27 | |
| | | 40°C | 0.33 | 0.34 | |
| | | 45°C | 0.20 | 0.30 | |
| | | 50°C | 0.08 | 0.18 | |
| | | average over 35°C-50°C range | 0.23 | 0.28 | |
| | | evaluation | A | A | |
| properties of carbon fiber reinforced composite material | glass transition temperature (°C) | value | 196 | 192 | |
| | | evaluation | - | - | |
| | glass transition temperature in water absorbed state (°C) | value | - | - | |
| | | evaluation | - | - | |
| | tensile strength (MPa) | value | 3250 | 3300 | |
| | | evaluation | B | A | |
| properties of cured first epoxy resin composition | average heat generation rate ($kW/m^2$) | value | - | - | |
| | flexural modulus (GPa) | value | - | - | |
| | overall evaluation | | D | D | D |

[Table 11-3]

| | | | Comparative example 7 | Comparative example 8 | Comparative example 9 |
|---|---|---|---|---|---|
| properties of second epoxy resin composition | storage elastic modulus G' (Pa) at 25°C | | $2.9 \times 10^5$ | $8.2 \times 10^5$ | $1.5 \times 10^6$ |
| | value of equation (1) | 35°C | 0.087 | 0.080 | 0.077 |
| | | 40°C | 0.086 | 0.079 | 0.076 |
| | | 45°C | 0.085 | 0.078 | 0.076 |
| | | 50°C | 0.085 | 0.078 | 0.076 |
| | viscosity at 85°C (Pa·s) | | 120 | 268 | 481 |

(continued)

| | | | Comparative example 7 | Comparative example 8 | Comparative example 9 |
|---|---|---|---|---|---|
| properties of prepreg | amount of built up resin/ fuzz (mg) | path line | 420 | 365 | film formation impossible |
| | | evaluation | D | D | |
| | | cutter blade | 11.4 | 2.4 | |
| | | evaluation | D | C | |
| | peel strength (N/ mm) | 35°C | 0.32 | 0.17 | |
| | | 40°C | 0.33 | 0.29 | |
| | | 45°C | 0.22 | 0.35 | |
| | | 50°C | 0.10 | 0.29 | |
| | | average over 35°C-50°C range | 0.24 | 0.28 | |
| | | evaluation | A | A | |
| properties of carbon fiber reinforced composite material | glass transition temperature (°C) | value | 188 | 195 | |
| | | evaluation | D | B | |
| | glass transition temperature in water absorbed state (°C) | value | 137 | 144 | |
| | | evaluation | - | - | |
| | tensile strength (MPa) | value | - | - | |
| | | evaluation | - | - | |
| properties of cured first epoxy resin composition | average heat generation rate ($kW/m^2$) | value | - | - | |
| | flexural modulus (GPa) | value | - | - | |
| | overall evaluation | | D | D | D |

[Table 12]

| | | | Comparative example 10 | Comparative example 11 | Comparative example 12 | Comparative example 13 | Comparative example 14 |
|---|---|---|---|---|---|---|---|
| properties of second epoxy resin composition | storage elastic modulus G' (Pa) at 25°C | | $8.1 \times 10^5$ | $1.5 \times 10^6$ | $4.0 \times 10^5$ | $8.2 \times 10^5$ | $1.5 \times 10^6$ |
| | value of equation (1) | 35°C | 0.079 | 0.081 | 0.081 | 0.079 | 0.077 |
| | | 40°C | 0.076 | 0.075 | 0.080 | 0.078 | 0.076 |
| | | 45°C | 0.076 | 0.073 | 0.079 | 0.078 | 0.076 |
| | | 50°C | 0.077 | 0.074 | 0.078 | 0.077 | 0.076 |
| | viscosity at 85°C (Pa·s) | | 290 | 511 | 180 | 290 | 511 |

(continued)

| | | | Comparative example 10 | Comparative example 11 | Comparative example 12 | Comparative example 13 | Comparative example 14 |
|---|---|---|---|---|---|---|---|
| properties of pre-preg | amount of built up resin/ fuzz (mg) | path line | 355 | film formation impossible | 405 | 365 | film formation impossible |
| | | evaluation | C | | D | D | |
| | | cutter blade | 2.3 | | 6.9 | 2.4 | |
| | | evaluation | C | | D | C | |
| | peel strength (N/ mm) | 35°C | 0.17 | | 0.27 | 0.17 | |
| | | 40°C | 0.28 | | 0.35 | 0.29 | |
| | | 45°C | 0.35 | | 0.30 | 0.35 | |
| | | 50°C | 0.30 | | 0.19 | 0.30 | |
| | | average over 35°C-50°C range | 0.27 | | 0.28 | 0.28 | |
| | | evaluation | A | | A | A | |
| properties of carbon fiber reinforced composite material | glass transition temperature (°C) | value | 209 | | 190 | 190 | |
| | | evaluation | - | | C | C | |
| | glass transition temperature in water absorbed state (°C) | value | 158 | | 139 | 139 | |
| | | evaluation | D | | - | - | |
| | tensile strength (MPa) | value | 2910 | | - | - | |
| | | evaluation | D | | - | - | |
| properties of cured first epoxy resin composition | average heat generation rate ($kW/m^2$) | value | - | | - | - | |
| | flexural modulus (GPa) | value | - | | - | - | |
| | overall evaluation | | D | D | D | D | D |

<Example 1>

According to the procedure described in the above paragraph (1), a first epoxy resin composition was prepared by mixing 20 parts of EPICLON (registered trademark) HP-4770 as the component [B1], 60 parts of Araldite (registered trademark) MY721 as the component [B2], 20 parts of jER (registered trademark) 807 as epoxy resin other than the components [B1] and [B2], 44 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 20 parts of EPICLON (registered trademark) HP-4770 as the component [B1], 60 parts of Araldite (registered trademark) MY721 as the component [B2], 20 parts of jER (registered trademark) 807 as epoxy resin other than the components [B1] and [B2], 44 parts of SEIKACURE-S as the component [C], 8 parts of Sumika Excel (registered trademark) PES5003P as the component [D], and 22 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 7, the second epoxy resin composition prepared above had a storage elastic modulus G' at 25°C of $8.6 \times 10^5$ Pa as measured at an angular frequency of 3.14 rad/s and was acceptable in terms of the amount of resin/fuzz built up to the path line and also good in terms of the effect of reducing the amount of resin/fuzz built up to cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a glass transition temperature of 162°C under water absorbing conditions as measured according to the procedure described in (10).

The prepreg was rated as C in the overall evaluation for prepreg's processability and laminating performance and cured prepreg's heat resistance under water absorbing conditions as evaluated by the procedure described in the above paragraph (15) and it was found to be acceptable in terms of the balance among processability, laminating performance, and cured prepreg's heat resistance under water absorbing conditions in an automated lay-up device.

<Example 2>

According to the procedure described in the above paragraph (1), a first epoxy resin composition was prepared by mixing 25 parts of EPICLON (registered trademark) HP-4770 as the component [B1], 60 parts of Araldite (registered trademark) MY721 as the component [B2], 15 parts of jER (registered trademark) 807 as epoxy resin other than the components [B1] and [B2], 44 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 25 parts of EPICLON (registered trademark) HP-4770 as the component [B1], 60 parts of Araldite (registered trademark) MY721 as the component [B2], 15 parts of jER (registered trademark) 807 as epoxy resin other than the components [B1] and [B2], 44 parts of SEIKACURE-S as the component [C], 7.5 parts of Sumika Excel (registered trademark) PES5003P as the component [D], and 22 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 7, the second epoxy resin composition prepared above had a storage elastic modulus G' at 25°C of $1.2 \times 10^6$ Pa as measured at an angular frequency of 3.14 rad/s and was good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a glass transition temperature of 165°C under water absorbing conditions as measured according to the procedure described in (10).

The prepreg was rated as B in the overall evaluation for prepreg's processability and laminating performance and cured prepreg's heat resistance under water absorbing conditions as evaluated by the procedure described in the above paragraph (15) and it was found to be good in terms of the balance among processability, laminating performance, and cured prepreg's heat resistance under water absorbing conditions in an automated lay-up device.

<Example 3>

According to the procedure described in the above paragraph (1), a first epoxy resin composition was prepared by mixing 30 parts of EPICLON (registered trademark) HP-4770 as the component [B1], 60 parts of Araldite (registered trademark) MY721 as the component [B2], 10 parts of jER (registered trademark) 807 as epoxy resin other than the

components [B1] and [B2], 44 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of EPICLON (registered trademark) HP-4770 as the component [B1], 60 parts of Araldite (registered trademark) MY721 as the component [B2], 10 parts of jER (registered trademark) 807 as epoxy resin other than the components [B1] and [B2], 44 parts of SEIKACURE-S as the component [C], 7 parts of Sumika Excel (registered trademark) PES5003P as the component [D], and 22 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 7, the second epoxy resin composition prepared above had a storage elastic modulus G' at 25°C of $1.6 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.24 N/mm, indicating a tack particularly suitable for lamination by an automated lay-up device. In addition, the carbon fiber reinforced composite material had a glass transition temperature of 167°C under water absorbing conditions as measured according to the procedure described in (10).

The prepreg was rated as A in the overall evaluation for prepreg's processability and laminating performance and cured prepreg's heat resistance under water absorbing conditions as evaluated by the procedure described in the above paragraph (15) and it was found to be particularly good in terms of the balance among processability, laminating performance, and cured prepreg's heat resistance under water absorbing conditions in an automated lay-up device.

<Example 4>

According to the procedure described in the above paragraph (1), a first epoxy resin composition was prepared by mixing 30 parts of EPICLON (registered trademark) HP-4770 as the component [B1], 70 parts of Araldite (registered trademark) MY721 as the component [B2], 44 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of EPICLON (registered trademark) HP-4770 as the component [B1], 70 parts of Araldite (registered trademark) MY721 as the component [B2], 44 parts of SEIKACURE-S as the component [C], 7 parts of Sumika Excel (registered trademark) PES5003P as the component [D], and 22 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 7, the second epoxy resin composition prepared above had a storage elastic modulus G' at 25°C of $2.2 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a glass transition temperature of 170°C under water absorbing conditions as measured according to the procedure described in (10).

The prepreg was rated as A in the overall evaluation for prepreg's processability and laminating performance and cured prepreg's heat resistance under water absorbing conditions as evaluated by the procedure described in the above paragraph (15) and it was found to be particularly good in terms of the balance among processability, laminating performance, and cured prepreg's heat resistance under water absorbing conditions in an automated lay-up device.

<Example 5>

According to the procedure described in the above paragraph (1), a first epoxy resin composition was prepared by mixing 30 parts of EPICLON (registered trademark) HP-4700 as the component [B1], 30 parts of Araldite (registered trademark) MY721 as the component [B2], 30 parts of jER (registered trademark) 827 and 10 parts of jER (registered trademark) 807 as epoxy resins other than the components [B1] and [B2], 41 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of EPICLON (registered trademark) HP-4700 as the component [B1], 30 parts of Araldite (registered trademark) MY721 as the component [B2], 30 parts of jER (registered trademark) 827 and 10 parts of jER (registered trademark) 807 as epoxy resins other than the components [B1] and [B2], 41 parts of SEIKACURE-S as the component [C], 7.5 parts of Sumika Excel (registered trademark) PES5003P as the component [D], and 21 parts of polyamide particles prepared by the above

method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 7, the second epoxy resin composition prepared above had a storage elastic modulus G' at 25°C of $1.3 \times 10^6$ Pa as measured at an angular frequency of 3.14 rad/s and was good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a glass transition temperature of 167°C under water absorbing conditions as measured according to the procedure described in (10).

The prepreg was rated as B in the overall evaluation for prepreg's processability and laminating performance and cured prepreg's heat resistance under water absorbing conditions as evaluated by the procedure described in the above paragraph (15) and it was found to be good in terms of the balance among processability, laminating performance, and cured prepreg's heat resistance under water absorbing conditions in an automated lay-up device.

<Example 6>

According to the procedure described in the above paragraph (1), a first epoxy resin composition was prepared by mixing 35 parts of EPICLON (registered trademark) HP-4700 as the component [B1], 30 parts of Araldite (registered trademark) MY721 as the component [B2], 30 parts of jER (registered trademark) 827 and 5 parts of jER (registered trademark) 807 as epoxy resins other than the components [B1] and [B2], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 35 parts of EPICLON (registered trademark) HP-4700 as the component [B1], 30 parts of Araldite (registered trademark) MY721 as the component [B2], 30 parts of jER (registered trademark) 827 and 5 parts of jER (registered trademark) 807 as epoxy resins other than the components [B1] and [B2], 47 parts of SEIKACURE-S as the component [C], 7 parts of Sumika Excel (registered trademark) PES5003P as the component [D], and 21 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 7, the second epoxy resin composition prepared above had a storage elastic modulus G' at 25°C of $1.7 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.24 N/mm, indicating a tack particularly suitable for lamination by an automated lay-up device. In addition, the carbon fiber reinforced composite material had a glass transition temperature of 170°C under water absorbing conditions as measured according to the procedure described in (10).

The prepreg was rated as A in the overall evaluation for prepreg's processability and laminating performance and cured prepreg's heat resistance under water absorbing conditions as evaluated by the procedure described in the above paragraph (15) and it was found to be particularly good in terms of the balance among processability, laminating performance, and cured prepreg's heat resistance under water absorbing conditions in an automated lay-up device.

<Example 7>

According to the procedure described in the above paragraph (1), a first epoxy resin composition was prepared by mixing 5 parts of Denacol (registered trademark) EX-731 as the component [B3], 60 parts of SUMI-EPOXY (registered trademark) ELM434 as the component [B4], 35 parts of jER (registered trademark) 827 as epoxy resin other than the components [B3] and [B4], 40 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 5 parts of DENACOL (registered trademark) EX-731 as the component [B3], 60 parts of SUMI-EPOXY (registered trademark) ELM434 as the component [B4], 35 parts of jER (registered trademark) 827 as epoxy resin other than the components [B3] and [B4], 40 parts of SEIKACURE-S as the component [C], 10 parts of Sumika Excel (registered trademark) PES5003P as the component [D], and 80 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.1 \times 10^6$ Pa as measured at an angular frequency of 3.14 rad/s and was acceptable in terms of the amount of resin/fuzz built up to the path line and also good in terms of the effect of reducing the amount of resin/fuzz built up to cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,170 MPa as measured according the procedure described in the above paragraph (12).

The prepreg was rated as C in the overall evaluation for prepreg's processability and laminating performance and cured prepreg's tensile strength at low temperature as evaluated by the procedure described in the above paragraph (15) and it was found to be acceptable in terms of the balance among processability, laminating performance, and cured prepreg's tensile strength at low temperature in an automated lay-up device.

<Example 8>

According to the procedure described in the above paragraph (1), a first epoxy resin composition was prepared by mixing 10 parts of Denacol (registered trademark) EX-731 as the component [B3], 60 parts of SUMI-EPOXY (registered trademark) ELM434 as the component [B4], 30 parts of jER (registered trademark) 827 as epoxy resin other than the components [B3] and [B4], 40 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 10 parts of DENACOL (registered trademark) EX-731 as the component [B3], 60 parts of SUMI-EPOXY (registered trademark) ELM434 as the component [B4], 30 parts of jER (registered trademark) 827 as epoxy resin other than the components [B3] and [B4], 40 parts of SEIKACURE-S as the component [C], 10 parts of Sumika Excel (registered trademark) PES5003P as the component [D], and 80 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.3 \times 10^6$ Pa as measured at an angular frequency of 3.14 rad/s and was acceptable in terms of the amount of resin/fuzz built up to the path line and also good in terms of the effect of reducing the amount of resin/fuzz built up to cutter blades. The average peel strength over 35°C to 50°C range calculated by the procedure described in the above paragraph (7) was 0.24 N/mm, indicating a tack particularly suitable for lamination by an automated lay-up device. In addition, the carbon fiber reinforced composite material had a 0° tensile strength of 3,240 MPa as measured according the procedure described in the above paragraph (12).

The prepreg was rated as C in the overall evaluation for prepreg's processability and laminating performance and cured prepreg's tensile strength at low temperature as evaluated by the procedure described in the above paragraph (15) and it was found to be acceptable in terms of the balance among processability, laminating performance, and cured prepreg's tensile strength at low temperature in an automated lay-up device.

<Example 9>

According to the procedure described in the above paragraph (1), a first epoxy resin composition was prepared by mixing 20 parts of Denacol (registered trademark) EX-731 as the component [B3], 60 parts of SUMI-EPOXY (registered trademark) ELM434 as the component [B4], 20 parts of jER (registered trademark) 827 as epoxy resin other than the components [B3] and [B4], 40 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 20 parts of DENACOL (registered trademark) EX-731 as the component [B3], 60 parts of SUMI-EPOXY (registered trademark) ELM434 as the component [B4], 20 parts of jER (registered trademark) 827 as epoxy resin other than the components [B3] and [B4], 40 parts of SEIKACURE-S as the component [C], 9 parts of Sumika Excel (registered trademark) PES5003P as the component [D], and 80 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.7 \times 10^6$ Pa as measured at an angular frequency of 3.14 rad/s and was good in terms of the amount of resin/fuzz built up to the path line and also particularly good in terms of the effect of reducing the amount of resin/fuzz built up to cutter blades. The average peel strength over 35°C to 50°C range calculated by the procedure described in the above paragraph

(7) was 0.22 N/mm, indicating a tack suitable for lamination by an automated lay-up device. In addition, the carbon fiber reinforced composite material had a 0° tensile strength of 3,320 MPa as measured according the procedure described in the above paragraph (12).

The prepreg was rated as B in the overall evaluation for prepreg's processability and laminating performance and cured prepreg's tensile strength at low temperature as evaluated by the procedure described in the above paragraph (15) and it was found to be good in terms of the balance among processability, laminating performance, and cured prepreg's tensile strength at low temperature in an automated lay-up device.

<Example 10>

According to the procedure described in the above paragraph (1), a first epoxy resin composition was prepared by mixing 30 parts of Denacol (registered trademark) EX-731 as the component [B3], 60 parts of SUMI-EPOXY (registered trademark) ELM434 as the component [B4], 10 parts of jER (registered trademark) 827 as epoxy resin other than the components [B3] and [B4], 44 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of DENACOL (registered trademark) EX-731 as the component [B3], 60 parts of SUMI-EPOXY (registered trademark) ELM434 as the component [B4], 10 parts of jER (registered trademark) 827 as epoxy resin other than the components [B3] and [B4], 44 parts of SEIKACURE-S as the component [C], 7 parts of Sumika Excel (registered trademark) PES5003P as the component [D], and 80 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $2.2 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,370 MPa as measured according the procedure described in the above paragraph (12).

The prepreg was rated as A in the overall evaluation for prepreg's processability and laminating performance and cured prepreg's tensile strength at low temperature as evaluated by the procedure described in the above paragraph (15) and it was found to be particularly good in terms of the balance among processability, laminating performance, and cured prepreg's tensile strength at low temperature in an automated lay-up device.

<Example 11>

According to the procedure described in the above paragraph (1), a first epoxy resin composition was prepared by mixing 25 parts of Denacol (registered trademark) EX-731 as the component [B3], 45 parts of SUMI-EPOXY (registered trademark) ELM434 as the component [B4], 30 parts of jER (registered trademark) 827 as epoxy resin other than the components [B3] and [B4], 40 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 25 parts of DENACOL (registered trademark) EX-731 as the component [B3], 45 parts of SUMI-EPOXY (registered trademark) ELM434 as the component [B4], 30 parts of jER (registered trademark) 827 as epoxy resin other than the components [B3] and [B4], 40 parts of SEIKACURE-S as the component [C], 9 parts of Sumika Excel (registered trademark) PES5003P as the component [D], and 85 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $2.0 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,410 MPa as measured according the procedure described in the above paragraph (12).

The prepreg was rated as A in the overall evaluation for prepreg's processability and laminating performance and cured prepreg's tensile strength at low temperature as evaluated by the procedure described in the above paragraph (15) and it was found to be particularly good in terms of the balance among processability, laminating performance, and cured

prepreg's tensile strength at low temperature in an automated lay-up device.

<Example 12>

According to the procedure described in the above paragraph (1), a first epoxy resin composition was prepared by mixing 5 parts of GAN as the component [B3], 60 parts of SUMI-EPOXY (registered trademark) ELM434 as the component [B4], 35 parts of jER (registered trademark) 827 as epoxy resin other than the components [B3] and [B4], 45 parts of SEIKACURE-S as the component [C], and 10 parts of Sumika Excel (registered trademark) PES5003P as the component [D]. Then, according to the procedure described in the above paragraph (1), a second epoxy resin composition was prepared by mixing 5 parts of GAN as the component [B3], 60 parts of SUMI-EPOXY (registered trademark) ELM434 as the component [B4], 10 parts of jER (registered trademark) 827 and 25 parts of jER (registered trademark) 1004AF as epoxy resins other than the components [B3] and [B4], 45 parts of SEIKACURE-S as the component [C], 10 parts of Sumika Excel (registered trademark) PES5003P as the component [D], and 95 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $2.0 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,090 MPa as measured according the procedure described in the above paragraph (12).

The prepreg was rated as B in the overall evaluation for prepreg's processability and laminating performance and cured prepreg's tensile strength at low temperature as evaluated by the procedure described in the above paragraph (15) and it was found to be good in terms of the balance among processability, laminating performance, and cured prepreg's tensile strength at low temperature in an automated lay-up device.

<Example 13>

According to the procedure described in the above paragraph (1), a first epoxy resin composition was prepared by mixing 20 parts of GAN as the component [B3], 55 parts of SUMI-EPOXY (registered trademark) ELM434 as the component [B4], 25 parts of jER (registered trademark) 827 as epoxy resin other than the components [B3] and [B4], 45 parts of SEIKACURE-S as the component [C], and 10 parts of Sumika Excel (registered trademark) PES5003P as the component [D]. Then, according to the procedure described in the above paragraph (1), a second epoxy resin composition was prepared by mixing 20 parts of GAN as the component [B3], 55 parts of SUMI-EPOXY (registered trademark) ELM434 as the component [B4], 25 parts of jER (registered trademark) 1004AF as epoxy resin other than the components [B3] and [B4], 45 parts of SEIKACURE-S as the component [C], 10 parts of Sumika Excel (registered trademark) PES5003P as the component [D], and 95 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.5 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a 0° tensile strength of 3,190 MPa as measured according the procedure described in the above paragraph (12).

The prepreg was rated as B in the overall evaluation for prepreg's processability and laminating performance and cured prepreg's tensile strength at low temperature as evaluated by the procedure described in the above paragraph (15) and it was found to be good in terms of the balance among processability, laminating performance, and cured prepreg's tensile strength at low temperature in an automated lay-up device.

<Example 14>

According to the procedure described in the above paragraph (1), a first epoxy resin composition was prepared by mixing 30 parts of GAN as the component [B3], 55 parts of SUMI-EPOXY (registered trademark) ELM434 as the component [B4], 15 parts of jER (registered trademark) 827 as epoxy resin other than the components [B3] and [B4], 45

parts of SEIKACURE-S as the component [C], and 10 parts of Sumika Excel (registered trademark) PES5003P as the component [D]. Then, according to the procedure described in the above paragraph (1), a second epoxy resin composition was prepared by mixing 30 parts of GAN as the component [B3], 55 parts of SUMI-EPOXY (registered trademark) ELM434 as the component [B4], 15 parts of jER (registered trademark) 1004AF as epoxy resin other than the components [B3] and [B4], 45 parts of SEIKACURE-S as the component [C], 11 parts of Sumika Excel (registered trademark) PES5003P as the component [D], and 100 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.1 \times 10^6$ Pa as measured at an angular frequency of 3.14 rad/s and was good in terms of the effect of reducing the amount of resin/fuzz built up to the path line and cutter blades. The average peel strength over 35°C to 50°C range calculated by the procedure described in the above paragraph (7) was 0.24 N/mm, indicating a tack particularly suitable for lamination by an automated lay-up device. In addition, the carbon fiber reinforced composite material had a 0° tensile strength of 3,270 MPa as measured according the procedure described in the above paragraph (12).

The prepreg was rated as B in the overall evaluation for prepreg's processability and laminating performance and cured prepreg's tensile strength at low temperature as evaluated by the procedure described in the above paragraph (15) and it was found to be good in terms of the balance among processability, laminating performance, and cured prepreg's tensile strength at low temperature in an automated lay-up device.

<Example 15>

According to the procedure described in the above paragraph (1), a first epoxy resin composition was prepared by mixing 40 parts of GAN as the component [B3], 50 parts of SUMI-EPOXY (registered trademark) ELM434 as the component [B4], 10 parts of jER (registered trademark) 827 as epoxy resin other than the components [B3] and [B4], 45 parts of SEIKACURE-S as the component [C], and 10 parts of Sumika Excel (registered trademark) PES5003P as the component [D]. Then, according to the procedure described in the above paragraph (1), a second epoxy resin composition was prepared by mixing 40 parts of GAN as the component [B3], 50 parts of SUMI-EPOXY (registered trademark) ELM434 as the component [B4], 10 parts of jER (registered trademark) 1004AF as epoxy resin other than the components [B3] and [B4], 45 parts of SEIKACURE-S as the component [C], 11 parts of Sumika Excel (registered trademark) PES5003P as the component [D], and 100 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $9.7 \times 10^5$ Pa as measured at an angular frequency of 3.14 rad/s and was acceptable in terms of the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a 0° tensile strength of 3,400 MPa as measured according the procedure described in the above paragraph (12).

The prepreg was rated as C in the overall evaluation for prepreg's processability and laminating performance and cured prepreg's tensile strength at low temperature as evaluated by the procedure described in the above paragraph (15) and it was found to be acceptable in terms of the balance among processability, laminating performance, and cured prepreg's tensile strength at low temperature in an automated lay-up device.

<Example 16>

According to the procedure described in the above paragraph (1), a first epoxy resin composition was prepared by mixing 30 parts of GAN as the component [B3], 40 parts of SUMI-EPOXY (registered trademark) ELM434 as the component [B4], 30 parts of jER (registered trademark) 827 as epoxy resin other than the components [B3] and [B4], 38 parts of SEIKACURE-S as the component [C], and 10 parts of Sumika Excel (registered trademark) PES5003P as the component [D]. Then, according to the procedure described in the above paragraph (1), a second epoxy resin composition was prepared by mixing 30 parts of GAN as the component [B3], 40 parts of SUMI-EPOXY (registered trademark) ELM434 as the component [B4], 30 parts of jER (registered trademark) 1004AF as epoxy resin other than the components [B3] and [B4], 38 parts of SEIKACURE-S as the component [C], 10 parts of Sumika Excel (registered trademark) PES5003P as the component [D], and 95 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above

paragraph (3).

As shown in Table 8, the second epoxy resin composition prepared above had a storage elastic modulus G' at 25°C of $1.8 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,320 MPa as measured according the procedure described in the above paragraph (12).

The prepreg was rated as A in the overall evaluation for prepreg's processability and laminating performance and cured prepreg's tensile strength at low temperature as evaluated by the procedure described in the above paragraph (15) and it was found to be particularly good in terms of the balance among processability, laminating performance, and cured prepreg's tensile strength at low temperature in an automated lay-up device.

<Example 17>

According to the procedure described in the above paragraph (1), a first epoxy resin composition was prepared by mixing 5 parts of TOREP (registered trademark) A-204E as the component [B3], 60 parts of SUMI-EPOXY (registered trademark) ELM434 as the component [B4], 35 parts of jER (registered trademark) 827 as epoxy resin other than the components [B3] and [B4], 45 parts of 3,3'-DAS as the component [C], and 8 parts of Sumika Excel (registered trademark) PES5003P as the component [D]. Then, according to the procedure described in the above paragraph (1), a second epoxy resin composition was prepared by mixing 5 parts of TOREP (registered trademark) A-204E as the component [B3], 60 parts of SUMI-EPOXY (registered trademark) ELM434 as the component [B4], 10 parts of jER (registered trademark) 827 and 25 parts of jER (registered trademark) 1004AF as epoxy resins other than the components [B3] and [B4], 45 parts of 3,3'-DAS as the component [C], 10 parts of Sumika Excel (registered trademark) PES5003P as the component [D], and 95 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $2.1 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,080 MPa as measured according the procedure described in the above paragraph (12).

The prepreg was rated as B in the overall evaluation for prepreg's processability and laminating performance and cured prepreg's tensile strength at low temperature as evaluated by the procedure described in the above paragraph (15) and it was found to be good in terms of the balance among processability, laminating performance, and cured prepreg's tensile strength at low temperature in an automated lay-up device.

<Example 18>

According to the procedure described in the above paragraph (1), a first epoxy resin composition was prepared by mixing 20 parts of TOREP (registered trademark) A-204E as the component [B3], 55 parts of SUMI-EPOXY (registered trademark) ELM434 as the component [B4], 25 parts of jER (registered trademark) 827 as epoxy resin other than the components [B3] and [B4], 45 parts of 3,3'-DAS as the component [C], and 8 parts of Sumika Excel (registered trademark) PES5003P as the component [D]. Then, according to the procedure described in the above paragraph (1), a second epoxy resin composition was prepared by mixing 20 parts of TOREP (registered trademark) A-204E as the component [B3], 55 parts of SUMI-EPOXY (registered trademark) ELM434 as the component [B4], 25 parts of jER (registered trademark) 1004AF as epoxy resins other than the components [B3] and [B4], 45 parts of 3,3'-DAS as the component [C], 10 parts of Sumika Excel (registered trademark) PES5003P as the component [D], and 95 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.6 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a 0° tensile

strength of 3,230 MPa as measured according the procedure described in the above paragraph (12).

The prepreg was rated as B in the overall evaluation for prepreg's processability and laminating performance and cured prepreg's tensile strength at low temperature as evaluated by the procedure described in the above paragraph (15) and it was found to be good in terms of the balance among processability, laminating performance, and cured prepreg's tensile strength at low temperature in an automated lay-up device.

<Example 19>

According to the procedure described in the above paragraph (1), a first epoxy resin composition was prepared by mixing 30 parts of TOREP (registered trademark) A-204E as the component [B3], 55 parts of SUMI-EPOXY (registered trademark) ELM434 as the component [B4], 15 parts of jER (registered trademark) 827 as epoxy resin other than the components [B3] and [B4], 45 parts of 3,3'-DAS as the component [C], and 8 parts of Sumika Excel (registered trademark) PES5003P as the component [D]. Then, according to the procedure described in the above paragraph (1), a second epoxy resin composition was prepared by mixing 30 parts of TOREP (registered trademark) A-204E as the component [B3], 55 parts of SUMI-EPOXY (registered trademark) ELM434 as the component [B4], 15 parts of jER (registered trademark) 1004AF as epoxy resins other than the components [B3] and [B4], 45 parts of 3,3'-DAS as the component [C], 11 parts of Sumika Excel (registered trademark) PES5003P as the component [D], and 100 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.2 \times 10^6$ Pa as measured at an angular frequency of 3.14 rad/s and was good in terms of the effect of reducing the amount of resin/fuzz built up to the path line and cutter blades. The average peel strength over 35°C to 50°C range calculated by the procedure described in the above paragraph (7) was 0.24 N/mm, indicating a tack particularly suitable for lamination by an automated lay-up device. In addition, the carbon fiber reinforced composite material had a 0° tensile strength of 3,250 MPa as measured according the procedure described in the above paragraph (12).

The prepreg was rated as B in the overall evaluation for prepreg's processability and laminating performance and cured prepreg's tensile strength at low temperature as evaluated by the procedure described in the above paragraph (15) and it was found to be good in terms of the balance among processability, laminating performance, and cured prepreg's tensile strength at low temperature in an automated lay-up device.

<Example 20>

According to the procedure described in the above paragraph (1), a first epoxy resin composition was prepared by mixing 40 parts of TOREP (registered trademark) A-204E as the component [B3], 50 parts of SUMI-EPOXY (registered trademark) ELM434 as the component [B4], 10 parts of jER (registered trademark) 827 as epoxy resin other than the components [B3] and [B4], 45 parts of 3,3'-DAS as the component [C], and 8 parts of Sumika Excel (registered trademark) PES5003P as the component [D]. Then, according to the procedure described in the above paragraph (1), a second epoxy resin composition was prepared by mixing 40 parts of TOREP (registered trademark) A-204E as the component [B3], 50 parts of SUMI-EPOXY (registered trademark) ELM434 as the component [B4], 10 parts of jER (registered trademark) 1004AF as epoxy resins other than the components [B3] and [B4], 45 parts of 3,3'-DAS as the component [C], 11 parts of Sumika Excel (registered trademark) PES5003P as the component [D], and 100 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.0 \times 10^6$ Pa as measured at an angular frequency of 3.14 rad/s and was acceptable in terms of the amount of resin/fuzz built up to the path line and also good in terms of the effect of reducing the amount of resin/fuzz built up to cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,290 MPa as measured according the procedure described in the above paragraph (12).

The prepreg was rated as C in the overall evaluation for prepreg's processability and laminating performance and cured prepreg's tensile strength at low temperature as evaluated by the procedure described in the above paragraph (15) and it was found to be acceptable in terms of the balance among processability, laminating performance, and cured prepreg's tensile strength at low temperature in an automated lay-up device.

<Example 21>

According to the procedure described in the above paragraph (1), a first epoxy resin composition was prepared by mixing 30 parts of TOREP (registered trademark) A-204E as the component [B3], 40 parts of SUMI-EPOXY (registered trademark) ELM434 as the component [B4], 30 parts of jER (registered trademark) 827 as epoxy resin other than the components [B3] and [B4], 45 parts of 3,3'-DAS as the component [C], and 8 parts of Sumika Excel (registered trademark) PES5003P as the component [D]. Then, according to the procedure described in the above paragraph (1), a second epoxy resin composition was prepared by mixing 30 parts of TOREP (registered trademark) A-204E as the component [B3], 40 parts of SUMI-EPOXY (registered trademark) ELM434 as the component [B4], 30 parts of jER (registered trademark) 1004AF as epoxy resins other than the components [B3] and [B4], 45 parts of 3,3'-DAS as the component [C], 10 parts of Sumika Excel (registered trademark) PES5003P as the component [D], and 95 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 8, the second epoxy resin composition prepared above had a storage elastic modulus G' at 25°C of $1.9 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,260 MPa as measured according the procedure described in the above paragraph (12).

The prepreg was rated as A in the overall evaluation for prepreg's processability and laminating performance and cured prepreg's tensile strength at low temperature as evaluated by the procedure described in the above paragraph (15) and it was found to be particularly good in terms of the balance among processability, laminating performance, and cured prepreg's tensile strength at low temperature in an automated lay-up device.

<Example 22>

According to the procedure described in the above paragraph (1), a first epoxy resin composition was prepared by mixing 10 parts of jER (registered trademark) 630 as the component [B5], 60 parts of SUMI-EPOXY (registered trademark) ELM434 and 30 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 10 parts of jER (registered trademark) 630 as the component [B5], 60 parts of SUMI-EPOXY (registered trademark) ELM434 and 30 parts of jER (registered trademark) 4004P as the component [B6], 35 parts of SEIKACURE-S as the component [C], 6 parts of Sumika Excel (registered trademark) PES5003P as the component [D], and 75 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 9, the second epoxy resin composition prepared above had a storage elastic modulus G' at 25°C of $2.3 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.21 N/mm, indicating a tack suitable for lamination by an automated lay-up device. In addition, the carbon fiber reinforced composite material had a glass transition temperature of 193°C as measured according to the procedure described in (10).

The prepreg was rated as B in the overall evaluation for prepreg's processability and laminating performance and cured prepreg's heat resistance as evaluated by the procedure described in the above paragraph (15) and it was found to be good in terms of the balance among processability, laminating performance, and cured prepreg's heat resistance in an automated lay-up device.

<Example 23>

According to the procedure described in the above paragraph (1), a first epoxy resin composition was prepared by mixing 20 parts of jER (registered trademark) 630 as the component [B5], 60 parts of SUMI-EPOXY (registered trademark) ELM434 and 20 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by

mixing 20 parts of jER (registered trademark) 630 as the component [B5], 60 parts of SUMI-EPOXY (registered trademark) ELM434 and 20 parts of jER (registered trademark) 4004P as the component [B6], 35 parts of SEIKACURE-S as the component [C], 9 parts of Sumika Excel (registered trademark) PES5003P as the component [D], and 76 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 9, the second epoxy resin composition prepared above had a storage elastic modulus G' at 25°C of $1.6 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a glass transition temperature of 198°C as measured according to the procedure described in (10).

The prepreg was rated as A in the overall evaluation for prepreg's processability and laminating performance and cured prepreg's heat resistance as evaluated by the procedure described in the above paragraph (15) and it was found to be particularly good in terms of the balance among processability, laminating performance, and cured prepreg's heat resistance in an automated lay-up device.

<Example 24>

According to the procedure described in the above paragraph (1), a first epoxy resin composition was prepared by mixing 30 parts of jER (registered trademark) 630 as the component [B5], 60 parts of SUMI-EPOXY (registered trademark) ELM434 and 10 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 30 parts of jER (registered trademark) 630 as the component [B5], 60 parts of SUMI-EPOXY (registered trademark) ELM434 and 10 parts of jER (registered trademark) 4004P as the component [B6], 35 parts of SEIKACURE-S as the component [C], 11 parts of Sumika Excel (registered trademark) PES5003P as the component [D], and 77 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 9, the second epoxy resin composition prepared above had a storage elastic modulus G' at 25°C of $8.2 \times 10^5$ Pa as measured at an angular frequency of 3.14 rad/s and was acceptable in terms of the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a glass transition temperature of 204°C as measured according to the procedure described in (10).

The prepreg was rated as C in the overall evaluation for prepreg's processability and laminating performance and cured prepreg's heat resistance as evaluated by the procedure described in the above paragraph (15) and it was found to be acceptable in terms of the balance among processability, laminating performance, and cured prepreg's heat resistance in an automated lay-up device.

<Example 25>

According to the procedure described in the above paragraph (1), a first epoxy resin composition was prepared by mixing 20 parts of jER (registered trademark) 630 as the component [B5], 60 parts of SUMI-EPOXY (registered trademark) ELM434 and 20 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 20 parts of jER (registered trademark) 630 as the component [B5], 60 parts of SUMI-EPOXY (registered trademark) ELM434, 10 parts of jER (registered trademark) 807, and 10 parts of jER (registered trademark) 4004P as the component [B6], 35 parts of SEIKACURE-S as the component [C], 9 parts of Sumika Excel (registered trademark) PES5003P as the component [D], and 76 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 9, the second epoxy resin composition prepared above had a storage elastic modulus G' at

25°C of 1.2 × $10^6$ Pa as measured at an angular frequency of 3.14 rad/s and was good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a glass transition temperature of 200°C as measured according to the procedure described in (10).

The prepreg was rated as B in the overall evaluation for prepreg's processability and laminating performance and cured prepreg's heat resistance as evaluated by the procedure described in the above paragraph (15) and it was found to be good in terms of the balance among processability, laminating performance, and cured prepreg's heat resistance in an automated lay-up device.

<Example 26>

According to the procedure described in the above paragraph (1), a first epoxy resin composition was prepared by mixing 20 parts of jER (registered trademark) 630 as the component [B5], 60 parts of SUMI-EPOXY (registered trademark) ELM434 and 20 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 20 parts of jER (registered trademark) 630 as the component [B5], 60 parts of SUMI-EPOXY (registered trademark) ELM434 and 20 parts of jER (registered trademark) 4004P as the component [B6], 35 parts of SEIKACURE-S as the component [C], 8 parts of Sumika Excel (registered trademark) PES5003P as the component [D], and 75 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 9, the second epoxy resin composition prepared above had a storage elastic modulus G' at 25°C of 1.1 × $10^6$ Pa as measured at an angular frequency of 3.14 rad/s and was good in terms of the effect of reducing the amount of resin/fuzz built up to the path line and cutter blades. The average peel strength over 35°C to 50°C range calculated by the procedure described in the above paragraph (7) was 0.21 N/mm, indicating a tack suitable for lamination by an automated lay-up device. In addition, the carbon fiber reinforced composite material had a glass transition temperature of 198°C as measured according to the procedure described in (10).

The prepreg was rated as C in the overall evaluation for prepreg's processability and laminating performance and cured prepreg's heat resistance as evaluated by the procedure described in the above paragraph (15) and it was found to be acceptable in terms of the balance among processability, laminating performance, and cured prepreg's heat resistance in an automated lay-up device.

<Example 27>

According to the procedure described in the above paragraph (1), a first epoxy resin composition was prepared by mixing 20 parts of jER (registered trademark) 630 as the component [B5], 60 parts of SUMI-EPOXY (registered trademark) ELM434 and 20 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 20 parts of jER (registered trademark) 630 as the component [B5], 60 parts of SUMI-EPOXY (registered trademark) ELM434 and 20 parts of jER (registered trademark) 4004P as the component [B6], 35 parts of SEIKACURE-S as the component [C], 10 parts of Sumika Excel (registered trademark) PES5003P as the component [D], and 77 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 9, the second epoxy resin composition prepared above had a storage elastic modulus G' at 25°C of 2.2 × $10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a glass transition temperature of 198°C as measured according to the procedure described in (10).

The prepreg was rated as A in the overall evaluation for prepreg's processability and laminating performance and cured prepreg's heat resistance as evaluated by the procedure described in the above paragraph (15) and it was found to be particularly good in terms of the balance among processability, laminating performance, and cured prepreg's heat

resistance in an automated lay-up device.

<Example 28>

According to the procedure described in paragraph (1), a first epoxy resin composition was prepared by mixing 60 parts of SUMI-EPOXY (registered trademark) ELM434 as the component [B2], 40 parts of jER (registered trademark) 827 as the component [B6], 45 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 60 parts of SUMI-EPOXY (registered trademark) ELM434 as the component [B2], 40 parts of jER (registered trademark) 1004AF as the component [B6], 45 parts of SEIKACURE-S as the component [C], 5 parts of Sumika Excel (registered trademark) PES5003P as the component [D], and 80 parts of polyamide particles prepared by the above method as the component [E].
In addition, using Torayca (registered trademark) T800SC-24000 as the component [A] and also using the first and second epoxy resin compositions prepared above, a prepreg was produced by the procedure described in the above paragraph (3).
As shown in Table 10, the second epoxy resin composition prepared above had a storage elastic modulus G' at 25°C of $2.6 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.21 N/mm, indicating a tack suitable for lamination by an automated lay-up device. In addition, the carbon fiber reinforced composite material had a glass transition temperature of 185°C as measured according to the procedure described in (10).
The prepreg was rated as C in the overall evaluation for prepreg's processability and laminating performance and cured prepreg's heat resistance as evaluated by the procedure described in the above paragraph (15) and it was found to be acceptable in terms of the balance among processability, laminating performance, and cured prepreg's heat resistance in an automated lay-up device.

<Example 29>

According to the procedure described in paragraph (1), a first epoxy resin composition was prepared by mixing 60 parts of SUMI-EPOXY (registered trademark) ELM434 as the component [B2], 30 parts of jER (registered trademark) 827 as the component [B6], 10 parts of SE-01GM as epoxy resin other than the components [B1] to [B6], 45 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 60 parts of SUMI-EPOXY (registered trademark) ELM434 as the component [B2], 30 parts of jER (registered trademark) 1004AF as the component [B6], 10 parts of SE-01GM as epoxy resin other than the components [B1] to [B6], 45 parts of SEIKACURE-S as the component [C], 6 parts of Sumika Excel (registered trademark) PES5003P as the component [D], and 80 parts of polyamide particles prepared by the above method as the component [E].
In addition, using Torayca (registered trademark) T800SC-24000 as the component [A] and also using the first and second epoxy resin compositions prepared above, a prepreg was produced by the procedure described in the above paragraph (3).
As shown in Table 10, the second epoxy resin composition prepared above had a storage elastic modulus G' at 25°C of $1.9 \times 10^6$ Pa as measured at an angular frequency of 3.14 rad/s and was particularly good in terms of the effect of reducing the amount of resin/fuzz built up to the path line and cutter blades. The average peel strength over 35°C to 50°C range calculated by the procedure described in the above paragraph (7) was 0.21 N/mm, indicating a tack suitable for lamination by an automated lay-up device. In addition, the carbon fiber reinforced composite material had a glass transition temperature of 210°C as measured according to the procedure described in (10).
The prepreg was rated as A in the overall evaluation for prepreg's processability and laminating performance and cured prepreg's heat resistance as evaluated by the procedure described in the above paragraph (15) and it was found to be particularly good in terms of the balance among processability, laminating performance, and cured prepreg's heat resistance in an automated lay-up device.

<Example 30>

According to the procedure described in paragraph (1), a first epoxy resin composition was prepared by mixing 60 parts of SUMI-EPOXY (registered trademark) ELM434 as the component [B2], 20 parts of jER (registered trademark) 827 as the component [B6], 20 parts of SE-01GM as epoxy resin other than the components [B1] to [B6], 45 parts of SEIKACURE-S as the component [C], and 12 parts of Sumika Excel (registered trademark) PES5003P as the component [D]. Then, according to the procedure described in the above paragraph (1), a second epoxy resin composition was

prepared by mixing 60 parts of SUMI-EPOXY (registered trademark) ELM434 as the component [B2], 20 parts of jER (registered trademark) 1004AF as the component [B6], 20 parts of SE-01GM as epoxy resin other than the components [B1] to [B6], 45 parts of SEIKACURE-S as the component [C], 9 parts of Sumika Excel (registered trademark) PES5003P as the component [D], and 82 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 10, the second epoxy resin composition prepared above had a storage elastic modulus G' at 25°C of $1.3 \times 10^6$ Pa as measured at an angular frequency of 3.14 rad/s and was good in terms of the effect of reducing the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a glass transition temperature of 219°C as measured according to the procedure described in (10).

The prepreg was rated as B in the overall evaluation for prepreg's processability and laminating performance and cured prepreg's heat resistance as evaluated by the procedure described in the above paragraph (15) and it was found to be good in terms of the balance among processability, laminating performance, and cured prepreg's heat resistance in an automated lay-up device.

<Example 31>

According to the procedure described in paragraph (1), a first epoxy resin composition was prepared by mixing 45 parts of SUMI-EPOXY (registered trademark) ELM434 as the component [B2], 15 parts of jER (registered trademark) 827 as the component [B6], 40 parts of SE-01GM as epoxy resin other than the components [B1] to [B6], 46 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 45 parts of SUMI-EPOXY (registered trademark) ELM434 as the component [B2], 15 parts of jER (registered trademark) 1004AF as the component [B6], 40 parts of SE-01GM as epoxy resin other than the components [B1] to [B6], 46 parts of SEIKACURE-S as the component [C], 10 parts of Sumika Excel (registered trademark) PES5003P as the component [D], and 83 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 10, the second epoxy resin composition prepared above had a storage elastic modulus G' at 25°C of $8.1 \times 10^5$ Pa as measured at an angular frequency of 3.14 rad/s and was acceptable in terms of the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a glass transition temperature of 258°C as measured according to the procedure described in (10).

The prepreg was rated as C in the overall evaluation for prepreg's processability and laminating performance and cured prepreg's heat resistance as evaluated by the procedure described in the above paragraph (15) and it was found to be acceptable in terms of the balance among processability, laminating performance, and cured prepreg's heat resistance in an automated lay-up device.

<Example 32>

According to the procedure described in paragraph (1), a first epoxy resin composition was prepared by mixing 25 parts of SUMI-EPOXY (registered trademark) ELM434 as the component [B2], 15 parts of jER (registered trademark) 827 as the component [B6], 60 parts of SE-01GM as epoxy resin other than the components [B1] to [B6], 43 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 25 parts of SUMI-EPOXY (registered trademark) ELM434 as the component [B2], 15 parts of jER (registered trademark) 1004AF as the component [B6], 60 parts of SE-01GM as epoxy resin other than the components [B1] to [B6], 43 parts of SEIKACURE-S as the component [C], 11 parts of Sumika Excel (registered trademark) PES5003P as the component [D], and 83 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 10, the second epoxy resin composition prepared above had a storage elastic modulus G' at

25°C of $8.0 \times 10^5$ Pa as measured at an angular frequency of 3.14 rad/s and was acceptable in terms of the amount of resin/fuzz built up to the path line and cutter blades. The average peel strength over 35°C to 50°C range calculated by the procedure described in the above paragraph (7) was 0.22 N/mm, indicating a tack suitable for lamination by an automated lay-up device. In addition, the carbon fiber reinforced composite material had a glass transition temperature of more than 300°C as measured according to the procedure described in (10).

The prepreg was rated as C in the overall evaluation for prepreg's processability and laminating performance and cured prepreg's heat resistance as evaluated by the procedure described in the above paragraph (15) and it was found to be acceptable in terms of the balance among processability, laminating performance, and cured prepreg's heat resistance in an automated lay-up device.

[Comparative Example 1]

According to the procedure described in the above paragraph (1), a first epoxy resin composition was prepared by mixing 30 parts of EPICLON (registered trademark) HP-4770 as the component [B1], 55 parts of Araldite (registered trademark) MY721 as the component [B2], 15 parts of jER (registered trademark) 807 as epoxy resin other than the components [B1] and [B2], 42 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of EPICLON (registered trademark) HP-4770 as the component [B1], 55 parts of Araldite (registered trademark) MY721 as the component [B2], 15 parts of jER (registered trademark) 807 as epoxy resin other than the components [B1] and [B2], 42 parts of SEIKACURE-S as the component [C], 12 parts of Sumika Excel (registered trademark) PES5003P as the component [D], and 22 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 11, the second epoxy resin composition prepared above had a storage elastic modulus G' at 25°C of $2.7 \times 10^5$ Pa as measured at an angular frequency of 3.14 rad/s, and the amount of resin/fuzz built up to the path line and cutter blades was so large that it was unacceptable. On the other hand, the average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a glass transition temperature of 162°C under water absorbing conditions as measured according to the procedure described in (10).

The prepreg was rated as D in the overall evaluation for prepreg's processability and laminating performance and cured prepreg's heat resistance under water absorbing conditions as evaluated by the procedure described in the above paragraph (15) and it was found to be insufficient and unacceptable in terms of the balance among processability, laminating performance, and cured prepreg's heat resistance under water absorbing conditions in an automated lay-up device.

[Comparative Example 2]

According to the procedure described in the above paragraph (1), a first epoxy resin composition was prepared by mixing 30 parts of EPICLON (registered trademark) HP-4770 as the component [B1], 50 parts of Araldite (registered trademark) MY721 as the component [B2], 20 parts of jER (registered trademark) 807 as epoxy resin other than the components [B1] and [B2], 42 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of EPICLON (registered trademark) HP-4770 as the component [B1], 50 parts of Araldite (registered trademark) MY721 as the component [B2], 20 parts of jER (registered trademark) 807 as epoxy resin other than the components [B1] and [B2], 42 parts of SEIKACURE-S as the component [C], 16 parts of Sumika Excel (registered trademark) PES5003P as the component [D], and 22 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 11, the second epoxy resin composition prepared above had a storage elastic modulus G' at 25°C of $3.9 \times 10^5$ Pa as measured at an angular frequency of 3.14 rad/s, and the amount of resin/fuzz built up to the path line and cutter blades was so large that it was unacceptable. On the other hand, the average peel strength over 35°C to 50°C range calculated by the procedure described in the above paragraph (7) was 0.28 N/mm, indicating a tack particularly suitable for lamination by an automated lay-up device. In addition, the carbon fiber reinforced composite material had a

glass transition temperature of 160°C under water absorbing conditions as measured according to the procedure described in (10).

The prepreg was rated as D in the overall evaluation for prepreg's processability and laminating performance and cured prepreg's heat resistance under water absorbing conditions as evaluated by the procedure described in the above paragraph (15) and it was found to be insufficient and unacceptable in terms of the balance among processability, laminating performance, and cured prepreg's heat resistance under water absorbing conditions in an automated lay-up device.

[Comparative Example 3]

According to the procedure described in the above paragraph (1), a first epoxy resin composition was prepared by mixing 30 parts of EPICLON (registered trademark) HP-4700 as the component [B1], 30 parts of Araldite (registered trademark) MY721 as the component [B2], 40 parts of jER (registered trademark) 807 as epoxy resin other than the components [B1] and [B2], 41 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of EPICLON (registered trademark) HP-4700 as the component [B1], 30 parts of Araldite (registered trademark) MY721 as the component [B2], 40 parts of jER (registered trademark) 807 as epoxy resin other than the components [B1] and [B2], 41 parts of SEIKACURE-S as the component [C], 15 parts of Sumika Excel (registered trademark) PES5003P as the component [D], and 21 parts of polyamide particles prepared by the above method as the component [E].

However, the second epoxy resin composition prepared above was so high in viscosity that it was not able to be spread uniformly over a release paper sheet. As a result, it was impossible to prepare a second resin film and to produce a prepreg.

[Comparative Example 4]

According to the procedure described in the above paragraph (1), a first epoxy resin composition was prepared by mixing 25 parts of TOREP (registered trademark) A-204E as the component [B3], 60 parts of SUMI-EPOXY (registered trademark) ELM434 as the component [B4], 15 parts of jER (registered trademark) 807 as epoxy resin other than the components [B3] and [B4], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 25 parts of TOREP (registered trademark) A-204E as the component [B3], 60 parts of SUMI-EPOXY (registered trademark) ELM434 as the component [B4], 15 parts of jER (registered trademark) 807 as epoxy resin other than the components [B3] and [B4], 47 parts of SEIKACURE-S as the component [C], 13 parts of Sumika Excel (registered trademark) PES5003P as the component [D], and 80 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 11, the second epoxy resin composition prepared above had a storage elastic modulus G' at 25°C of $2.6 \times 10^5$ Pa as measured at an angular frequency of 3.14 rad/s, and the amount of resin/fuzz built up to the path line and cutter blades was so large that it was unacceptable. On the other hand, the average peel strength over 35°C to 50°C range calculated by the procedure described in the above paragraph (7) was 0.23 N/mm, indicating a tack particularly suitable for lamination by an automated lay-up device. In addition, the carbon fiber reinforced composite material had a 0° tensile strength of 3,250 MPa as measured according the procedure described in the above paragraph (12).

The prepreg was rated as D in the overall evaluation for prepreg's processability and laminating performance and cured prepreg's tensile strength at low temperature as evaluated by the procedure described in the above paragraph (15) and it was found to be insufficient and unacceptable in terms of the balance among processability, laminating performance, and cured prepreg's tensile strength at low temperature in an automated lay-up device.

[Comparative Example 5]

According to the procedure described in the above paragraph (1), a first epoxy resin composition was prepared by mixing 30 parts of TOREP (registered trademark) A-204E as the component [B3], 55 parts of SUMI-EPOXY (registered trademark) ELM434 as the component [B4], 15 parts of jER (registered trademark) 827 as epoxy resin other than the components [B3] and [B4], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of TOREP (registered trademark) A-204E as the

component [B3], 55 parts of SUMI-EPOXY (registered trademark) ELM434 as the component [B4], 15 parts of jER (registered trademark) 827 as epoxy resin other than the components [B3] and [B4], 47 parts of SEIKACURE-S as the component [C], 16 parts of Sumika Excel (registered trademark) PES5003P as the component [D], and 80 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 11, the second epoxy resin composition prepared above had a storage elastic modulus G' at 25°C of $3.8 \times 10^5$ Pa as measured at an angular frequency of 3.14 rad/s, and the amount of resin/fuzz built up to the path line and cutter blades was so large that it was unacceptable. On the other hand, the average peel strength over 35°C to 50°C range calculated by the procedure described in the above paragraph (7) was 0.28 N/mm, indicating a tack particularly suitable for lamination by an automated lay-up device. In addition, the carbon fiber reinforced composite material had a 0° tensile strength of 3,300 MPa as measured according the procedure described in the above paragraph (12).

The prepreg was rated as D in the overall evaluation for prepreg's processability and laminating performance and cured prepreg's tensile strength at low temperature as evaluated by the procedure described in the above paragraph (15) and it was found to be insufficient and unacceptable in terms of the balance among processability, laminating performance, and cured prepreg's tensile strength at low temperature in an automated lay-up device.

[Comparative Example 6]

According to the procedure described in the above paragraph (1), a first epoxy resin composition was prepared by mixing 30 parts of TOREP (registered trademark) A-204E as the component [B3], 70 parts of SUMI-EPOXY (registered trademark) ELM434 as the component [B4], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 30 parts of TOREP (registered trademark) A-204E as the component [B3], 70 parts of SUMI-EPOXY (registered trademark) ELM434 as the component [B4], 47 parts of SEIKACURE-S as the component [C], 18 parts of Sumika Excel (registered trademark) PES5003P as the component [D], and 80 parts of polyamide particles prepared by the above method as the component [E].

However, the second epoxy resin composition prepared above was so high in viscosity that it was not able to be spread uniformly over a release paper sheet. As a result, it was impossible to prepare a second resin film and to produce a prepreg.

[Comparative Example 7]

According to the procedure described in the above paragraph (1), a first epoxy resin composition was prepared by mixing 5 parts of jER (registered trademark) 630 as the component [B5], 60 parts of SUMI-EPOXY (registered trademark) ELM434 and 35 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 5 parts of jER (registered trademark) 630 as the component [B5], 60 parts of SUMI-EPOXY (registered trademark) ELM434 and 35 parts of jER (registered trademark) 807 as the component [B6], 35 parts of SEIKACURE-S as the component [C], 20 parts of Sumika Excel (registered trademark) PES5003P as the component [D], and 20 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 11, the second epoxy resin composition prepared above had a storage elastic modulus G' at 25°C of $2.9 \times 10^5$ Pa as measured at an angular frequency of 3.14 rad/s, and the amount of resin/fuzz built up to the path line and cutter blades was so large that it was unacceptable. On the other hand, the average peel strength over 35°C to 50°C range calculated by the procedure described in the above paragraph (7) was 0.24 N/mm, indicating a tack particularly suitable for lamination by an automated lay-up device. In addition, the carbon fiber reinforced composite material had a glass transition temperature of 188°C under water absorbing conditions as measured according to the procedure described in (10).

The prepreg was rated as D in the overall evaluation for prepreg's processability and laminating performance and cured prepreg's heat resistance as evaluated by the procedure described in the above paragraph (15) and it was found to be insufficient and unacceptable in terms of the balance among processability, laminating performance, and cured prepreg's heat resistance in an automated lay-up device.

[Comparative Example 8]

According to the procedure described in the above paragraph (1), a first epoxy resin composition was prepared by mixing 10 parts of jER (registered trademark) 630 as the component [B5], 60 parts of SUMI-EPOXY (registered trademark) ELM434 and 30 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 10 parts of jER (registered trademark) 630 as the component [B5], 60 parts of SUMI-EPOXY (registered trademark) ELM434 and 30 parts of jER (registered trademark) 807 as the component [B6], 35 parts of SEIKACURE-S as the component [C], 24 parts of Sumika Excel (registered trademark) PES5003P as the component [D], and 20 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 11, the second epoxy resin composition prepared above had a storage elastic modulus G' at 25°C of $8.2 \times 10^5$ Pa as measured at an angular frequency of 3.14 rad/s, and the amount of resin/fuzz built up to the cutter blades was acceptable. However, the amount of resin/fuzz built up to the path line was so large that it was unacceptable. On the other hand, the average peel strength over 35°C to 50°C range calculated by the procedure described in the above paragraph (7) was 0.28 N/mm, indicating a tack particularly suitable for lamination by an automated lay-up device. In addition, the carbon fiber reinforced composite material had a glass transition temperature of 195°C under water absorbing conditions as measured according to the procedure described in (10).

The prepreg was rated as D in the overall evaluation for prepreg's processability and laminating performance and cured prepreg's heat resistance as evaluated by the procedure described in the above paragraph (15) and it was found to be insufficient and unacceptable in terms of the balance among processability, laminating performance, and cured prepreg's heat resistance in an automated lay-up device.

[Comparative Example 9]

According to the procedure described in the above paragraph (1), a first epoxy resin composition was prepared by mixing 10 parts of jER (registered trademark) 630 as the component [B5], 60 parts of SUMI-EPOXY (registered trademark) ELM434 and 30 parts of jER (registered trademark) 807 as the component [B6], 35 parts of SEIKACURE-S as the component [C], and 12 parts of Sumika Excel (registered trademark) PES5003P as the component [D]. Then, according to the procedure described in the above paragraph (1), a second epoxy resin composition was prepared by mixing 10 parts of jER (registered trademark) 630 as the component [B5], 60 parts of SUMI-EPOXY (registered trademark) ELM434 and 30 parts of jER (registered trademark) 807 as the component [B6], 35 parts of SEIKACURE-S as the component [C], 26 parts of Sumika Excel (registered trademark) PES5003P as the component [D], and 20 parts of polyamide particles prepared by the above method as the component [E].

However, the second epoxy resin composition prepared above was so high in viscosity that it was not able to be spread uniformly over a release paper sheet. As a result, it was impossible to prepare a second resin film and to produce a prepreg.

[Comparative Example 10]

According to the procedure described in paragraph (1), a first epoxy resin composition was prepared by mixing 60 parts of SUMI-EPOXY (registered trademark) ELM434, 25 parts of jER (registered trademark) 827, and 15 parts of jER (registered trademark) 807 as the component [B], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 60 parts of SUMI-EPOXY (registered trademark) ELM434, 25 parts of jER (registered trademark) 827, and 15 parts of jER (registered trademark) 807 as the component [B], 47 parts of SEIKACURE-S as the component [C], 18 parts of Sumika Excel (registered trademark) PES5003P as the component [D], and 71 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 12, the second epoxy resin composition prepared above had a storage elastic modulus G' at 25°C of $8.1 \times 10^5$ Pa as measured at an angular frequency of 3.14 rad/s and was acceptable in terms of the amount of resin/fuzz built up to the path line and cutter blades. The average peel strength over 35°C to 50°C range calculated by the

procedure described in the above paragraph (7) was 0.27 N/mm, indicating a tack particularly suitable for lamination by an automated lay-up device. In addition, the carbon fiber reinforced composite material had a glass transition temperature of 158°C under water absorbing conditions as measured according to the procedure described in (10).

The prepreg was rated as D in the overall evaluation for prepreg's processability and laminating performance and cured prepreg's heat resistance under water absorbing conditions as evaluated by the procedure described in the above paragraph (15) and it was found to be insufficient and unacceptable in terms of the balance among processability, laminating performance, and cured prepreg's heat resistance under water absorbing conditions in an automated lay-up device.

[Comparative Example 11]

According to the procedure described in paragraph (1), a first epoxy resin composition was prepared by mixing 60 parts of SUMI-EPOXY (registered trademark) ELM434, 25 parts of jER (registered trademark) 827, and 15 parts of jER (registered trademark) 807 as the component [B], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 60 parts of SUMI-EPOXY (registered trademark) ELM434, 25 parts of jER (registered trademark) 827, and 15 parts of jER (registered trademark) 807 as the component [B], 47 parts of SEIKACURE-S as the component [C], 20 parts of Sumika Excel (registered trademark) PES5003P as the component [D], and 72 parts of polyamide particles prepared by the above method as the component [E].

However, the second epoxy resin composition prepared above was so high in viscosity that it was not able to be spread uniformly over a release paper sheet. As a result, it was impossible to prepare a second resin film and to produce a prepreg.

[Comparative Example 12]

According to the procedure described in the above paragraph (1), a first epoxy resin composition was prepared by mixing 10 parts of jER (registered trademark) 827, 60 parts of SUMI-EPOXY (registered trademark) ELM434, and 30 parts of jER (registered trademark) 807 as the component [B], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 10 parts of jER (registered trademark) 827, 60 parts of SUMI-EPOXY (registered trademark) ELM434, 20 parts of jER (registered trademark) 807, and 10 parts of jER (registered trademark) 4004P as the component [B], 47 parts of SEIKACURE-S as the component [C], 16 parts of Sumika Excel (registered trademark) PES5003P as the component [D], and 71 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 12, the second epoxy resin composition prepared above had a storage elastic modulus G' at 25°C of $4.0 \times 10^5$ Pa as measured at an angular frequency of 3.14 rad/s, and the amount of resin/fuzz built up to the path line and cutter blades was so large that it was unacceptable. On the other hand, the average peel strength over 35°C to 50°C range calculated by the procedure described in the above paragraph (7) was 0.28 N/mm, indicating a tack particularly suitable for lamination by an automated lay-up device. In addition, the carbon fiber reinforced composite material had a glass transition temperature of 190°C as measured according to the procedure described in (10).

The prepreg was rated as D in the overall evaluation for prepreg's processability and laminating performance and cured prepreg's heat resistance as evaluated by the procedure described in the above paragraph (15) and it was found to be insufficient and unacceptable in terms of the balance among processability, laminating performance, and cured prepreg's heat resistance in an automated lay-up device.

[Comparative Example 13]

According to the procedure described in the above paragraph (1), a first epoxy resin composition was prepared by mixing 10 parts of jER (registered trademark) 827, 60 parts of SUMI-EPOXY (registered trademark) ELM434, and 30 parts of jER (registered trademark) 807 as the component [B], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 10 parts of jER (registered trademark) 827, 60 parts of SUMI-EPOXY (registered trademark) ELM434, 20 parts of jER (registered trademark) 807, and 10 parts of jER (registered trademark) 4004P as the component [B], 47 parts of SEIKACURE-S as the

component [C], 18 parts of Sumika Excel (registered trademark) PES5003P as the component [D], and 72 parts of polyamide particles prepared by the above method as the component [E].

In addition, using Torayca (registered trademark) T800SC-24000 as the component [A] and also using the first and second epoxy resin compositions prepared above, a prepreg was produced by the procedure described in the above paragraph (3).

As shown in Table 12, the second epoxy resin composition prepared above had a storage elastic modulus G' at 25°C of $8.2 \times 10^5$ Pa as measured at an angular frequency of 3.14 rad/s, and the amount of resin/fuzz built up to the cutter blades was acceptable. However, the amount of resin/fuzz built up to the path line was so large that it was unacceptable. On the other hand, the average peel strength over 35°C to 50°C range calculated by the procedure described in the above paragraph (7) was 0.28 N/mm, indicating a tack particularly suitable for lamination by an automated lay-up device. In addition, the carbon fiber reinforced composite material had a glass transition temperature of 190°C as measured according to the procedure described in (10).

The prepreg was rated as D in the overall evaluation for prepreg's processability and laminating performance and cured prepreg's heat resistance as evaluated by the procedure described in the above paragraph (15) and it was found to be insufficient and unacceptable in terms of the balance among processability, laminating performance, and cured prepreg's heat resistance in an automated lay-up device.

[Comparative Example 14]

According to the procedure described in the above paragraph (1), a first epoxy resin composition was prepared by mixing 10 parts of jER (registered trademark) 827, 60 parts of SUMI-EPOXY (registered trademark) ELM434, and 30 parts of jER (registered trademark) 807 as the component [B], 47 parts of SEIKACURE-S as the component [C], and 6 parts of Sumika Excel (registered trademark) PES5003P as the component [D]. Then, according to the procedure described in the above paragraph (1), a second epoxy resin composition was prepared by mixing 10 parts of jER (registered trademark) 827, 60 parts of SUMI-EPOXY (registered trademark) ELM434, 20 parts of jER (registered trademark) 807, and 10 parts of jER (registered trademark) 4004P as the component [B], 47 parts of SEIKACURE-S as the component [C], 20 parts of Sumika Excel (registered trademark) PES5003P as the component [D], and 70 parts of polyamide particles prepared by the above method as the component [E].

However, the second epoxy resin composition prepared above was so high in viscosity that it was not able to be spread uniformly over a release paper sheet. As a result, it was impossible to prepare a second resin film and to produce a prepreg.

A comparison between the results obtained in Examples 22 to 27 and those in Comparative examples 7 to 9 and 12 and 14 suggests that, in the case where the requirements of having a storage elastic modulus G' at 25°C of $8.0 \times 10^5$ to $6.0 \times 10^6$ Pa as measured at an angular frequency 3.14 rad/s and giving a value of 0.085 or more as calculated by the equation (1) specified above are not satisfied simultaneously, the amount of resin/fuzz built up to the path line and cutter blades is so large and the processability is so low that it is impossible to obtain a prepreg that shows a good balance among processability, laminating performance, and cured prepreg's heat resistance in an automated lay-up device, even if a cured prepreg having high heat resistance is obtained.

A comparison between the results obtained in Examples 1 to 6 and those in Comparative examples 1 and 2 suggests that, in the case where the requirements of having a storage elastic modulus G' at 25°C of $8.0 \times 10^5$ to $6.0 \times 10^6$ Pa as measured at an angular frequency 3.14 rad/s and giving a value of 0.085 or more as calculated by the equation (1) specified above are not satisfied simultaneously, the amount of resin/fuzz built up to the path line and cutter blades is so large and the processability is so low that it is impossible to obtain a prepreg that shows a good balance among processability, laminating performance, and cured prepreg's heat resistance under water absorbing conditions in an automated lay-up device, even if a cured prepreg having high heat resistance under water absorbing conditions is obtained.

A comparison between the results obtained in Examples 1 to 6 and those in Comparative example 3, 10, and 11 suggests that, in the case where the value specified by the equation (1) specified above is less than 0.085, it is impossible to obtain a prepreg that shows a good balance among processability, laminating performance, and cured prepreg's heat resistance under water absorbing conditions in an automated lay-up device, even if the storage elastic modulus G' at 25°C is in the range of $8.0 \times 10^5$ to $6.0 \times 10^6$ Pa as measured at an angular frequency 3.14 rad/s.

A comparison between the results obtained in Examples 7 to 21 and those in Comparative examples 4 and 5 suggests that, in the case where the requirements of having a storage elastic modulus G' at 25°C of $8.0 \times 10^5$ to $6.0 \times 10^6$ Pa as measured at an angular frequency 3.14 rad/s and giving a value of 0.085 or more as calculated by the equation (1) specified above are not satisfied simultaneously, the amount of resin/fuzz built up to the path line and cutter blades is so large and the processability is so low that it is impossible to obtain a prepreg that shows a good balance among processability, laminating performance, and cured prepreg's heat resistance at low temperature in an automated lay-up device, even if a cured prepreg having high tensile strength at low temperature is obtained.

A comparison between the results obtained in Examples 7 to 21 and those in Comparative example 6, 10, and 11 suggests that, in the case where the value specified by the equation (1) specified above is less than 0.085, it is impossible to obtain a prepreg that shows a good balance among processability, laminating performance, and cured prepreg's tensile strength in an automated lay-up device, even if the storage elastic modulus G' at 25°C is in the range of $8.0 \times 10^5$ to $6.0 \times 10^6$ Pa as measured at an angular frequency 3.14 rad/s.

A comparison between the results obtained in Examples 22 to 27 and those in Comparative examples 7 to 14 suggests that, in the case where the requirements of having a storage elastic modulus G' at 25°C of $8.0 \times 10^5$ to $6.0 \times 10^6$ Pa as measured at an angular frequency 3.14 rad/s and giving a value of 0.085 or more as calculated by the equation (1) specified above are not satisfied simultaneously, the amount of resin/fuzz built up to the path line and cutter blades is so large and the processability is so low that it is impossible to obtain a prepreg that shows a good balance among processability, laminating performance, and cured prepreg's heat resistance in an automated lay-up device, even if a cured prepreg having high heat resistance is obtained.

## Claims

1. A prepreg comprising at least the components [A] to [E] listed below and having a structure incorporating a first layer composed mainly of the component [A] and a first epoxy resin composition that contains the components [B] to [D] but is substantially free of the component [E] and a second layer composed mainly of a second epoxy resin composition that contains the components [B] to [E] and disposed adjacent to each surface of the first layer, the second epoxy resin composition being **characterized in that** its component [D] forms a homogeneous phase with the component [B] and accounts for 1 part by mass or more and less than 5 parts by mass relative to the total quantity of its components [B] to [E], which accounts for 100 parts by mass, and also **characterized by** having a storage elastic modulus G' at 25°C of $8.0 \times 10^5$ to $6.0 \times 10^6$ Pa as measured at an angular frequency of 3.14 rad/s, giving a value of 0.085 or more as calculated by the equation (1) specified below, and having a component [D] content of 1 part by mass or more and less than 10 parts by mass relative to the total quantity of the first epoxy resin composition and the second epoxy resin composition, which accounts for 100 parts by mass:

   [A] carbon fiber,
   [B] epoxy resin,
   [C] curing agent,
   [D] thermoplastic resin, and
   [E] particles containing a thermoplastic resin as primary component and having a volume-average particle diameter of 5 to 50 μm, determined as indicated in the specification.
   [Mathematical formula 1]

$$\frac{\log_{10}(G'\ (Pa)\ at\ 25°C) - \log_{10}(G'\ (Pa)\ at\ 40°C)}{15} \quad \text{equation (1)}$$

2. A prepreg as set forth in claim 1, wherein the component [B] is an epoxy resin containing components [B1] and [B2] as specified below:

   [B1] a bisnaphtalene type epoxy resin with at least di-functionality as represented by the general formula (A-1) shown below, and
   [B2] an epoxy resin with at least tri-functionality other than the epoxy resin [B1],

[Chemical formula 1]

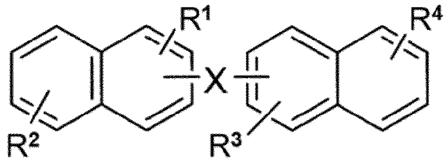

(A-1)

wherein in the general formula (A-1), X is an alkylene group with a carbon number of 1 to 8 or a group as represented by the general formula (A-2) shown below; $R^1$ to $R^5$ each represents one selected from the group

consisting of a group as represented by the general formula (A-3) or (A-4), a hydrogen atom, a halogen atom, a phenyl group, and an alkyl group with a carbon number of 1 to 4; $R^1$ to $R^4$ may be bonded to either ring of the naphtalene group or may be bonded to both rings simultaneously; $R^5$ may be bonded at any position of the benzene group; and essentially, three or more of $R^1$ to $R^5$ need to be a group represented by the following general formula (A-3), or alternatively, at least one group represented by the general formula (A-3) and at least one group represented by the general formula (A-4) need to be included among $R^1$ to $R^5$, and other Rs may be the same as or different from each other:

[Chemical formula 2]

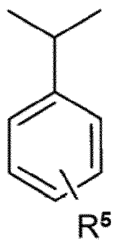

(A-2)

[Chemical formula 3]

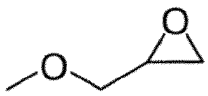

(A-3)

[Chemical formula 4]

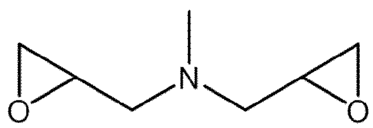

(A-4)

**3.** A prepreg as set forth in claim 2, wherein the component [B1] accounts for 10 to 50 parts by mass and the component [B2] accounts for 20 to 80 parts by mass relative to the total quantity of epoxy resin in the first epoxy resin composition and second epoxy resin composition, which accounts for 100 parts by mass.

**4.** A prepreg as set forth in either claim 2 or 3, wherein a carbon fiber reinforced composite material produced by curing the prepreg at 180°C for 2 hours has a glass transition temperature of 160°C or more as determined by dynamic mechanical analysis (DMA) after immersion in boiling water for 48 hours at 1 atm.

**5.** A prepreg as set forth in claim 1, wherein the component [B] is an epoxy resin containing components [B3] and [B4] as specified below:

[B3] epoxy resin containing one or more ring structures having at least four members and at the same time containing at least one glycidyl amine group or glycidyl ether group directly connected to a ring structure, and [B4] an epoxy resin with at least tri-functionality.

**6.** A prepreg as set forth in claim 5, wherein the component [B3] has a structure as shown by the general formula (A-5):

[Chemical formula 5]

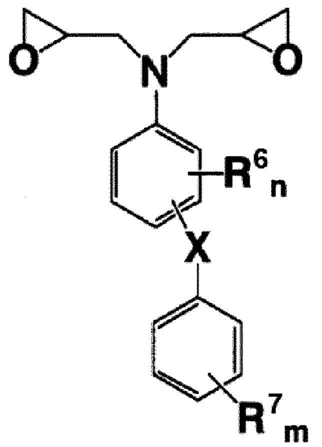

(A-5)

wherein $R^6$ and $R^7$ are each at least one selected from the group consisting of an aliphatic hydrocarbon group with a carbon number of 1 to 4, an alicyclic hydrocarbon group with a carbon number of 3 to 6, an aromatic hydrocarbon group with a carbon number of 6 to 10, a halogen atom, an acyl group, a trifluoromethyl group, and a nitro group; n is an integer of 0 to 4 and m is an integer of 0 to 5; when n or m is an integer of 2 or more, the $R^6$'s and $R^7$'s may be either identical to or different from each other; and X represents one selected from the group consisting of -O-, -S-, -CO-, -C(=O)O-, and - $SO_2$.

**7.** A prepreg as set forth in claim 6, wherein n = 0 and m = 0 in the general formula (A-5).

**8.** A prepreg as set forth in any one of claims 5 to 7, wherein the component [B3] accounts for 5 to 60 parts by mass and the component [B4] accounts for 40 to 80 parts by mass relative to the total quantity of epoxy resin in the first epoxy resin composition and second epoxy resin composition, which accounts for 100 parts by mass.

**9.** A prepreg as set forth in claim 1, wherein the component [B] is an epoxy resin containing components [B5] and [B6] as specified below:

[B5] m- or p-aminophenol type epoxy resin, and
[B6] a glycidyl ether type epoxy resin or a glycidyl amine type epoxy resin other than [B5] having two or more glycidyl groups in a molecule.

**10.** A prepreg as set forth in claim 9, wherein the component [B5] accounts for 10 to 50 parts by mass and the component [B6] accounts for 50 to 90 parts by mass relative to the total quantity of epoxy resin in the first epoxy resin composition and second epoxy resin composition, which accounts for 100 parts by mass.

**11.** A prepreg as set forth in either claim 9 or 10, wherein a carbon fiber reinforced composite material produced by curing the prepreg at 180°C for 2 hours has a glass transition temperature of 190°C or more as determined by dynamic mechanical analysis (DMA).

**12.** A prepreg as set forth in any one of claims 1 to 11, wherein the second epoxy resin composition has a viscosity at 85°C of 10 to 300 Pa·s, measured as indicated in the specification.

**13.** A prepreg as set forth in any one of claims 1 to 12, wherein the component [D] is polysulfone or polyethersulfone.

**14.** A slit tape prepreg produced by slitting a prepreg as set forth in any one of claims 1 to 13.

**15.** A carbon fiber reinforced composite material produced by laying up layers of the prepreg set forth in any one of claims 1 to 13 or layers of the slit tape prepreg set forth in claim 14, followed by curing them.

**16.** A prepreg production method comprising a step for preparing a primary prepreg by impregnating the component [A] given below with a first epoxy resin composition containing at least the components [B] to [D] listed below, and a subsequent step for impregnating each surface thereof with a second epoxy resin composition containing at least the components [B] to [E] listed below, the second epoxy resin composition being **characterized in that** its component [D]

forms a homogeneous phase with the component [B] and accounts for 1 part by mass or more and less than 5 parts by mass relative to the total quantity of its components [B] to [E], which accounts for 100 parts by mass, and also **characterized by** having a storage elastic modulus G' at 25°C of $8.0 \times 10^5$ to $6.0 \times 10^6$ Pa as measured at an angular frequency of 3.14 rad/s, giving a value of 0.085 or more as calculated by the equation (1) specified below, and having a component [D] content of 1 part by mass or more and less than 10 parts by mass relative to the total quantity of the first epoxy resin composition and the second epoxy resin composition, which accounts for 100 parts by mass:

[A] carbon fiber,
[B] epoxy resin,
[C] curing agent,
[D] thermoplastic resin, and
[E] particles containing a thermoplastic resin as primary component and having a volume-average particle diameter of 5 to 50 μm, determined as indicated in the specification.
[Mathematical formula 2]

$$\frac{\log_{10}(G'\ (Pa)\ at\ 25°C) - \log_{10}(G'\ (Pa)\ at\ 40°C)}{15} \qquad \text{equation (1)}$$

**17.** A prepreg production method as set forth in claim 16, wherein the component [B] is an epoxy resin containing components [B1] and [B2] as specified below:

[B1] a bisnaphtalene type epoxy resin with at least di-functionality as represented by the general formula (A-1) shown below, and
[B2] an epoxy resin with at least tri-functionality other than the epoxy resin [B1],

[Chemical formula 6]

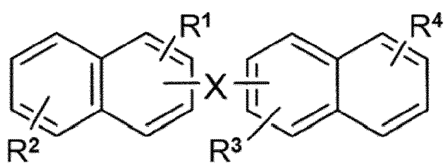

(A-1)

wherein in the general formula (A-1), X is an alkylene group with a carbon number of 1 to 8 or a group as represented by the general formula (A-2) shown below; $R^1$ to $R^5$ each represents one selected from the group consisting of a group as represented by the general formula (A-3) or (A-4), a hydrogen atom, a halogen atom, a phenyl group, and an alkyl group with a carbon number of 1 to 4; $R^1$ to $R^4$ may be bonded to either ring of the naphtalene group or may be bonded to both rings simultaneously; $R^5$ may be bonded at any position of the benzene group; and essentially, three or more of $R^1$ to $R^5$ need to be a group represented by the following general formula (A-3), or alternatively, at least one group represented by the general formula (A-3) and at least one group represented by the general formula (A-4) need to be included among $R^1$ to $R^5$, and other Rs may be the same as or different from each other:

[Chemical formula 7]

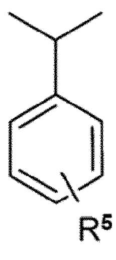

(A-2)\

[Chemical formula 8]

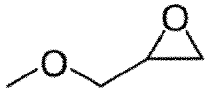

(A-3)

[Chemical formula 9]

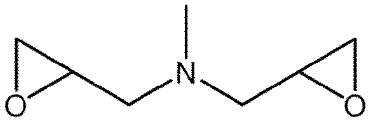

(A-4)

**18.** A prepreg production method as set forth in claim 16, wherein the component [B] is an epoxy resin containing components [B3] and [B4] as specified below:

[B3] epoxy resin containing one or more ring structures having at least four members and at the same time containing at least one glycidyl amine group or glycidyl ether group directly connected to a ring structure, and
[B4] an epoxy resin with at least tri-functionality.

**19.** A prepreg production method as set forth in claim 16, wherein the component [B] is an epoxy resin containing components [B5] and [B6] as specified below:

[B5] m- or p-aminophenol type epoxy resin, and
[B6] a glycidyl ether type epoxy resin or a glycidyl amine type epoxy resin other than [B5] having two or more glycidyl groups in a molecule.

## Patentansprüche

**1.** Prepreg, umfassend mindestens die nachstehend aufgeführten Komponenten [A] bis [E] und mit einer Struktur, die eine erste Schicht, die hauptsächlich aus der Komponente [A] und einer ersten Epoxidharzzusammensetzung besteht, die die Komponenten [B] bis [D] enthält, aber im Wesentlichen frei von der Komponente [E] ist, und eine zweite Schicht, die hauptsächlich aus einer zweiten Epoxidharzzusammensetzung besteht, die die Komponenten [B] bis [E] enthält und angrenzend an jede Oberfläche der ersten Schicht angeordnet ist, enthält, wobei die zweite Epoxidharzzusammensetzung **dadurch gekennzeichnet ist, dass** ihre Komponente [D] eine homogene Phase mit der Komponente [B] bildet und 1 Massenteil oder mehr und weniger als 5 Massenteile, bezogen auf die Gesamtmenge ihrer Komponenten [B] bis [E], ausmacht, was 100 Massenteile ausmacht, und auch **dadurch gekennzeichnet ist, dass** sie einen Speicherelastizitätsmodul G' bei 25 °C von $8{,}0 \cdot 10^5$ bis $6{,}0 \cdot 10^6$ Pa, gemessen bei einer Winkelfrequenz von 3,14 rad/s, aufweist, was einen Wert von 0,085 oder mehr ergibt, wie durch die nachstehend angegebene Gleichung (1) berechnet, und einen Gehalt an Komponente [D] von 1 Massenteil oder mehr und weniger als 10 Massenteilen, bezogen auf die Gesamtmenge der ersten Epoxidharzzusammensetzung und der zweiten Epoxidharzzusammensetzung, aufweist, was 100 Massenteile ausmacht:

[A] Kohlenstofffaser,
[B] Epoxidharz,
[C] Härtungsmittel,
[D] thermoplastisches Harz und
[E] Teilchen, die ein thermoplastisches Harz als primäre Komponente enthalten und einen volumengemittelten Teilchendurchmesser von 5 bis 50 μm aufweisen, bestimmt wie in der Beschreibung angegeben.
[Mathematische Formel 1]

$$\frac{\log_{10}(G' \text{ (Pa) bei } 25°C) - \log_{10}(G' \text{ (Pa) bei } 40°C)}{15} \quad \text{Gleichung (1)}$$

2. Prepreg wie in Anspruch 1 festgelegt, wobei die Komponente [B] ein Epoxidharz ist, das die Komponenten [B1] und [B2] wie nachstehend spezifiziert enthält:

[B1] ein Epoxidharz vom Bis-Naphthalin-Typ mit mindestens Difunktionalität, wie durch die nachstehend gezeigte allgemeine Formel (A-1) dargestellt, und
[B2] ein Epoxidharz mit mindestens Trifunktionalität, das von dem Epoxidharz [B1] verschieden ist,

[Chemische Formel 1]

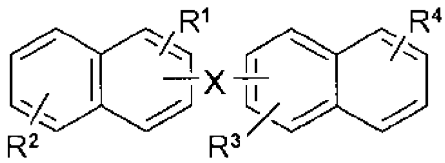

(A-1)

wobei in der allgemeinen Formel (A-1) X eine Alkylengruppe mit einer Kohlenstoffzahl von 1 bis 8 oder eine Gruppe, wie durch die nachstehend gezeigte allgemeine Formel (A-2) dargestellt, ist; $R^1$ bis $R^5$ jeweils eines, ausgewählt aus der Gruppe, bestehend aus einer Gruppe, wie durch die allgemeine Formel (A-3) oder (A-4) dargestellt, einem Wasserstoffatom, einem Halogenatom, einer Phenylgruppe und einer Alkylgruppe mit einer Kohlenstoffzahl von 1 bis 4, darstellen; $R^1$ bis $R^4$ an jeden Ring der Naphthalingruppe gebunden sein können oder gleichzeitig an beide Ringe gebunden sein können; $R^5$ an jeder Position der Benzolgruppe gebunden sein kann; und im Wesentlichen drei oder mehr von $R^1$ bis $R^5$ eine Gruppe, dargestellt durch die folgende allgemeine Formel (A-3), sein müssen, oder alternativ mindestens eine Gruppe,
dargestellt durch die allgemeine Formel (A-3), und mindestens eine Gruppe, dargestellt durch die allgemeine Formel (A-4), unter $R^1$ bis $R^5$ enthalten sein müssen, und andere Rs gleich oder voneinander verschieden sein können:

[Chemische Formel 2]

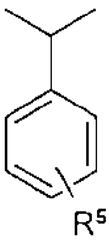

(A-2)

[Chemische Formel 3]

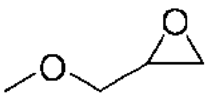

(A-3)

[Chemische Formel 4]

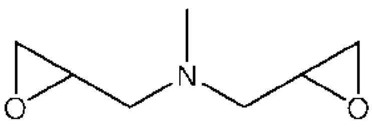

(A-4)

**3.** Prepreg wie in Anspruch 2 festgelegt, wobei die Komponente [B1] 10 bis 50 Massenteile ausmacht und die Komponente [B2] 20 bis 80 Massenteile, bezogen auf die Gesamtmenge an Epoxidharz in der ersten Epoxidharzzusammensetzung und der zweiten Epoxidharzzusammensetzung, die 100 Massenteile ausmacht, ausmacht.

**4.** Prepreg wie entweder in Anspruch 2 oder 3 festgelegt, wobei ein kohlenstofffaserverstärkter Verbundstoff, der durch Härten des Prepregs bei 180 °C für 2 Stunden hergestellt wird, eine Glasübergangstemperatur von 160 °C oder mehr aufweist, bestimmt durch dynamische mechanische Analyse (DMA) nach Eintauchen in kochendes Wasser für 48 Stunden bei 1 atm.

**5.** Prepreg wie in Anspruch 1 festgelegt, wobei die Komponente [B] ein Epoxidharz ist, das die Komponenten [B3] und [B4] wie nachstehend spezifiziert enthält:

[B3] Epoxidharz, das eine oder mehrere Ringstrukturen mit mindestens vier Gliedern enthält und gleichzeitig mindestens eine Glycidylamingruppe oder Glycidylethergruppe, die direkt mit einer Ringstruktur verbunden ist, enthält, und
[B4] ein Epoxidharz mit mindestens Trifunktionalität.

**6.** Prepreg wie in Anspruch 5 festgelegt, wobei die Komponente [B3] eine Struktur aufweist, wie durch die allgemeine Formel (A-5) gezeigt:

[Chemische Formel 5]

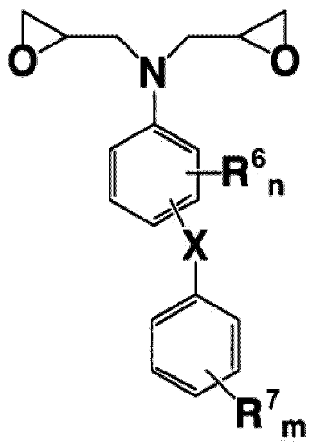

(A-5)

wobei $R^6$ und $R^7$ jeweils mindestens eines ausgewählt aus der Gruppe bestehend aus einer aliphatischen Kohlenwasserstoffgruppe mit einer Kohlenstoffzahl von 1 bis 4, einer alicyclischen Kohlenwasserstoffgruppe mit einer Kohlenstoffzahl von 3 bis 6, einer aromatischen Kohlenwasserstoffgruppe mit einer Kohlenstoffzahl von 6 bis 10, einem Halogenatom, einer Acylgruppe, einer Trifluormethylgruppe und einer Nitrogruppe sind;
n eine ganze Zahl von 0 bis 4 ist und m eine ganze Zahl von 0 bis 5 ist; wenn n oder m eine ganze Zahl von 2 oder mehr ist, die $R^6$ und $R^7$ entweder identisch oder voneinander verschieden sein können; und X eines ausgewählt aus der Gruppe bestehend aus -O-, -S-, -CO-, -C(=O)O- und $-SO_2$ darstellt.

**7.** Prepreg wie in Anspruch 6 festgelegt, wobei n = 0 und m = 0 in der allgemeinen Formel (A-5) sind.

**8.** Prepreg wie in einem der Ansprüche 5 bis 7 festgelegt, wobei die Komponente [B3] 5 bis 60 Massenteile ausmacht und die Komponente [B4] 40 bis 80 Massenteile, bezogen auf die Gesamtmenge an Epoxidharz in der ersten Epoxidharzzusammensetzung und der zweiten Epoxidharzzusammensetzung, die 100 Massenteile ausmacht, ausmacht.

**9.** Prepreg wie in Anspruch 1 festgelegt, wobei die Komponente [B] ein Epoxidharz ist, das die Komponenten [B5] und [B6] wie nachstehend spezifiziert enthält:

[B5] ein Epoxidharz vom m- oder p-Aminophenol-Typ, und
[B6] ein Epoxidharz vom Glycidylether-Typ oder ein Epoxidharz vom Glycidylamin-Typ, das von [B5] verschieden

ist und zwei oder mehr Glycidylgruppen in einem Molekül aufweist.

**10.** Prepreg wie in Anspruch 9 festgelegt, wobei die Komponente [B5] 10 bis 50 Massenteile ausmacht und die Komponente [B6] 50 bis 90 Massenteile, bezogen auf die Gesamtmenge an Epoxidharz in der ersten Epoxidharzzusammensetzung und der zweiten Epoxidharzzusammensetzung, die 100 Massenteile ausmacht, ausmacht.

**11.** Prepreg wie entweder in Anspruch 9 oder 10 festgelegt, wobei ein kohlenstofffaserverstärkter Verbundstoff, der durch Härten des Prepregs bei 180 °C für 2 Stunden hergestellt wird, eine Glasübergangstemperatur von 190 °C oder mehr aufweist, bestimmt durch dynamische mechanische Analyse (DMA).

**12.** Prepreg wie in einem der Ansprüche 1 bis 11 festgelegt, wobei die zweite Epoxidharzzusammensetzung eine Viskosität bei 85 °C von 10 bis 300 Pa·s aufweist, gemessen wie in der Beschreibung angegeben.

**13.** Prepreg wie in einem der Ansprüche 1 bis 12 festgelegt, wobei die Komponente [D] Polysulfon oder Polyethersulfon ist.

**14.** Slit-Tape-Prepreg, hergestellt durch Schneiden eines Prepregs wie in einem der Ansprüche 1 bis 13 festgelegt.

**15.** Kohlenstofffaserverstärkter Verbundstoff, hergestellt durch Auflegen von Schichten des Prepregs wie in einem der Ansprüche 1 bis 13 festgelegt oder Schichten des Slit-Tape-Prepregs wie in Anspruch 14 festgelegt, gefolgt von Härten derselben.

**16.** Prepreg-Herstellungsverfahren, umfassend einen Schritt zum Herstellen eines primären Prepregs durch Imprägnieren der nachstehend angegebenen Komponente [A] mit einer ersten Epoxidharzzusammensetzung, die mindestens die nachstehend aufgeführten Komponenten [B] bis [D] enthält, und einen nachfolgenden Schritt zum Imprägnieren jeder Oberfläche davon mit einer zweiten Epoxidharzzusammensetzung, die mindestens die nachstehend aufgeführten Komponenten [B] bis [E] enthält, wobei die zweite Epoxidharzzusammensetzung **dadurch gekennzeichnet ist, dass** ihre Komponente [D] eine homogene Phase mit der Komponente [B] bildet und 1 Massenteil oder mehr und weniger als 5 Massenteile, bezogen auf die Gesamtmenge ihrer Komponenten [B] bis [E], ausmacht, was 100 Massenteile ausmacht, und auch **dadurch gekennzeichnet ist, dass** sie einen Speicherelastizitätsmodul G' bei 25 °C von $8{,}0 \cdot 10^5$ bis $6{,}0 \cdot 10^6$ Pa, gemessen bei einer Winkelfrequenz von 3,14 rad/s, aufweist, was einen Wert von 0,085 oder mehr ergibt, wie durch die nachstehend angegebene Gleichung (1) berechnet, und einen Gehalt an Komponente [D] von 1 Massenteil oder mehr und weniger als 10 Massenteilen, bezogen auf die Gesamtmenge der ersten Epoxidharzzusammensetzung und der zweiten Epoxidharzzusammensetzung, aufweist, was 100 Massenteile ausmacht:

[A] Kohlenstofffaser,
[B] Epoxidharz,
[C] Härtungsmittel,
[D] thermoplastisches Harz und
[E] Teilchen, die ein thermoplastisches Harz als primäre Komponente enthalten und einen volumengemittelten Teilchendurchmesser von 5 bis 50 μm aufweisen, bestimmt wie in der Beschreibung angegeben.
[Mathematische Formel 2]

$$\frac{\log_{10}(G'\ (\mathrm{Pa})\ \text{bei}\ 25°C) - \log_{10}(G'\ (\mathrm{Pa})\ \text{bei}\ 40°C)}{15} \quad \text{Gleichung (1)}$$

**17.** Prepreg-Herstellungsverfahren wie in Anspruch 16 festgelegt, wobei die Komponente [B] ein Epoxidharz ist, das die Komponenten [B1] und [B2] wie nachstehend spezifiziert enthält:

[B1] ein Epoxidharz vom Bis-Naphthalin-Typ mit mindestens Difunktionalität, wie durch die nachstehend gezeigte allgemeine Formel (A-1) dargestellt, und
[B2] ein Epoxidharz mit mindestens Trifunktionalität, das von dem Epoxidharz [B1] verschieden ist,

[Chemische Formel 6]

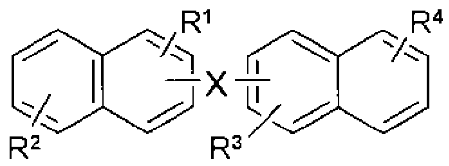

(A-1)

wobei in der allgemeinen Formel (A-1) X eine Alkylengruppe mit einer Kohlenstoffzahl von 1 bis 8 oder eine Gruppe, wie durch die nachstehend gezeigte allgemeine Formel (A-2) dargestellt, ist; $R^1$ bis $R^5$ jeweils eines, ausgewählt aus der Gruppe, bestehend aus einer Gruppe, wie durch die allgemeine Formel (A-3) oder (A-4) dargestellt, einem Wasserstoffatom, einem Halogenatom, einer Phenylgruppe und einer Alkylgruppe mit einer Kohlenstoffzahl von 1 bis 4, darstellen; $R^1$ bis $R^4$ an jeden Ring der Naphthalingruppe gebunden sein können oder gleichzeitig an beide Ringe gebunden sein können; $R^5$ an jeder Position der Benzolgruppe gebunden sein kann; und im Wesentlichen drei oder mehr von $R^1$ bis $R^5$ eine Gruppe, dargestellt durch die folgende allgemeine Formel (A-3), sein müssen, oder alternativ mindestens eine Gruppe,
dargestellt durch die allgemeine Formel (A-3), und mindestens eine Gruppe, dargestellt durch die allgemeine Formel (A-4), unter $R^1$ bis $R^5$ enthalten sein müssen, und andere Rs gleich oder voneinander verschieden sein können:

[Chemische Formel 7]

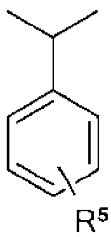

(A-2)\

[Chemische Formel 8]

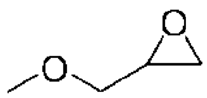

(A-3)

[Chemische Formel 9]

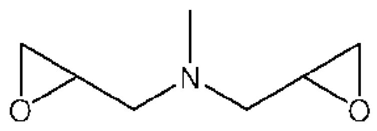

(A-4)

**18.** Prepreg-Herstellungsverfahren wie in Anspruch 16 festgelegt, wobei die Komponente [B] ein Epoxidharz ist, das die Komponenten [B3] und [B4] wie nachstehend spezifiziert enthält:

[B3] Epoxidharz, das eine oder mehrere Ringstrukturen mit mindestens vier Gliedern enthält und gleichzeitig mindestens eine Glycidylamingruppe oder Glycidylethergruppe, die direkt mit einer Ringstruktur verbunden ist, enthält, und
[B4] ein Epoxidharz mit mindestens Trifunktionalität.

**19.** Prepreg-Herstellungsverfahren wie in Anspruch 16 festgelegt, wobei die Komponente [B] ein Epoxidharz ist, das die Komponenten [B5] und [B6] wie nachstehend spezifiziert enthält:

[B5] ein Epoxidharz vom m- oder p-Aminophenol-Typ, und
[B6] ein Epoxidharz vom Glycidylether-Typ oder ein Epoxidharz vom Glycidylamin-Typ, das von [B5] verschieden ist und zwei oder mehr Glycidylgruppen in einem Molekül aufweist.

**Revendications**

**1.** Préimprégné comprenant au moins les composants [A] à [E] énumérés ci-dessous et ayant une structure incorporant une première couche composée principalement du composant [A] et une première composition de résine époxy qui contient les composants [B] à [D] mais est essentiellement exempte du composant [E] et une seconde couche composée principalement d'une seconde composition de résine époxy qui contient les composants [B] à [E] et disposée de manière adjacente à chaque surface de la première couche, la seconde composition de résine époxy étant **caractérisée en ce que** son composant [D] forme une phase homogène avec le composant [B] et représente 1 partie en masse ou plus et moins de 5 parties en masse par rapport à la quantité totale de ses composants [B] à [E], qui représente 100 parties en masse, et également **caractérisée en ce qu'**elle a un module d'élasticité au stockage G' à 25 °C de $8{,}0 \times 10^5$ à $6{,}0 \times 10^6$ Pa tel que mesuré à une fréquence angulaire de 3,14 rad/s, donnant une valeur de 0,085 ou plus telle que calculée par l'équation (1) spécifiée ci-dessous, et ayant une teneur en composant [D] de 1 partie en masse ou plus et moins de 10 parties en masse par rapport à la quantité totale de la première composition de résine époxy et de la seconde composition de résine époxy, qui représente 100 parties en masse :

[A] de la fibre de carbone,
[B] de la résine époxy,
[C] un agent de durcissement,
[D] de la résine thermoplastique, et
[E] des particules contenant une résine thermoplastique en tant que composant primaire et ayant un diamètre de particule moyen en volume de 5 à 50 $\mu$m, déterminé comme indiqué dans la description.
[Formule mathématique 1]

$$\frac{\log_{10}(G' \text{ (Pa) à } 25°C) - \log_{10}(G' \text{ (Pa) à } 40°C)}{15} \qquad \text{équation (1)}$$

**2.** Préimprégné selon la revendication 1, où le composant [B] est une résine époxy contenant les composants [B1] et [B2] comme spécifié ci-dessous :

[B1] une résine époxy de type bis-naphtalène avec au moins une difonctionnalité comme représenté par la formule générale (A-1) présentée ci-dessous, et
[B2] une résine époxy avec au moins une trifonctionnalité autre que la résine époxy [B1],

[Formule chimique 1]

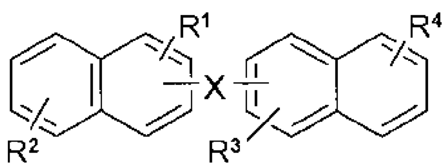

(A-1)

où dans la formule générale (A-1), X est un groupe alkylène avec un nombre de carbones de 1 à 8 ou un groupe comme représenté par la formule générale (A-2) présentée ci-dessous ; $R^1$ à $R^5$ représentent chacun un sélectionné dans le groupe consistant en un groupe comme représenté par la formule générale (A-3) ou (A-4), un atome d'hydrogène, un atome d'halogène, un groupe phényle, et un groupe alkyle avec un nombre de carbones de 1 à 4 ; $R^1$ à $R^4$ peuvent être liés à l'un ou l'autre cycle du groupe naphtalène ou peuvent être liés aux deux cycles simultanément ; $R^5$ peut être lié à n'importe quelle position du groupe benzène ; et essentiellement, trois ou plus de $R^1$ à $R^5$ doivent être un groupe représenté par la formule générale (A-3) suivante, ou alternativement, au moins

un groupe représenté par la formule générale (A-3) et au moins un groupe représenté par la formule générale (A-4) doivent être inclus parmi $R^1$ à $R^5$, et les autres Rs peuvent être identiques ou différents les uns des autres :

[Formule chimique 2]

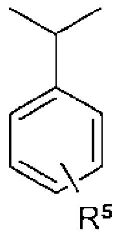

(A-2)

[Formule chimique 3]

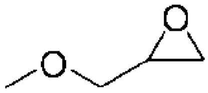

(A-3)

[Formule chimique 4]

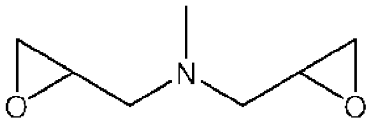

(A-4)

**3.** Préimprégné selon la revendication 2, où le composant [B1] représente 10 à 50 parties en masse et le composant [B2] représente 20 à 80 parties en masse par rapport à la quantité totale de résine époxy dans la première composition de résine époxy et la deuxième composition de résine époxy, qui représente 100 parties en masse.

**4.** Préimprégné selon la revendication 2 ou 3, où un matériau composite renforcé de fibre de carbone produit par durcissement du préimprégné à 180°C pendant 2 heures a une température de transition vitreuse de 160°C ou plus telle que déterminée par analyse mécanique dynamique (DMA) après immersion dans de l'eau bouillante pendant 48 heures à 1 atm.

**5.** Préimprégné selon la revendication 1, où le composant [B] est une résine époxy contenant les composants [B3] et [B4] comme spécifié ci-dessous :

[B3] de la résine époxy contenant une ou plusieurs structures cycliques ayant au moins quatre éléments et contenant en même temps au moins un groupe glycidylamine ou un groupe glycidyléther directement relié à une structure cyclique, et
[B4] une résine époxy avec au moins une trifonctionnalité.

**6.** Préimprégné selon la revendication 5, où le composant [B3] a une structure comme représentée par la formule générale (A-5) :

[Formule chimique 5]

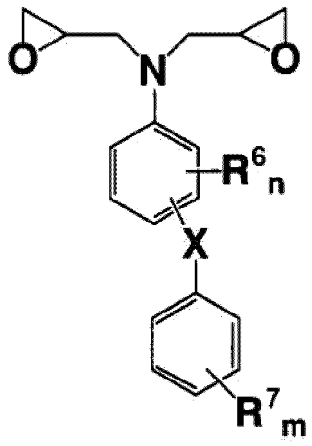

(A-5)

où $R^6$ et $R^7$ sont chacun au moins un choisi dans le groupe consistant en un groupe hydrocarboné aliphatique avec un nombre de carbones de 1 à 4, un groupe hydrocarboné alicyclique avec un nombre de carbones de 3 à 6, un groupe hydrocarboné aromatique avec un nombre de carbones de 6 à 10, un atome d'halogène, un groupe acyle, un groupe trifluorométhyle, et un groupe nitro ; n est un nombre entier de 0 à 4 et m est un nombre entier de 0 à 5 ; lorsque n ou m est un nombre entier de 2 ou plus, les $R^6$ et les $R^7$ peuvent être identiques ou différents les uns des autres ; et X représente un choisi dans le groupe consistant en -O-, -S-, -CO-, -C(=O)O-, et $-SO_2$.

**7.** Préimprégné selon la revendication 6, où n = 0 et m = 0 dans la formule générale (A-5).

**8.** Préimprégné selon l'une quelconque des revendications 5 à 7, où le composant [B3] représente 5 à 60 parties en masse et le composant [B4] représente 40 à 80 parties en masse par rapport à la quantité totale de résine époxy dans la première composition de résine époxy et la deuxième composition de résine époxy, qui représente 100 parties en masse.

**9.** Préimprégné selon la revendication 1, où le composant [B] est une résine époxy contenant les composants [B5] et [B6] comme spécifié ci-dessous :

[B5] une résine époxy de type m- ou p-aminophénol, et
[B6] une résine époxy de type glycidyléther ou une résine époxy de type glycidylamine autre que [B5] ayant deux groupes glycidyle ou plus dans une molécule.

**10.** Préimprégné selon la revendication 9, où le composant [B5] représente 10 à 50 parties en masse et le composant [B6] représente 50 à 90 parties en masse par rapport à la quantité totale de résine époxy dans la première composition de résine époxy et la deuxième composition de résine époxy, qui représente 100 parties en masse.

**11.** Préimprégné selon la revendication 9 ou 10, où un matériau composite renforcé par des fibres de carbone produit par durcissement du préimprégné à 180°C pendant 2 heures a une température de transition vitreuse de 190°C ou plus telle que déterminée par analyse mécanique dynamique (DMA).

**12.** Préimprégné selon l'une quelconque des revendications 1 à 11, où la deuxième composition de résine époxy a une viscosité à 85°C de 10 à 300 Pa · s, mesurée comme indiqué dans la description.

**13.** Préimprégné selon l'une quelconque des revendications 1 à 12, où le composant [D] est une polysulfone ou une polyéthersulfone.

**14.** Préimprégné de ruban fendu produit par fendage d'un préimprégné selon l'une quelconque des revendications 1 à 13.

**15.** Matériau composite renforcé par des fibres de carbone produit par superposition de couches du préimprégné selon l'une quelconque des revendications 1 à 13 ou de couches du préimprégné de ruban fendu selon la revendication 14, suivi par leur durcissement.

**16.** Procédé de production de préimprégné comprenant une étape de préparation d'un préimprégné primaire par imprégnation du composant [A] donné ci-dessous avec une première composition de résine époxy contenant au moins les composants [B] à [D] énumérés ci-dessous, et une étape ultérieure d'imprégnation de chaque surface de celui-ci avec une seconde composition de résine époxy contenant au moins les composants [B] à [E] énumérés ci-dessous, la seconde composition de résine époxy étant **caractérisée en ce que** son composant [D] forme une phase homogène avec le composant [B] et représente 1 partie en masse ou plus et moins de 5 parties en masse par rapport à la quantité totale de ses composants [B] à [E], qui représente 100 parties en masse, et également **caractérisée en ce qu'**elle a un module d'élasticité au stockage G' à 25 °C de $8{,}0 \times 10^5$ à $6{,}0 \times 10^6$ Pa tel que mesuré à une fréquence angulaire de 3,14 rad/s, donnant une valeur de 0,085 ou plus telle que calculée par l'équation (1) spécifiée ci-dessous, et ayant une teneur en composant [D] de 1 partie en masse ou plus et moins de 10 parties en masse par rapport à la quantité totale de la première composition de résine époxy et de la seconde composition de résine époxy, qui représente 100 parties en masse :

[A] de la fibre de carbone,
[B] de la résine époxy,
[C] un agent de durcissement,
[D] de la résine thermoplastique, et
[E] des particules contenant une résine thermoplastique en tant que composant primaire et ayant un diamètre de particule moyen en volume de 5 à 50 μm, déterminé comme indiqué dans la description.
[Formule mathématique 2]

$$\frac{\log_{10}(G'\ (Pa)\ à\ 25°C) - \log_{10}(G'\ (Pa)\ à\ 40°C)}{15} \quad \text{équation (1)}$$

**17.** Procédé de production de préimprégné selon la revendication 16, où le composant [B] est une résine époxy contenant les composants [B1] et [B2] comme spécifié ci-dessous :

[B1] une résine époxy de type bis-naphtalène avec au moins une difonctionnalité comme représenté par la formule générale (A-1) présentée ci-dessous, et
[B2] une résine époxy avec au moins une trifonctionnalité autre que la résine époxy [B1],

[Formule chimique 6]

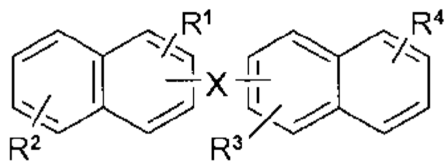

(A-1)

où dans la formule générale (A-1), X est un groupe alkylène avec un nombre de carbones de 1 à 8 ou un groupe comme représenté par la formule générale (A-2) présentée ci-dessous ; $R^1$ à $R^5$ représentent chacun un sélectionné dans le groupe consistant en un groupe comme représenté par la formule générale (A-3) ou (A-4), un atome d'hydrogène, un atome d'halogène, un groupe phényle, et un groupe alkyle avec un nombre de carbones de 1 à 4 ; $R^1$ à $R^4$ peuvent être liés à l'un ou l'autre cycle du groupe naphtalène ou peuvent être liés aux deux cycles simultanément ; $R^5$ peut être lié à n'importe quelle position du groupe benzène ; et essentiellement, trois ou plus de $R^1$ à $R^5$ doivent être un groupe représenté par la formule générale (A-3) suivante, ou alternativement, au moins un groupe représenté par la formule générale (A-3) et au moins un groupe représenté par la formule générale (A-4) doivent être inclus parmi $R^1$ à $R^5$, et les autres Rs peuvent être identiques ou différents les uns des autres :

[Formule chimique 7]

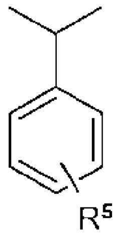

(A-2)

[Formule chimique 8]

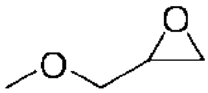

(A-3)

[Formule chimique 9]

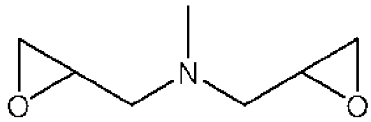

(A-4)

**18.** Procédé de production de préimprégné selon la revendication 16, où le composant [B] est une résine époxy contenant les composants [B3] et [B4] comme spécifié ci-dessous :

[B3] de la résine époxy contenant une ou plusieurs structures cycliques ayant au moins quatre éléments et contenant en même temps au moins un groupe glycidylamine ou un groupe glycidyléther directement relié à une structure cyclique, et
[B4] une résine époxy avec au moins une trifonctionnalité.

**19.** Procédé de production de préimprégné selon la revendication 16, où le composant [B] est une résine époxy contenant les composants [B5] et [B6] comme spécifié ci-dessous :

[B5] une résine époxy de type m- ou p-aminophénol, et
[B6] une résine époxy de type glycidyléther ou une résine époxy de type glycidylamine autre que [B5] ayant deux groupes glycidyle ou plus dans une molécule.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008517810 A
- JP 2016155915 A
- JP 2010229211 A
- WO 2017104823 A
- EP 2011826 A1
- EP 2902435 A1
- EP 3020763 A1
- JP 2004506789 A